(19) Europäisches Patentamt European Patent Office Office européen des brevets

(11) **EP 1 408 623 B1**

(12) **EUROPEAN PATENT SPECIFICATION**

(45) Date of publication and mention
of the grant of the patent:
**15.12.2010 Bulletin 2010/50**

(51) Int Cl.:
*H04B 7/06* *(2006.01)*      *H04L 1/06* *(2006.01)*

(21) Application number: **03078160.3**

(22) Date of filing: **09.10.2003**

(54) **Transmitting and receiving apparatus for supporting transmit antenna diversity using space-time block code.**

Sende- und Empfangsvorrichtung zur Unterstützung von Sendeantennendiversität unter Verwendung von Raum-Zeit-Blockkodes

Dispositif d'émission et de réception permettant la diversité d'antennes d'émission utilisant un code de blocs spatio-temporels

(84) Designated Contracting States:
**DE FI FR GB IT SE**

(30) Priority: **10.10.2002 US 417466 P**
           **04.04.2003 KR 2003021364**

(43) Date of publication of application:
**14.04.2004 Bulletin 2004/16**

(73) Proprietor: **SAMSUNG ELECTRONICS CO., LTD.**
**Kyungki-do,**
**Seoul (KR)**

(72) Inventors:
 • **Hwang, Chan-Soo,**
  **Samsung Electronics Co.,LTD.**
  **Suwon-si,**
  **Gyeonggi-do (KR)**
 • **Tarokh, Vahid,**
  **Samsung Electronics co., Ltd**
  **Suwon-city**
  **Kyungki-do (KR)**
 • **NAM, Seung-Hoon**
  **Suwon-city, KYUNGKI-DO (KR)**
 • **KIM, Yung-Soo**
  **Suwon-city,**
  **KYUNGKI-DO (KR)**
 • **CHUNG, Jae-Hak**
  **Suwon-city,**
  **KYUNGKI-DO (KR)**

(74) Representative: **Mertens, Hans Victor**
**Exter Polak & Charlouis B.V. (EP&C)**
**J.J. Viottastraat 31**
**1071 JP Amsterdam (NL)**

(56) References cited:
**WO-A-99/45657**

 • **VAHID TAROKH ET AL: "Space-Time Block Codes from Orthogonal Designs" IEEE TRANSACTIONS ON INFORMATION THEORY, IEEE SERVICE CENTER, PISCATAWAY, NJ, US, vol. 45, no. 5, July 1999 (1999-07), XP011027408 ISSN: 0018-9448**

**Description**

The present invention relates generally to a wireless communication system, and in particular, to a transmitting and receiving apparatus using transmit antenna diversity to combat the degradation effects of fading.

One of effective techniques to mitigate fading is transmit diversity in a wireless communication system. Assuming that the channel characteristics of a receiver are known to a transmitter, a switched diversity technique has been proposed (J. H. Winters "Switched Diversity with Feedback for DPSK Mobile Radio System", IEEE Trans. Veh. Technol., vol. 32, pp. 134-150, Feb. 1983) and a multivibrate modulation/coding has also been proposed (G. G. Raleigh and V. K. Jones, "Multivibrate Modulation and Coding for Wireless Communication", IEEE J. Select. Areas. Commun., vol. 17, pp. 851-866, May 1999).

In practice, however, it is nearly impossible for the transmitter to have perfect instantaneous information about the characteristics of the receiver because of mobility and channel changes. Also, the use of feedback channels for reporting channel status information to the transmitter may not be desirable since it reduces channel capacity. Thus, many researchers have focused on the transmit diversity scheme assuming that the transmitter does not know channel information. An initial type of transmit diversity scheme was proposed by Wittneben (A. Wittneben, "Base Station Modulation Diversity for Digital SIMULCAST", in proc. IEEE'VTC, May 1993, pp. 505-511). Foschini studied layered space-time architectures for multiple transmit antenna systems (G. J. Foschini, Jr., "Layered Space-Time Architecture for Wireless Communications in a Fading Environment When Using Multi-element Antennas", Bell Labs Tech. J., pp. 41-59, Autumn 1996). In the presence of Gaussian Noise, Telatar analyzed the capacity of multiple antenna systems (E. Telatar, "Capacity of Multi-Antenna Gaussian Channels", AT&T-Bell Laboratories, Internal Tech. Memo., June 1995). Later, Foschini et. al. derived the expression of outage capacity under the assumption of quasi-static fading (G. J. Foschini, Jr. and M. J. Gans, "On Limits of Wireless Communication in a Fading Environment When Using Multiple Antennas", Wireless Personal Commun., vol. 6, pp. 311-335, 1998).

Recently, space-time coding has received increased attention due to its good performance for high-rate transmissions. Tarokh et. al. introduced space-time trellis coding that provides both coding gain and diversity gain (V. Tarokh, N. Seshadri, and A. R. Calderbanck, "Space-Time Codes for High Data Rate Wireless Communications: Performance Criterion and Code Construction", IEEE Trans. Inform. Theory, vol. 44, pp. 744-765, Mar. 1998, and V. Tarokh, N. Seshadri, and A. R. Calderbanck, "Space-Time Codes for High Data Rate Wireless Communications: Performance Criteria in the Presence of Channel Estimation Errors, Mobility, and Multiple Paths", IEEE Trans. Inform. Theory, vol. 47, pp. 199-207, Feb. 1999). Particularly, the space-time trellis coding disclosed in the second thesis of Tarokh offers the best possible trade-off between constellation size, data rate, diversity advantage, and trellis complexity.

However, according to the above space-time coding techniques, the decoding complexity increases exponentially with transmission rate when the number of transmit antennas is fixed. Therefore, they are not feasible for a large of transmit antennas and at a high bandwidth efficiency.

To overcome this problem, Alamouti and Tarokh proposed space-time block coding (S. M. Alamouti, "A Simple Transmit Diversity Technique for Wireless Communications", IEEE J. Select Areas Commun., vol. 16, pp. 1451-1458, Oct. 1998 and V Tarokh, H. Jafarkhani, and A. R. Calderbandk, "Space-Time Block Codes from Orthogonal Designs", IEEE Trans. Inform. Theory, vol. 45, pp. 1456-1467, July 1999). These space-time block codes introduce temporal/ spatial correlation into signals transmitted from different transmit antennas, so as to provide diversity gain at the receiver and coding gain over an uncoded system. Despite the advantage of simple transmission/reception, these codes cannot achieve all possible diversity gains without data rate losses when complex symbols are transmitted through 3 or more antennas, due to the orthogonality condition for the columns of a transmission matrix.

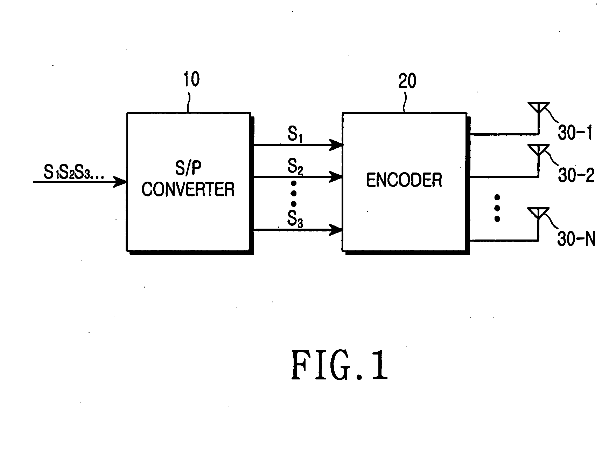

Fig. 1 is a block diagram of a transmitter using conventional space-time block coding. Referring to Fig. 1, the transmitter is comprised of a serial-to-parallel (S/P) converter 10, an encoder 20, and N transmit antennas 30-1 to 30-N. The S/P converter 10 groups every N symbols received from an information source (not shown) into a block. The encoder 20 generates a predetermined number of symbol combinations from the N symbols and feeds them to the N transmit antennas 30-1 to 30-N for corresponding time periods.

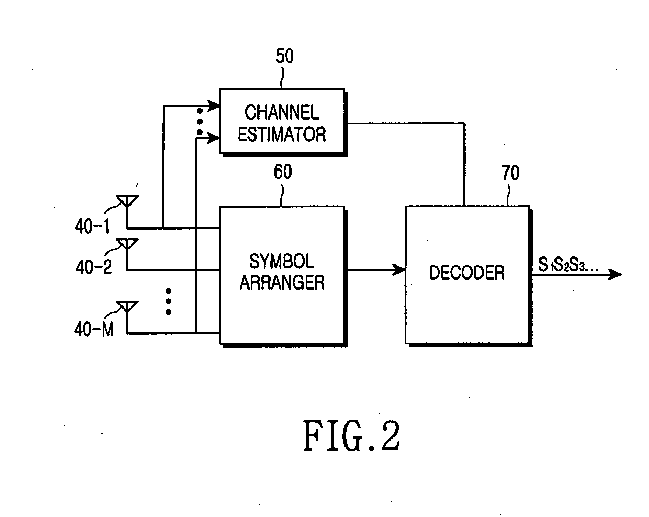

Fig. 2 is a block diagram of a receiver that receives signals from the transmitter illustrated in Fig. 1. Referring to Fig. 2, the receiver is comprised of M receive antennas 40-1 to 40-M, a channel estimator 50, a multi-channel symbol arranger 60, and a decoder 70. The channel estimator 50 estimates channel coefficients representing channel gains from the transmit antennas 30-1 to 30-N to the receive antennas 40-1 to 40-M. The multi-channel symbol arranger 60 collects symbols received from the receive antennas 40-1 to 40-M. The decoder 70 achieves a desired result by multiplying the symbols received from the multi-channel symbol arranger 60 by the channel coefficients, computes decision statistic for all possible symbols using the result, and detects desired symbols through threshold detection.

In a communication system configured as illustrated in Figs. 1 and 2, let $c_{i,t}$ be the symbol transmitted from transmit antenna i at time t and $a_{i,j}$ be the channel gain from transmit antenna i to receive antenna j. Then the signal $r_{t,j}$ received at receive antenna j at time t is given by equation (1):

$$r_{t,j} = \sum_{k=1}^{K} \sum_{i=1}^{N} a_{i,j} c_{i,t} + n_{t,j}$$

$$\ldots \ldots (1)$$

where k is a time index within each time period and $n_{t,j}$ is the noise for the channel between transmit antennas and receive antenna j at time t.

Assuming signals transmitted from different transmit antennas undergo independent Rayleigh fades, the channel gains $a_{i,j}$ are modeled as samples of independent complex Gaussian random variables with zero mean and variance of 0.5 per dimension and the noise values $n_{t,j}$ are modeled as samples of independent complex Gaussian random variables with zero mean and variance of $N_o/2$ per dimension. Here, No is the noise spectral density.

An optimum space-time block code is designed so as to maximize the minimum coding gain of an error matrix. The error matrix refers to a matrix of the differences between original symbols and erroneous symbols arranged in the receiver, and the minimum coding gain is the product of the eigen values of the error matrix.

For illustration, it is assumed that there are 2 transmit antennas and M receive antennas. The transmitter maps b input bits to one of $2^b$ complex symbols using a signal constellation with $2^b$ elements. At a first time period, 2b bits arrive at the encoder and constellation symbols $s_1$ and $s_2$ are picked up. The two symbols are formed with these constellation symbols and transmitted through the 2 transmit antennas for two time periods. The 2x2 transmission matrix is then shown in equation (2):

$$S = \begin{pmatrix} s_1 & s_2 \\ -s_2^* & s_1^* \end{pmatrix}$$

where $s_i^*$ denotes the conjugate of $_i$.

More specifically, the rows in the transmission matrix indicate symbols transmitted at the same time and the columns indicate symbols transmitted from the same antenna. Thus, $_1$ is transmitted from the first transmit antenna and $s_2$ from the second transmit antenna at time t, and $-s_2^*$ is transmitted from the first antenna and $s_1^*$ from the second antenna at time t+1. This is the so-called Alamouti scheme and is an example of space-time block code.

Maximum likelihood (ML) decoding of the above space-time block code amounts to minimization of the decision metric of equation (3):

$$\sum_{m=1}^{M} \left( |r_{1,m} - a_{1,m}s_1 - a_{2,m}s_2|^2 + |a_{1,m}s_2^* - a_{2,m}s_1^*|^2 \right)$$

$$\ldots \ldots (3)$$

over all possible symbol pairs of $s_1$ and $s_2$. It can be shown that the above metric decomposes into two parts, shown as equation (4), one of which

$$-\sum_{m=1}^{M} \left[ r_{1,m} a_{1,m}^* s_1^* + r_{1,m}^* a_{1,m} s_1 + r_{2,m} a_{2,m}^* s_1 + r_{2,m}^* a_{2,m} s_1^* \right] + |s_1|^2 \sum_{m=1}^{M} \sum_{n=1}^{2} |a_{n,m}|^2$$

is only a function of $s_1$. And the other one

$$- \sum_{m=1}^{M} \left[ r_{1,m} a_{2,m}^* s_2^* + r_{1,m}^* a_{2,m} s_2 - r_{2,m} a_{1,m}^* s_2^* - r_{2,m}^* a_{1,m} s_2^* \right] + |s_2|^2 \sum_{m=1}^{M} \sum_{n=1}^{2} |a_{n,m}|^2$$

$$\ldots \ldots (4)$$

is only a function of $s_2$. Minimizing Eq. (3) is equivalent to minimizing the two metric parts in Eq. (4) because the two metric parts are independent of each other. Thus, the decoder design is simplified by decoding $s_1$ and $s_2$ respectively with the minimized two metric parts.

Eliminating non-symbol related parts from the metric parts, the ML decoding is equivalent to minimizing the metrics of equation (5):

$$\left| \left[ \sum_{m=1}^{M} (r_{1,m} a_{1,m}^* + r_{2,m}^* a_{2,m}) \right] - s_1 \right|^2 + \left( -1 + \sum_{m=1}^{M} \sum_{n=1}^{2} |a_{n,m}|^2 \right) |s_1|^2$$

for decoding $s_1$ and

$$\left| \left[ \sum_{m=1}^{M} (r_{1,m} a_{2,m}^* + r_{2,m}^* a_{1,m}) \right] - s_2 \right|^2 + \left( -1 + \sum_{m=1}^{M} \sum_{n=1}^{2} |a_{n,m}|^2 \right) |s_2|^2$$

for decoding $s_2$.

$$\ldots \ldots (5)$$

Thus, it is observed that space-time block coding can be implemented using a very simple coding/decoding algorithm and can also achieve 1 spatial diversity 2M in which M is the number of receive antennas. For this reason, it has been adapted by various international standardization bodies including WCDMA (Wide-band Code Division Multiple Access) and IS (International Standard)-136.

To achieve the remarkable properties of the space-time block coding, the columns of the transmission matrix must be orthogonal to each other. The above space-time block coding scheme provides a diversity order equal to the number of transmit antennas without loss in transmission rate (i.e., maximum diversity order) even if complex symbols are transmitted from 2 transmit antennas. To generalize the above scheme to more than 2 transmit antennas, a space-time block code in the form of a matrix of orthogonal columns provides a maximum diversity order. Examples of these codes are shown in equation (6):

$$\begin{pmatrix} s_1 & s_2 & s_3 \\ -s_2^* & s_1^* & 0 \\ s_3^* & 0 & -s_1^* \\ 0 & s_3^* & -s_2^* \end{pmatrix} \begin{pmatrix} s_1 & s_2 & s_3 & 0 \\ -s_2^* & s_1^* & 0 & s_3 \\ s_3^* & 0 & -s_1^* & s_2 \\ 0 & s_3^* & -s_2^* & -s_1 \end{pmatrix}$$

$$\ldots \ldots (6)$$

The space-time block coding techniques including the Tarokh scheme using these transmission matrixes only reduces the transmission rate of one symbol per channel in use to the transmission of 0.5 or 0.75 symbol per channel use, for more than 2 transmit antennas. This problem makes them less attractive for real wireless applications.

It is, therefore, an object of the present invention to provide a transmit diversity apparatus that provides a maximum transmission rate and a maximum diversity gain in a communication system using 3 or more transmit antennas.

It is another object of the present invention to provide a transmit diversity apparatus that provides a maximum diversity gain with a very simple encoding and decoding structure in a communication system having using 3 or more transmit antennas.

It is a further object of the present invention to provide a transmit diversity apparatus that provides a maximum diversity gain in a communication system transmitting complex symbols through 3 or more transmit antennas.

The above objects are achieved by a transmitter and a receiver that support transmit antenna diversity using space-time block coding in a wireless communication system. The transmitter produces symbol combinations containing, as their elements, input symbols, the inversions and conjugates of the symbols, and symbols obtained by rotating the phases of the symbols once, forms a matrix having symbols in at least two columns orthogonal to each other with the symbol combinations, and transmits the matrix. According to one aspect of the present invention, the receiver detects symbols that minimize ML decoding metrics over all possible symbols using channel gains from transmit antennas to a receive antenna. According to another aspect of the present invention, the receiver selects candidate symbols among all possible symbols according to the characteristics of transmitted modulation symbols and detects symbols that minimize the ML decoding metrics.

The above and other objects, features and advantages of the present invention will become more apparent from the following detailed description when taken in conjunction with the accompanying drawings in which:

Fig. 1 is a block diagram of a transmitter using conventional space-time block coding;
Fig. 2 is a block diagram of a receiver that receives signals from the transmitter illustrated in Fig. 1;
Fig. 3 is a block diagram of a transmitter that transmits symbols through 4 transmit antennas according to an embodiment of the present invention;
Fig. 4 is a block diagram of a transmitter that transmits symbols through 3 transmit antennas according to another embodiment of the present invention;
Fig. 5 is a block diagram of a receiver for performing decoding pursuant to an embodiment of the present invention;
Fig. 6A illustrates a BPSK (Binary Phase Shift Keying) signal constellation;
Fig. 6B illustrates a QPSK (Quadrature PSK) signal constellation;
Fig. 6C illustrates a 8PSK (8-ary PSK) signal constellation;
Fig. 7A illustrates a 16QAM (16-ary Quadrature Amplitude Modulation) signal constellation;
Fig. 7B illustrates a 64QAM (64-ary QAM) signal constellation;
Fig. 8 is a flowchart illustrating another embodiment of decoding according to the present invention;
Fig. 9 is a block diagram of a receiver for performing decoding according to the second embodiment of the present invention;
Figs. 10A and 10B depict sub-optimal decoding according to the present invention;
Fig. 11 is a flowchart illustrating a third embodiment of decoding according to the present invention;
Fig. 12 is a graph illustrating symbol error rate (SER) versus SNR (Signal to Noise Ratio) for 2, 3 and 4 transmit antennas transmitting BPSK codes;
Fig. 13 is a graph illustrating SER versus SNR for 2, 3 and 4 transmit antennas transmitting QPSK codes;
Fig. 14 is a graph illustrating SER versus SNR for 2, 3 and 4 transmit antennas transmitting 8PSK codes; and
Fig. 15 is a graph illustrating SER versus SNR for the first and third embodiments of decoding according to the present invention.

Preferred embodiments of the present invention will be described herein below with reference to the accompanying drawings. In the following description, well-known functions or constructions are not described in detail since they would obscure the invention with unnecessary detail.

The present invention is meant to provide a simple encoding and decoding structure that leads to a transmission matrix whose at least 2 columns are orthogonal to each other and provides a maximum diversity gain in a communication system adopting space-time block coding for 3 or more transmit antennas.

Transmission: Encoding

A transmitter generates a predetermined number of symbol combinations from another predetermined number of input symbols and forms a matrix with one symbol combination in each cell of the matrix. The transmission matrix varies according to a modulation scheme and the number of transmit antennas. Symbols in row (t) are transmitted at time (t) and symbols in column (n) are transmitted through antenna (n).

Transmission matrices are formed for transmission of BPSK, QPSK, 8PSK, 16QAM, or 64QAM codes through 3 or 4 transmit antennas.

The symbol combinations have orthogonal symbols (s) in at least 2 rows, and the inversions (-s) and conjugates (s*) of the symbols as their elements. For illustration, the transmitter forms a 4x4 matrix out of four symbols for four transmit antennas and transmits them at four times. The 4x4 matrix is built by use of four 2x2 matrices such as equation (7):

$$\begin{bmatrix} A & B \\ C & D \end{bmatrix}$$

$$\dots\dots(7)$$

These 2x2 matrices are constituted in the Alamouti scheme. The number of all possible 4x4 matrices that can be formed in this manner is 24, part of which are shown in equation (8):

$$\begin{bmatrix} s_1 & s_2 & s_3^* & s_4^* \\ s_2^* & -s_1^* & s_4 & -s_3 \\ s_3 & s_4 & -s_1^* & -s_2^* \\ s_4^* & -s_3^* & -s_2 & s_1 \end{bmatrix} \begin{bmatrix} s_1 & s_2 & s_3^* & -s_4^* \\ s_2^* & -s_1^* & s_4 & s_3 \\ s_3 & s_4 & -s_1^* & s_2^* \\ s_4^* & -s_3^* & -s_2 & -s_1 \end{bmatrix} \begin{bmatrix} s_1 & s_2 & s_3^* & -s_4^* \\ s_2^* & -s_1^* & -s_4 & -s_3 \\ s_3 & s_4 & -s_1^* & s_2^* \\ s_4^* & -s_3^* & s_2 & s_1 \end{bmatrix} \begin{bmatrix} s_1 & s_2 & s_3^* & s_4^* \\ s_2^* & -s_1^* & -s_4 & s_3 \\ s_3 & s_4 & -s_1^* & -s_2^* \\ s_4^* & -s_3^* & s_2 & -s_1 \end{bmatrix}$$

$$\begin{bmatrix} s_1 & s_2 & -s_3^* & -s_4^* \\ s_2^* & -s_1^* & s_4 & -s_3 \\ s_3 & s_4 & s_1^* & s_2^* \\ s_4^* & -s_3^* & -s_2 & s_1 \end{bmatrix} \begin{bmatrix} s_1 & s_2 & -s_3^* & s_4^* \\ s_2^* & -s_1^* & s_4 & s_3 \\ s_3 & s_4 & s_1^* & -s_2^* \\ s_4^* & -s_3^* & -s_2 & -s_1 \end{bmatrix} \begin{bmatrix} s_1 & s_2 & -s_3^* & -s_4^* \\ s_2^* & -s_1^* & -s_4 & s_3 \\ s_3 & s_4 & s_1^* & s_2^* \\ s_4^* & -s_3^* & s_2 & -s_1 \end{bmatrix} \begin{bmatrix} s_1 & s_2 & -s_3^* & s_4^* \\ s_2^* & -s_1^* & -s_4 & -s_3 \\ s_3 & s_4 & s_1^* & -s_2^* \\ s_4^* & -s_3^* & s_2 & s_1 \end{bmatrix}$$

$$\dots\dots(8)$$

where $s_1$, $s_2$, $s_3$ and $s_4$ are four input symbols.

Some of the arranged symbols are rotated by a predetermined phase prior to transmission. The phase is determined by the minimum coding gain of error matrices so as to maximize diversity gain. An error matrix refers to a matrix having the differences between original symbols and erroneous symbols received at the receiver, and the minimum coding gain is the product of all eigen values of the error matrix.

The phase rotation is implemented once to each of three or four input symbols so that orthogonality is still maintained between the columns of each Alamouti 2x2 matrix. There are 16 phase rotations that satisfy this condition. All possible phase-rotated ones of the first matrix in Eq. (8) are shown in equation (9):

$$\begin{bmatrix} s_1 & s_2 & vs_3^* & vs_4^* \\ s_2^* & -s_1^* & s_4 & -s_3 \\ s_3 & s_4 & -s_1^* & -s_2^* \\ s_4^* & -s_3^* & -vs_2 & vs_1 \end{bmatrix} \begin{bmatrix} s_1 & s_2 & s_3^* & s_4^* \\ s_2^* & -s_1^* & vs_4 & -vs_3 \\ s_3 & s_4 & -vs_1^* & -vs_2^* \\ s_4^* & -s_3^* & -s_2 & s_1 \end{bmatrix} \begin{bmatrix} s_1 & s_2 & vs_3^* & vs_4^* \\ s_2^* & -s_1^* & s_4 & -s_3 \\ s_3 & s_4 & -s_1^* & -s_2^* \\ s_4^* & -s_3^* & -vs_2 & vs_1 \end{bmatrix} \begin{bmatrix} s_1 & s_2 & s_3^* & s_4^* \\ s_2^* & -s_1^* & vs_4 & -vs_3 \\ s_3 & s_4 & -s_1^* & -s_2^* \\ s_4^* & -s_3^* & -vs_2 & vs_1 \end{bmatrix}$$

$$\begin{bmatrix} vs_1 & vs_2 & s_3^* & s_4^* \\ s_2^* & -s_1^* & s_4 & -s_3 \\ vs_3 & vs_4 & -s_1^* & -s_2^* \\ s_4^* & -s_3^* & -s_2 & s_1 \end{bmatrix} \begin{bmatrix} vs_1 & vs_2 & s_3^* & s_4^* \\ s_2^* & -s_1^* & s_4 & -s_3 \\ s_3 & s_4 & -s_1^* & -s_2^* \\ vs_4^* & -vs_3^* & -s_2 & s_1 \end{bmatrix} \begin{bmatrix} s_1 & s_2 & s_3^* & s_4^* \\ vs_2^* & -vs_1^* & s_4 & -s_3 \\ vs_3 & vs_4 & -s_1^* & -s_2^* \\ s_4^* & -s_3^* & -s_2 & s_1 \end{bmatrix} \begin{bmatrix} s_1 & s_2 & s_3^* & s_4^* \\ vs_2^* & -vs_1^* & s_4 & -s_3 \\ s_3 & s_4 & -s_1^* & -s_2^* \\ vs_4^* & -vs_3^* & -s_2 & s_1 \end{bmatrix}$$

$$\begin{bmatrix} vs_1 & vs_2 & vs_3^* & vs_4^* \\ s_2^* & -s_1^* & s_4 & -s_3 \\ s_3 & s_4 & -s_1^* & -s_2^* \\ s_4^* & -s_3^* & -s_2 & s_1 \end{bmatrix} \begin{bmatrix} vs_1 & vs_2 & s_3^* & s_4^* \\ s_2^* & -s_1^* & vs_4 & -vs_3 \\ s_3 & s_4 & -s_1^* & -s_2^* \\ s_4^* & -s_3^* & -s_2 & s_1 \end{bmatrix} \begin{bmatrix} s_1 & s_2 & vs_3^* & vs_4^* \\ vs_2^* & -vs_1^* & s_4 & -s_3 \\ s_3 & s_4 & -s_1^* & -s_2^* \\ s_4^* & -s_3^* & -s_2 & s_1 \end{bmatrix} \begin{bmatrix} s_1 & s_2 & s_3^* & s_4^* \\ vs_2^* & -vs_1^* & vs_4 & -vs_3 \\ s_3 & s_4 & -s_1^* & -s_2^* \\ s_4^* & -s_3^* & -s_2 & s_1 \end{bmatrix}$$

$$\begin{bmatrix} s_1 & s_2 & s_3^* & s_4^* \\ s_2^* & -s_1^* & s_4 & -s_3 \\ vs_3 & vs_4 & -vs_1^* & -vs_2^* \\ s_4^* & -s_3^* & -s_2 & s_1 \end{bmatrix} \begin{bmatrix} s_1 & s_2 & s_3^* & s_4^* \\ s_2^* & -s_1^* & s_4 & -s_3 \\ s_3 & s_4 & -vs_1^* & -vs_2^* \\ vs_4^* & -vs_3^* & -s_2 & s_1 \end{bmatrix} \begin{bmatrix} s_1 & s_2 & s_3^* & s_4^* \\ s_2^* & -s_1^* & s_4 & -s_3 \\ vs_3 & vs_4 & -s_1^* & -s_2^* \\ s_4^* & -s_3^* & -vs_2 & vs_1 \end{bmatrix} \begin{bmatrix} s_1 & s_2 & s_3^* & s_4^* \\ s_2^* & -s_1^* & s_4 & -s_3 \\ s_3 & s_4 & -s_1^* & -s_2^* \\ vs_4^* & -vs_3^* & -vs_2 & vs_1 \end{bmatrix}$$

$$\dots\dots(9)$$

As noted from the above matrices, the four input symbols $s_1$, $s_2$, $s_3$ and $s_4$ each rotate one time by a predetermined phase value "v". The phase-rotated matrices are referred to as transmission coding matrices. A total of 384 (=24x16) 4x4n transmission coding matrices can be produced according to the present invention.

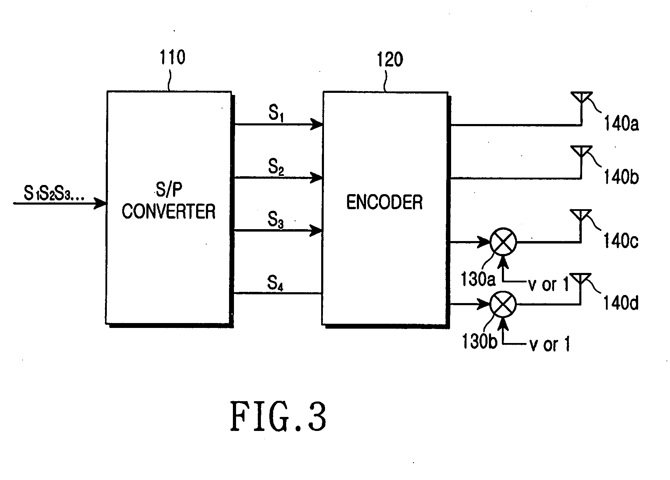

Fig. 3 is a block diagram of a transmitter for transmitting one of the transmission coding matrices in the first row of Eq. (9) through four transmit antennas according to an embodiment of the present invention.

Referring to Fig. 3, the transmitter includes an S/P converter 110, an encoder 120, phase rotators 130a and 130b, and four transmit antennas 140a to 140d. The S/P converter 110 feeds four input symbols $s_1$, $s_2$, $s_3$ and $s_4$ in one block to the encoder 120. The encoder 120 produces the first matrix of Eq. (8) from the received one-block symbols. Specifically, the encoder 120 generates four combinations each having four symbol elements from the input four symbols and outputs them one by one at four times. The four symbol combinations correspond to the four rows of the matrix and the plurality of symbols are transmitted once through their respective antennas at their respective times.

The phase rotators 130a and 130b rotate the phases of two of the four rows received from the encoder 120 by v. When the first transmission coding matrix in Eq. (9) is used, the phase rotators 130a and 130b rotate input symbols by v for transmission at first and fourth times, bypassing symbols for transmission at the other times. The resulting symbols are transmitted to a receiver through the transmit antennas 140a to 140d.

The encoder 120 and the phase rotators 130a and 130b collectively function as a transmission coding matrix generator. While only two rotators 130a and 130b are shown, more rotators can be connected between the encoder 120 and corresponding transmit antennas if other transmission coding matrices are adopted.

A 4x3 transmission coding matrix for three transmit antennas is generated from a 4x4 transmission coding matrix by selecting two of the four columns of the 4x4 matrix, linearly combining the elements of the selected columns, and replacing the selected columns by a column of the linear elements. Six ways ($_4C_2$) ] can be used to select two of the four columns. Here, symbol $_iC_j$ means the number of case of selecting j number elements among i number elements. Thus, symbol $_iC_j$ is a same meaning as $i!/(i-j)!$. For example, 4x3 transmission coding matrices derived from the first matrix of Eq. (8) are shown as equation (10):

$$
\begin{bmatrix}
(s_1+s_2)/\sqrt{2} & s_3^* & s_4^* \\
(s_2^*-s_1^*)/\sqrt{2} & s_4 & -s_3 \\
(s_3+s_4)/\sqrt{2} & -s_1^* & -s_2^* \\
(s_4^*-s_3^*)/\sqrt{2} & -s_2 & s_1
\end{bmatrix}
\begin{bmatrix}
s_1 & (s_2+s_3^*)/\sqrt{2} & s_4^* \\
s_2^* & (-s_1^*+s_4)/\sqrt{2} & -s_3 \\
s_3 & (s_4-s_1^*)/\sqrt{2} & -s_2^* \\
s_4^* & (-s_3^*-s_2)/\sqrt{2} & s_1
\end{bmatrix}
\begin{bmatrix}
s_1 & s_2 & (s_3^*+s_4^*)/\sqrt{2} \\
s_2^* & -s_1^* & (s_4-s_3)/\sqrt{2} \\
s_3 & s_4 & (-s_1^*-s_2^*)/\sqrt{2} \\
s_4^* & -s_3^* & (s_1-s_2)/\sqrt{2}
\end{bmatrix}
$$

$$
\begin{bmatrix}
(s_1+s_3^*)/\sqrt{2} & s_2 & s_4^* \\
(s_2^*-s_4)/\sqrt{2} & -s_1^* & -s_3 \\
(s_3-s_1^*)/\sqrt{2} & s_4 & -s_2^* \\
(s_4^*-s_2)/\sqrt{2} & -s_3^* & s_1
\end{bmatrix}
\begin{bmatrix}
s_1 & (s_2+s_4^*)/\sqrt{2} & s_3^* \\
s_2^* & (-s_1^*-s_3)/\sqrt{2} & s_4 \\
s_3 & (s_4-s_2^*)/\sqrt{2} & -s_1^* \\
s_4^* & (-s_3^*+s_1)/\sqrt{2} & s_2
\end{bmatrix}
\begin{bmatrix}
s_2 & s_3 & (s_1+s_4^*)/\sqrt{2} \\
-s_1^* & s_4 & (s_2^*-s_3)/\sqrt{2} \\
s_4 & -s_1^* & (s_3-s_2^*)/\sqrt{2} \\
-s_3^* & -s_2 & (s_4^*+s_1)/\sqrt{2}
\end{bmatrix}
$$

$$
\ldots\ldots(10)
$$

Similarly, the above matrices are phase-rotated. Thus, a total of 1728 4x3 transmission coding matrices are possible.

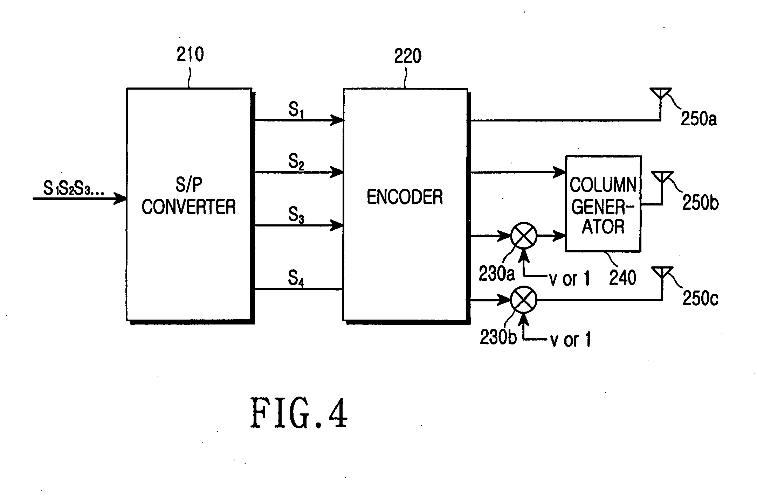

Fig. 4 is a block diagram of a transmitter for transmitting code symbols in a 4x3 transmission coding matrix produced from the first transmission coding matrix of Eq. (9) according to another embodiment of the present invention.

Referring to Fig. 4, the transmitter includes an S/P converter 210, an encoder 220, rotators 230a and 230b, a column generator 240, and three transmit antennas 250a, 250b and 250c. The S/P converter 210 feeds four input symbols $s_1$, $s_2$, $s_3$ and $s_4$ in one block to the encoder 220. The encoder 220 produces the first matrix of Eq. (8) from the received one-block symbols. Specifically, the encoder 220 generates four combinations each having four symbol elements from the input four symbols and outputs them one by one over four time periods. The four symbol combinations correspond to the four rows of the matrix and the plurality of symbols are transmitted once through their respective antennas at their respective time periods.

The phase rotators 230a and 230b rotate the phases of two of the four rows received from the encoder 220 by v. When the first transmission coding matrix in Eq. (9) is used, the phase rotators 130a and 130b rotate input symbols by v for transmission at first and fourth times, bypassing symbols for transmission at the other times.

The column generator 240 linearly combines the symbol of the second column with the symbol received from the phase rotator 230a at each transmission time and outputs the combined symbol to the transmit antenna 250b. The outputs of the encoder 230, the column generator 240, and the phase rotator 230b are transmitted to the receiver through the transmit antennas 250a, 250b and 250c.

The encoder 220, the phase rotators 230a and 230b, and the column generator 240 collectively function as a transmission coding matrix generator. While only two rotators 230a and 230b are shown and the column generator 240 combines the symbols of the second and third columns, more rotators can be connected between the encoder 220 and corresponding transmit antennas and the column generator 240 can be disposed at a different corresponding position if other transmission coding matrices are adopted.

Examples of desirable transmission coding matrices for three and four transmit antennas are illustrated below.

With respect to a BPSK constellation, the transmission matrix is given in equation (11) by

$$U_1 = \begin{pmatrix} s_1 & \dfrac{s_2+js_3}{\sqrt{2}} & s_4 \\[2mm] -s_2^* & \dfrac{s_1^*-js_4^*}{\sqrt{2}} & s_3^* \\[2mm] -s_4^* & \dfrac{-s_3^*+js_2^*}{\sqrt{2}} & s_1^* \\[2mm] s_3 & \dfrac{-s_4-js_1}{\sqrt{2}} & s_2 \end{pmatrix}$$

for three transmit antennas. For four transmit antennas, the transmission matrix is

$$U_2 = \begin{pmatrix} s_1 & s_2 & js_3 & s_4 \\ -s_2^* & s_1^* & -js_4^* & s_3^* \\ -s_4^* & -s_3^* & js_2^* & s_1^* \\ s_3 & -s_4 & -js_1 & s_2 \end{pmatrix} \qquad \ldots\ldots(11)$$

With respect to a QPSK constellation, the transmission matrix for three antennas is given in equation (12) by

$$U_3 = \begin{pmatrix} s_1 & \dfrac{s_2+s_3}{\sqrt{2}} & s_4 \\[2mm] -s_2^* & \dfrac{s_1^*-vs_4^*}{\sqrt{2}} & vs_3^* \\[2mm] -s_4^* & \dfrac{-s_3^*+s_2^*}{\sqrt{2}} & s_1^* \\[2mm] s_3 & \dfrac{-s_4-vs_1}{\sqrt{2}} & vs_2 \end{pmatrix}$$

where $v=e^{-j2\pi/3}$ for example. For four transmit antennas, the transmission matrix is

$$= \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

$$\ldots \ldots (12)$$

where $v=e^{-j2\pi/3}$ for example.

With respect to an 8PSK constellation, the transmission matrix for three antennas is given in equation (13) by

$$U_5 = \begin{pmatrix} s_1 & \dfrac{s_2+s_3}{\sqrt{2}} & s_4 \\ -s_2^* & \dfrac{s_1^*-vs_4^*}{\sqrt{2}} & vs_3^* \\ -s_4^* & \dfrac{-s_3^*+s_2^*}{\sqrt{2}} & s_1^* \\ s_3 & \dfrac{-s_4-vs_1}{\sqrt{2}} & vs_2 \end{pmatrix}$$

where $v=e^{-j2\pi/3}$ for example. For four transmit antennas, the transmission matrix is

$$U_6 = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

$$\ldots \ldots (13)$$

where $v=e^{-j5\pi/6}$ for example.

With respect to a 16QAM constellation, the transmission matrix for three antennas is given in equation (14) by

$$U_7 = \begin{pmatrix} s_1 & \dfrac{s_2 + s_3}{\sqrt{2}} & s_4 \\[2ex] -s_2^* & \dfrac{s_1^* - v s_4^*}{\sqrt{2}} & v s_3^* \\[2ex] -s_4^* & \dfrac{-s_3^* + s_2^*}{\sqrt{2}} & s_1^* \\[2ex] s_3 & \dfrac{-s_4 - v s_1}{\sqrt{2}} & v s_2 \end{pmatrix}$$

where $v = e^{-j5\pi/12}$ for example. For four transmit antennas, the transmission matrix is

$$U_8 = \begin{pmatrix} s_1 & s_2 & s_3 & s_4 \\ -s_2^* & s_1^* & -v s_4^* & v s_3^* \\ -s_4^* & -s_3^* & s_2^* & s_1^* \\ s_3 & -s_4 & -v s_1 & v s_2 \end{pmatrix}$$

$$\dots \dots (14)$$

where $v = e^{-j5\pi/12}$ for example.

With respect to a 64QAM constellation, the transmission matrix for three antennas is given in equation (15) by

$$U_9 = \begin{pmatrix} s_1 & \dfrac{s_2 + s_3}{\sqrt{2}} & s_4 \\[2ex] -s_2^* & \dfrac{s_1^* - v s_4^*}{\sqrt{2}} & v s_3^* \\[2ex] -s_4^* & \dfrac{-s_3^* + s_2^*}{\sqrt{2}} & s_1^* \\[2ex] s_3 & \dfrac{-s_4 - v s_1}{\sqrt{2}} & v s_2 \end{pmatrix}$$

where $v = e^{-j7\pi/48}$ for example. For four transmit antennas, the transmission matrix is

$$U_{10} = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

$$\vdots$$

$$\dots \dots (15)$$

where $v=e^{-j7\pi/48}$ for example.

Also in accordance with the present invention, described below is a receiver that can decode symbols of the above transmission coding matrices by ML decoding (first embodiment), by super-fast decoding (second embodiment) that renders the ML decoding more efficient, or by sub-optimal decoding (third embodiment).

Decoding according to the First Embodiment

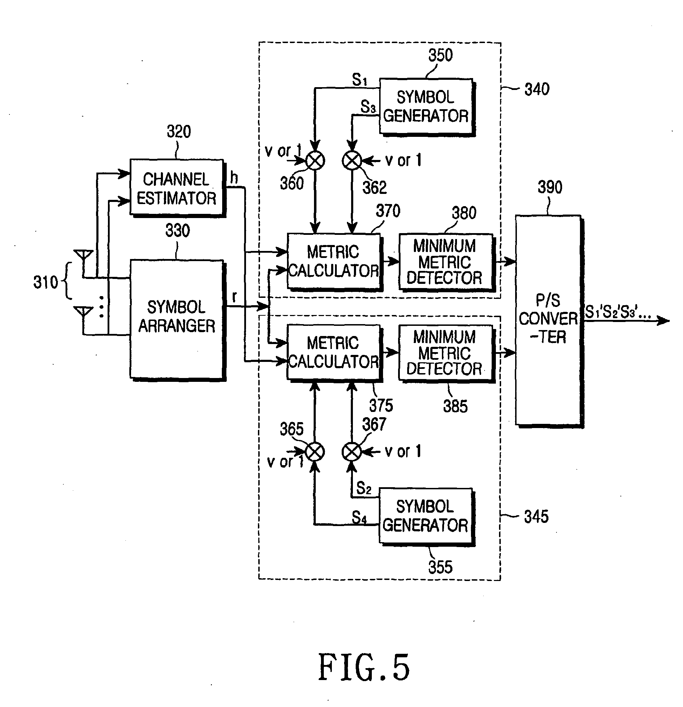

Fig. 5 is a block diagram of a receiver that decodes according to an embodiment of the present invention. The receiver is comprised of two independent decoders 340 and 345.

Referring to Fig. 5, a channel estimator 320 estimates channel coefficients representing channel gains from a plurality of transmit antennas to a plurality of receive antennas 310. A symbol arranger 330 collects symbols received from the receive antennas 310 for the four time periods corresponding to transmission by the transmitter illustrated in Fig. 3 or Fig. 4 of one block of symbols at four times.

The symbol arranger 330 forms a matrix out of the collected symbols. In the matrix, symbols received from the same receive antenna are arranged in the same row and symbols received at the same time are arranged in the same column. Although the plurality of receive antennas 310 are illustrated, decoding for the case of one antenna will be described below, for notational simplicity.

If four symbols to be detected are $x_1$, $x_2$, $x_3$ and $x_4$, the first decoder 340 detects $x_1$ and $x_3$ and the second decoder 345 detects $x_2$ and $x_4$, based on the channel gains and the received symbols. Thus, the decoders 340 and 345 detect the four symbols $x_1$, $x_2$, $x_3$ and $x_4$ simultaneously.

In the first decoder 340, a symbol generator 350 generates all possible symbol pairs and phase rotators 360 and 362 rotate at least one symbol of each symbol pair by the phase value $v$ used in the transmitter or by 1.

A metric calculator 370 calculates the metric values of the resulting phase-rotated symbol pairs. The number of all possible symbol pairs is 2x2 for BPSK, 4x4 for QPSK, 8x8 for 8PSK, 16x16 for 16QAM, and 64x64 for 64QAM. A minimum metric detector 380 detects symbols $x_1$ and $x_3$ that have a minimum metric.

The second decoder 345 operates in the same manner. After the first and second decoders 340 and 345 detect $x_1$ & $x_3$ and $x_2$ & $x_4$, respectively, a parallel-to-serial (P/S) converter 390 arranges the detected symbols in the right order and outputs the recovered symbol combination of $x_1$, $x_2$, $x_3$, and $x_4$.

For notational simplicity, a description will be made below of decoding for BPSK symbols, $U_1$ illustrated in matrix (11) transmitted from three transmit antennas for the case of one receive antenna, with channel gains from the first, second and third transmit antennas to the receiver of $\alpha$, $\beta$ and $\gamma$, respectively. The signal $r_t$ received at the receive antenna at time t is given by equation (16):

$$r_1 = \alpha s_1 + \beta \frac{s_2 + s_3}{\sqrt{2}} + \gamma s_4 + n_1 \quad ,$$

$$r_2 = -\alpha s_2^* + \beta \frac{s_1^* - js_4^*}{\sqrt{2}} + \gamma s_3^* + n_2 \quad ,$$

$$r_3 = -\alpha s_4^* + \beta \frac{-s_3^* + js_2^*}{\sqrt{2}} + \gamma s_1^* + n_3 \quad ,$$

$$r_4 = \alpha s_3 + \beta \frac{-s_4 - js_1}{\sqrt{2}} + \gamma s_2 + n_4$$

$$\dots \dots (16)$$

where $s_1$, $s_2$, $s_3$ and $s_4$ are symbols transmitted from the transmitter and $n_1$, $n_2$, $n_3$ and $n_4$ are noise involved with the transmission at the four times. For $U_1$, the receiver computes symbols $x_1$, $x_2$, $x_3$, and $x_4$ that minimize the sum as shown in equation (17):

$$\left| r_1 - \left( \alpha x_1 + \beta \frac{x_2 + x_3}{\sqrt{2}} + \gamma x_4 \right) \right|^2 + \left| r_2 - \left( -\alpha x_2^* + \beta \frac{x_1^* - jx_4^*}{\sqrt{2}} + \gamma x_3^* \right) \right|^2 +$$

$$\left| r_3 - \left( -\alpha x_4^* + \beta \frac{-x_3^* + jx_2^*}{\sqrt{2}} + \gamma x_1^* \right) \right|^2 + \left| r_4 - \left( \alpha x_3 + \beta \frac{-x_4 - jx_1}{\sqrt{2}} + \gamma x_2 \right) \right|^2$$

$$\dots \dots (17)$$

The sum decomposes into two parts. The first part contains only $x_1$ and $x_3$ and the second part contains only $x_2$ and $x_4$. Thus, the receiver illustrated in Fig. 5 is constituted by decoupling the first decoder 340 for decoding the pair of $x_1$ and $x_3$ from the second decoder 345 for decoding the pair of $x_2$ and $x_4$.

The above operation for the transmission coding matrices $U_1$, $U_3$, $U_5$, $U_7$ and $U_9$ transmitted from three transmit antennas will be described in more detail.

For ML decoding for $U_1$, as shown in equation (18), letting

$$R_1 = \alpha^* r_1 + \beta \frac{1}{\sqrt{2}} r_2^* + \gamma r_3^* + j\beta^* \frac{1}{\sqrt{2}} r_4$$

$$R_3 = \gamma r_2^* - j\beta^* \frac{1}{\sqrt{2}} r_1 + \alpha^* r_4 - \beta^* \frac{1}{\sqrt{2}} r_3^*$$

$$R_{13} = \frac{j(C_1 + C_3)}{2}$$

$$C_1 = -\alpha^* \beta\sqrt{2} - \alpha\beta^* \sqrt{2}$$

$$C_3 = j\gamma^* \beta\sqrt{2} - j\gamma\beta^* \sqrt{2}$$

$$\ldots\ldots (18)$$

the first decoder 340 minimizes the sum as shown in equation (19):

$$|R_1 - x_1|^2 + |R_3 - x_3|^2 + |R_{13} - x_1^* x_3|^2$$

$$\ldots\ldots (19)$$

over all possible symbol pairs and detects the minimizing symbol pair $x_1$ and $x_3$.

Similarly, as shown in equation (20), letting

$$R_2 = \beta^* \frac{1}{\sqrt{2}} r_1 - \alpha r_2^* + j\beta \frac{1}{\sqrt{2}} r_3^* + \gamma^* r_4$$

$$R_4 = \gamma^* r_1 - j\beta \frac{1}{\sqrt{2}} r_2^* - \alpha r_3^* - \beta^* \frac{1}{\sqrt{2}} r_4$$

$$R_{24} = \frac{j(C_2 + C_4)}{2}$$

$$C_2 = \alpha\beta^* \sqrt{2} + \alpha^* \beta\sqrt{2}$$

$$C_4 = j\gamma\beta^* \sqrt{2} - j\gamma^* \beta\sqrt{2}$$

$$\ldots\ldots (20)$$

the second decoder 345 minimizes the sum as shown in equation (21):

$$|R_2 - x_2|^2 + |R_4 - x_4|^2 + |R_{24} - x_2^* x_4|^2$$

$$\ldots (21)$$

over all the possible symbol pairs and detects the minimizing symbol pair $x_2$ and $x_4$.

For ML decoding for $U_3$ or $U_5$, as shown in equation (22), letting

$$R_1 = \alpha^* r_1 + \beta \frac{1}{\sqrt{2}} r_2^* + \gamma r_3^* - v^* \beta^* \frac{1}{\sqrt{2}} r_4$$

$$R_3 = v\gamma r_2^* + \beta^* \frac{1}{\sqrt{2}} r_1 + \alpha^* r_4 - \beta \frac{1}{\sqrt{2}} r_3^*$$

$$R_{13} = -\frac{(C_1 + C_3)}{2}$$

$$C_1 = -\alpha^* \beta v \sqrt{2} + \alpha \beta^* \sqrt{2}$$

$$C_3 = \gamma \beta^* v \sqrt{2} - \gamma^* \beta \sqrt{2}$$

$$\ldots (22)$$

where $v$ is the phase value by which the phase of a symbol is rotated, $e^{-j2\pi/3}$ for $U_3$ and $e^{-j5\pi/6}$ for $U_5$, for example, the first decoder 340 minimizes the sum as shown in equation (23):

$$|R_1 - x_1|^2 + |R_3 - x_3|^2 + |R_{13} - x_1^* x_3|^2$$

$$\ldots (23)$$

over all possible symbol pairs and detects the minimizing symbol pair $x_1$ and $x_3$.

Similarly, as shown in equation (24), letting

$$R_2 = \beta^* \frac{1}{\sqrt{2}} r_1 - \alpha r_2^* + \beta \frac{1}{\sqrt{2}} r_3^* + v^* \gamma^* r_4$$

$$R_4 = \gamma^* r_1 - v\beta \frac{1}{\sqrt{2}} r_2^* - \alpha r_3^* - \beta^* \frac{1}{\sqrt{2}} r_4$$

$$R_{24} = -\frac{(C_2 + C_4)}{2}$$

$$C_2 = -\alpha\beta^* \sqrt{2} + v\alpha^* \beta\sqrt{2}$$

$$C_4 = -v\gamma\beta^* \sqrt{2} + \gamma^* \beta\sqrt{2}$$

$$\ldots\ldots (24)$$

the second decoder 345 minimizes the sum as shown in equation (25):

$$|R_2 - x_2|^2 + |R_4 - x_4|^2 + |R_{24} - x_2^* x_4|^2$$

$$\ldots\ldots (25)$$

over all the possible symbol pairs and detects the minimizing symbol pair $x_2$ and $x_4$.

For ML decoding for $U_7$ or $U_9$, as shown in equation (26), letting

$$R_1 = \frac{\left(\alpha^* r_1 + \beta \frac{1}{\sqrt{2}} r_2^* + \gamma^* r_3 - v^* \beta^* \frac{1}{\sqrt{2}} r_4\right)}{K_3}$$

$$R_3 = \frac{\left(v\gamma r_2^* + \beta^* \frac{1}{\sqrt{2}} r_1 + \alpha^* r_4 - \beta \frac{1}{\sqrt{2}} r_3^*\right)}{K_3}$$

$$R_{13} = -\frac{(C_1 + C_3)}{2K_3}$$

$$K_3 = |\alpha|^2 + |\beta|^2 + |\gamma|^2$$

$$C_1 = -\alpha^* \beta v \sqrt{2} + \alpha\beta^* \sqrt{2}$$

$$C_3 = \gamma\beta^* v \sqrt{2} - \gamma^* \beta \sqrt{2}$$

$$\ldots \ldots (26)$$

where $v = e^{-j5\pi/12}$ for $U_7$ and $v = e^{-j7\pi/48}$ for $U_9$, for example, the first decoder 340 minimizes the sum as shown in equation (27):

$$|R_1 - x_1|^2 + |R_3 - x_3|^2 + |R_{13} - x_1^* x_3|^2 - |x_1|^2 |x_3|^2$$

$$\ldots \ldots (27)$$

over all possible symbol pairs and detects the minimizing symbol pair $x_1$ and $x_3$.
Similarly, as shown in equation (28), letting

$$R_2 = \frac{\left(\beta^* \dfrac{1}{\sqrt{2}} r_1 - \alpha r_2^* + \beta \dfrac{1}{\sqrt{2}} r_3^* + v^* \gamma^* r_4\right)}{K_3}$$

$$R_4 = \frac{\left(\gamma^* r_1 - v\beta \dfrac{1}{\sqrt{2}} r_2^* - \alpha r_3^* - \beta^* \dfrac{1}{\sqrt{2}} r_4\right)}{K_3}$$

$$R_{24} = -\frac{(C_2 + C_4)}{2K_3}$$

$$C_2 = -\alpha\beta^* \sqrt{2} + v\alpha^* \beta \sqrt{2}$$

$$C_4 = -v\gamma\beta^* \sqrt{2} + \gamma^* \beta \sqrt{2}$$

$$\ldots \ldots (28)$$

the second decoder 345 minimizes the sum as shown in equation (29):

$$|R_2 - x_2|^2 + |R_4 - x_4|^2 + |R_{24} - x_2^* x_4|^2 - |x_2|^2 |x_4|^2$$

$$\ldots\ldots(29)$$

over all the possible symbol pairs and detects the minimizing symbol pair $x_2$ and $x_4$.

Now, ML decoding for modulation symbols transmitted from four transmit antennas will be described with reference to one receive antenna, with channel gains from the first to fourth transmit antennas to the receiver of $\alpha$, $\beta$, $\gamma$, and $\zeta$, respectively.

For ML decoding for $U_2$, as shown in equation (30), letting

$$R_1 = \alpha^* r_1 + \beta r_2^* + \zeta r_3^* + j\gamma^* r_4$$

$$R_3 = \zeta r_2^* - j\gamma^* r_1 + \alpha^* r_4 - \beta r_3^*$$

$$R_{13} = -(C_1 + C_3)$$

$$C_1 = j\alpha^* \gamma + j\alpha\gamma^*$$

$$C_3 = \zeta^* \beta - \zeta\beta^*$$

$$\ldots\ldots(30)$$

the first decoder 340 minimizes the sum as shown in equation (31):

$$|R_1 - x_1|^2 + |R_3 - x_3|^2 + |R_{13} - x_1 x_3^*|^2$$

$$\ldots\ldots(31)$$

over all possible symbol pairs and detects the minimizing symbol pair $x_1$ and $x_3$.

Similarly, as shown in equation (32), letting

$$R_2 = \beta^* r_1 - \alpha r_2^* + j\gamma r_3^* + \zeta^* r_4$$

$$R_4=\zeta^* r_1 - j\gamma r_2^* - \alpha r_3^* - \beta^* r_4$$

$$R_{24}=-(C_2+C_4)$$

$$C_2=\zeta\beta^* - \zeta^* \beta$$

$$C_4=-j\alpha\gamma^* - j\gamma\alpha^*$$

$$\dots\dots(32)$$

the second decoder 345 minimizes the sum as shown in equation (33):

$$|R_2-x_2|^2+|R_4-x_4|^2+|R_{24}-x_2x_4^*|^2$$

$$\dots\dots(33)$$

over all the possible symbol pairs and detects the minimizing symbol pair $x_2$ and $x_4$.
For ML decoding for $U_4$ or $U_6$, as shown in equation (34), letting

$$R_1=\alpha^* r_1 + \beta r_2^* + \zeta r_3^* - v^* \gamma^* r_4$$

$$R_3=v\zeta r_2^* + \gamma^* r_1 + \alpha^* r_4 - \beta r_3^*$$

$$R_{13}=-(C_1+C_3)$$

$$C_1=-\alpha^* \gamma v + \alpha\gamma^*$$

$$C_3=\zeta\beta^* v - \zeta^* \beta$$

$$\dots\dots(34)$$

where $v= e^{-j2\pi/3}$ for $U_4$ and $v=e^{-j5\pi/6}$ for $U_6$, for example, the first decoder 340 minimizes the sum as shown in equation (35):

$$|R_1-x_1|^2+|R_3-x_3|^2+|R_{13}-x_1^*x_3|^2$$

$$\dots\dots(35)$$

over all possible symbol pairs and detects the minimizing symbol pair $x_1$ and $x_3$.
Similarly, as shown in equation (36), letting

$$R_2 = \beta^* r_1 - \alpha r_2^* + \gamma r_3^* + v^* \zeta^* r_4$$

$$R_4 = \zeta^* r_1 - v\gamma r_2^* - \alpha r_3^* - \beta^* r_4$$

$$R_{24} = -(C_2 + C_4)$$

$$C_2 = -\alpha\gamma^* + v\alpha^*\gamma$$

$$C_4 = -v\zeta\beta^* + \zeta^*\beta$$

$$\ldots\ldots(36)$$

the second decoder 345 minimizes the sum as shown in equation (37):

$$|R_2 - x_2|^2 + |R_4 - x_4|^2 + |R_{24} - x_2^* x_4|^2$$

$$\ldots\ldots(37)$$

over all the possible symbol pairs and detects the minimizing symbol pair $x_2$ and $x_4$.

For ML decoding for $U_8$ or $U_{10}$, as shown in equation (38), letting

$$R_1 = \frac{(\alpha^* r_1 + \beta r_2^* + \zeta r_3^* - v^* \gamma^* r_4)}{K_4}$$

$$R_3 = \frac{(v\zeta r_2^* + \gamma^* r_1 + \alpha^* r_4 - \beta r_3^*)}{K_4}$$

$$R_{13} = -\frac{(C_1 + C_3)}{K_4}$$

$$K_4 = |\alpha|^2 + |\beta|^2 + |\gamma|^2$$

$$C_1 = -\alpha^* \gamma v + \alpha\gamma^*$$

$$C_3 = \zeta\beta^* v - \zeta^*\beta$$

$$\ldots\ldots(38)$$

where $v = e^{-j5\pi/12}$ for $U_8$ and $v = e^{-j7\pi/48}$ for $U_{10}$, for example, the first decoder 340 minimizes the sum as shown in equation (39):

$$|R_1 - x_1|^2 + |R_3 - x_3|^2 + |R_{13} - x_1^* x_3|^2 - |x_1|^2 |x_3|^2$$

$$\ldots\ldots(39)$$

over all possible symbol pairs and detects the minimizing symbol pair $x_1$ and $x_3$.

Similarly, as shown in equation (40), letting

$$R_2 = \frac{(\beta^* r_1 - \alpha r_2^* + \gamma r_3^* + v^* \zeta^* r_4)}{K_4}$$

$$R_4 = \frac{(\zeta^* r_1 - v\gamma r_2^* - \alpha r_3^* - \beta^* r_4)}{K_4}$$

$$R_{24} = -\frac{(C_2 + C_4)}{K_4}$$

$$C_2 = -\alpha\gamma^* + v\alpha^*\gamma$$

$$C_4 = -v\zeta\beta^* + \zeta^*\beta$$

$$\ldots\ldots(40)$$

the second decoder 345 minimizes the sum as shown in equation (41):

$$|R_2 - x_2|^2 + |R_4 - x_4|^2 + |R_{24} - x_2^* x_4|^2 - |x_2|^2 |x_4|^2$$

$$\ldots\ldots(41)$$

over all the possible symbol pairs and detects the minimizing symbol pair $x_2$ and $x_4$.

Decoding according to the Second Embodiment

For ML decoding according to the first embodiment, the metric values of all possible symbol pairs must be computed to detect desired symbols. Thus, 8x8 metric calculations are required for 8PSK, and 16x16 metric calculations for 16QAM. These codes can be decoded very quickly by reducing the number of required computations utilizing the characteristics of PSK and QAM.

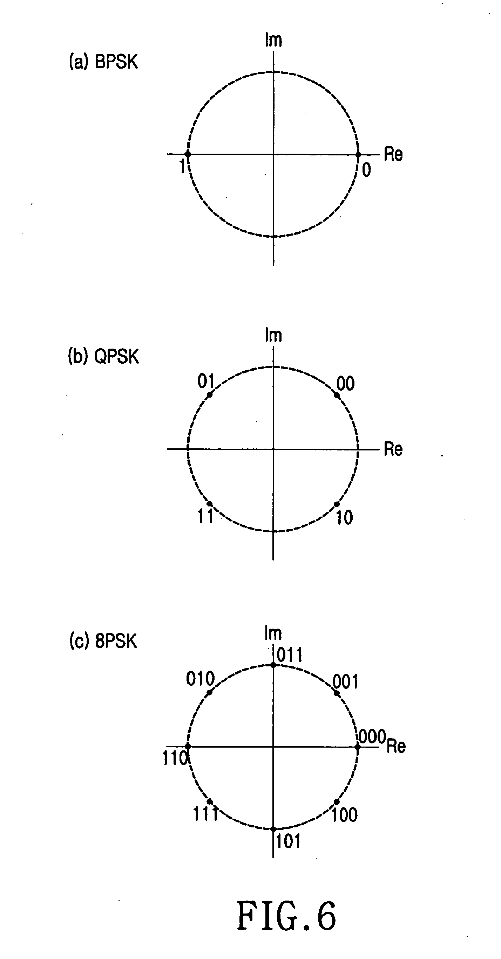

Figs. 6A, 6B and 6C illustrate BPSK, QPSK, and 8PSK signal constellations, respectively. As shown, all PSK modulation symbols lie on a unit circle, which implies that their length is always 1.

For $U_6$, since $x_1$ and $x_3$ both have length 1, as shown in equation (42), minimizing the metric (35) is equivalent to minimizing

$$|R_1 \text{-} x_1|^2 + |R_3 \text{-} x_3|^2 + |x_1 R_{13} \text{-} x_3|^2$$

$$\ldots \ldots (42)$$

For each fixed $x_1$, as shown in equation (43), minimizing the sum of equation (42) is equivalent to minimizing

$$|(R_3 + x_1 R_{13}) \text{-} x_3|^2$$

$$\ldots \ldots (43)$$

Since $x_1$ is fixed, minimizing the metric of equation (43) is equivalent to finding the closest constellation point $x_3$ to $R_3 + x_1 R_{13}$. It is possible to have one $x_3$ for each $x_1$. Thus, the receiver detects a symbol pair ($x_1$, $x_3$) that minimizes the ML decoding metric of the first embodiment as desired reception symbols. For $x_2$ and $x_4$, the receiver similarly finds the closest constellation point $x_4$ to $R_4 + x_2 R_{24}$ and detects a symbol pair ($x_2$, $x_4$) that minimizes the ML decoding metric as desired $x_2$ and $x_4$. The same procedure is applied to other PSK transmission coding matrices.

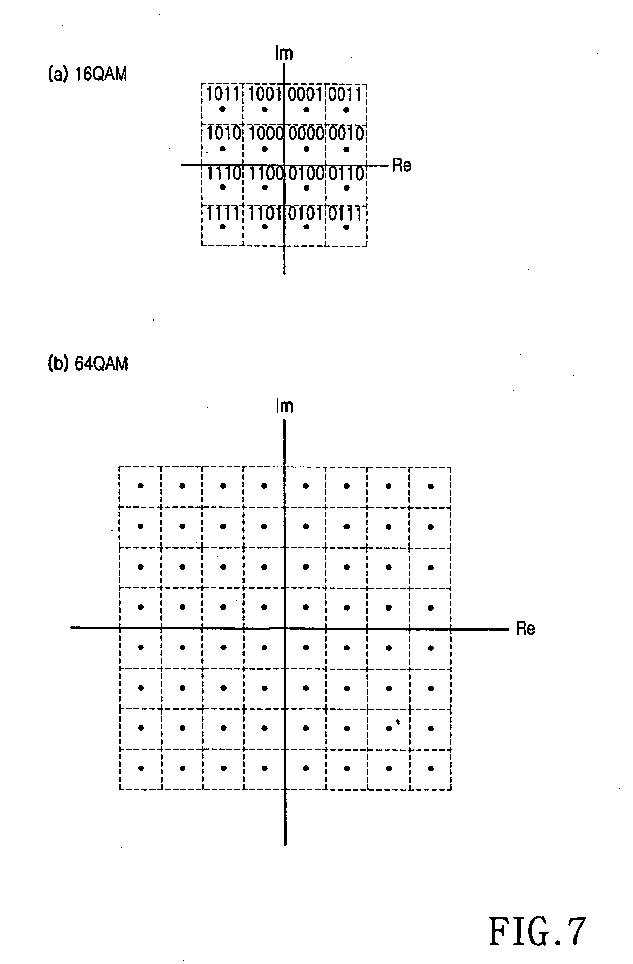

With regard to QAM decoding, all 16QAM or 64QAM symbols have different lengths, as illustrated in Figs. 7a and 7B, and the metric (39) is used for QAM codes. When $x_1$ is fixed, as shown in equation (44), minimizing the metric (39) over all possible values for $x_3$ is equivalent to minimizing

$$|(R_3 + x_1 R_{13}) \text{-} x_3|^2 + |R_1 \text{-} x_1|^2$$

$$\ldots \ldots (44)$$

For each fixed $x_1$, minimizing the metric of equation (44) is equivalent to finding the closest constellation point $x_3$ to $R_3 + x_1 R_{13}$. Thus, the receiver detects all symbol pairs ($x_1$, $x_3$) and detects the minimizing symbol pair ($x_1$, $x_3$). For $x_2$ and $x_4$, the receiver similarly finds the closest constellation point $x_4$ to $R_4 + x_2 R_{24}$ and detects the minimizing symbol pair ($x_2$, $x_4$). The same procedure is applied to other QAM transmission coding matrices.

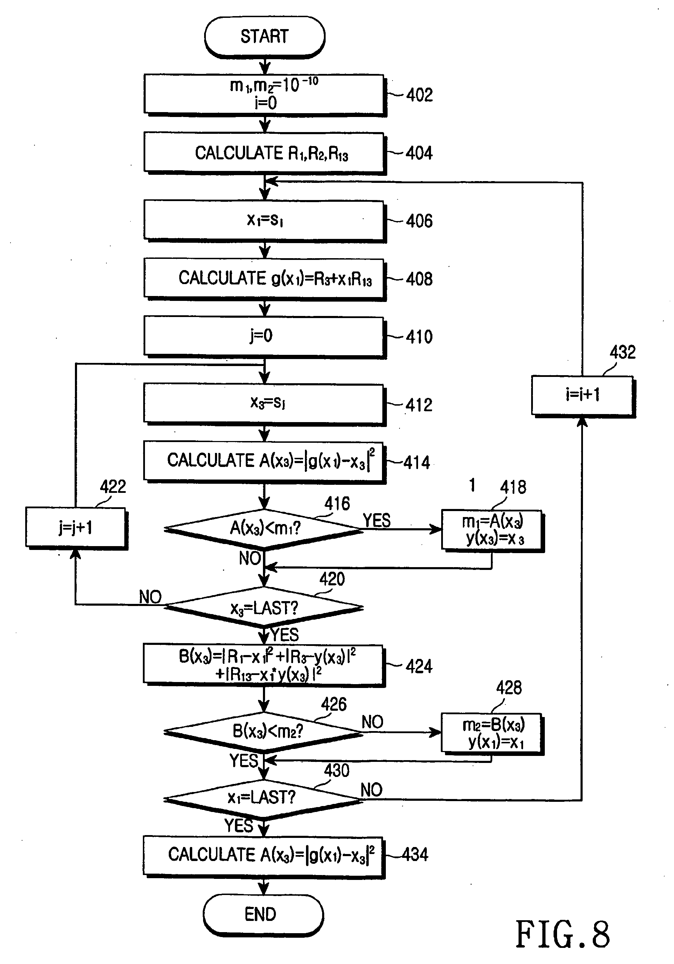

Fig. 8 is a flowchart illustrating the second embodiment of decoding according to the present invention. While the procedure is described as being performed for detection of only one symbol pair, it is to be noted that the other symbol pairs are detected in the same manner.

Referring to Fig. 8, thresholds $m_1$ and $m_2$ are set to a very small number, for example, $10^{-10}$ and symbol index i is set to 0 in step 402. The receiver computes parameters $R_1$, $R_2$, and $R_{13}$ using signals received for a plurality of time periods and estimated channel gains in step 404. In step 406, a first symbol $x_1$ is set to s;. The receiver computes $g(x_1) = R_3 + x_1 R_{13}$ in step 408. The receiver sets variable j to an initial value 0 in step 410, sets a second symbol $x_3$ to $s_j$ in step 412, and computes $A(x_3) = |g(x_1) - x_3|^2$ in step 414.

In step 416, $A(x_3)$ is compared with threshold $m_1$. If $A(x_3)$ is equal to or greater than threshold $m_1$, the receiver proceeds to step 420. On the contrary, if $A(x_3)$ is less than $m_1$, $m_1$ is updated to $A(x_3)$ and $y(x_3)$ is set as $x_3$ in step 418. In step 420, it is determined whether $x_3$ is the last symbol, for example, if i=16 for 16QAM. If it is, it is determined that the second symbol $s_j$ matching the first symbol $s_1$ has been detected and the receiver proceeds to step 424. Otherwise, the receiver increases variable j by 1 in step 422 and returns to step 412.

In step 424, the receiver computes $\mathbf{B(x_3)} = |\mathbf{R_1} - \mathbf{x_1}|^2 + |\mathbf{R_3} - \mathbf{y(x_3)}|^2 + |\mathbf{R_{13}} - \mathbf{x_1^* y(x_3)}|^2$ . If B($x_3$) is equal to or greater than threshold $m_2$, the receiver proceeds to step 430. Otherwise, it proceeds to step 428. The receiver updates $m_2$ to B($x_3$) and sets $y(x_1)$ as $x_1$ in step 428. In step 430, it is determined whether ($x_1$) is the last symbol, for example, if i=16 for 16QAM. If it is, it is determined that the second symbols $s_j$ matching all first symbols $s_1$ have been detected and the receiver proceeds to step 434. Otherwise, the receiver increases variable i by 1 in step 432 and returns to step 406. In step 434, the receiver finally detects $y(x_1)$ and $y(x_3)$.

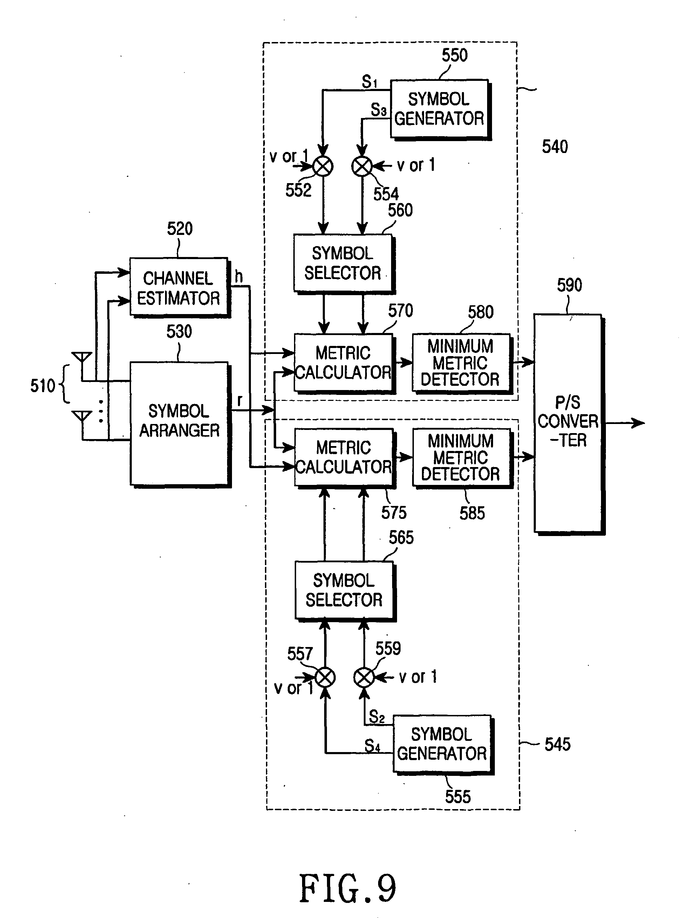

Fig. 9 is a block diagram of a receiver that decodes according to the second embodiment of the present invention. The receiver is comprised of two independent decoders 540 and 545.

Referring to Fig. 9, a channel estimator 520 estimates channel coefficients representing channel gains from a plurality of transmit antennas to a plurality of receive antennas 510. A symbol arranger 530 collects symbols received from the receive antennas 510 for the four time periods corresponding to transmission by the transmitter illustrated in Fig. 3 or Fig. 4 of one block of symbols at four times.

The symbol arranger 530 forms a matrix out of the collected symbols. In the matrix, symbols received from the same receive antenna are arranged in the same row and symbols received at the same time are arranged in the same column. Although the plurality of receive antennas 510 are illustrated, decoding for the case of one antenna will be described below, for notational simplicity.

If four symbols to be detected are $x_1$, $x_2$, $x_3$ and $x_4$, the first decoder 540 detects $x_1$ and $x_3$ and the second decoder 545 detects $x_2$ and $x_4$, based on the channel gains and the received symbols. Thus, the decoders 540 and 545 detect the four symbols $x_1$, $x_2$, $x_3$ and $x_4$ simultaneously.

In the first decoder 540, a symbol generator 550 generates all possible symbol pairs and phase rotators 552 and 554 rotate at least one symbol of each symbol pair by the phase value $\nu$ used in the transmitter or by 1. The number of all possible symbol pairs is the square of a modulation order used, for example, $16^2$ for 16QAM.

A symbol selector 560 computes the parameters $R_1$, $R_3$, and $R_{13}$ and selects symbol pairs that minimize the metric (43) or (44) according to the parameters. The number of the selected symbol pairs is equal to the modulation order. For example, 16 symbol pairs are selected according to the metric (44), for 16QAM.

A metric calculator 570 calculates the metric values of the selected symbol pairs using the parameters according to a modulation scheme and the number of the transmit antennas. A minimum metric detector 580 detects one symbol pair having a minimum metric value using the computed metric values. The metric computation is performed by Eq. (19), (23), (27), (31), (35) or (39) shown above.

The second decoder 545 operates in the same manner. After the first and second decoders 540 and 545 detect $x_1$ & $x_3$ and $x_2$ & $x_4$, respectively, a P/S converter 590 arranges the detected symbols in the right order and outputs the recovered symbol combination of $x_1$, $x_2$, $x_3$, and $x_4$.

Assuming a $2^b$ PSK signal constellation, once $R_1$, $R_3$ and $R_{13}$ are computed, b summations and $2^b$ multiplications are required for computation of $g(x_1)$, $2^b$ comparisons, one for each $g(x_1)$, are required for computing $y(x_3)$, and finally $3 \times 2^b$ multiplications and additions are performed for computing $B(x_3)$. Therefore, the same symbol detection performance as that of the ML decoding according to the first embodiment can be achieved with a total of $4 \times 2^b$ additions and multiplications and $2^b$ comparisons according to the second embodiment of the present invention.

Decoding according to the Third Embodiment

QPSK or 8PSK symbols can be decoded with a reduced volume of computations despite a lower symbol detection performance, as compared to decoding methods according to the first and second embodiments.

For 8PSK symbols, the receiver computes the parameters $R_1$, $R_3$ and $R_{13}$ and finds the closest constellation points $q_1$ to $R_1$, $q_3$ to $R_3$, and $q_{13}$ to $R_{13}$. If $q_{13}=q_1{}^*q_3$, the receiver outputs $q_1$ and $q_3$.

If not, the receiver computes an angle $F_d$ by dividing the angle between $q_{13}$ and $q_1{}^*q_3$ by 2. Then the receiver searches for desired first and second symbols by calculating the ML decoding metric values of first symbol and second symbol candidates whose angles are respectively within the angular distance $F_d$ from $q_1$ and q3.

Similarly, the receiver computes the parameters $R_2$, $R_4$ and $R_{24}$ and finds the closest constellation points $q_2$ to $R_2$, $q_4$ to $R_4$, and $q_{24}$ to $R_{24}$. If $q_{24}=q_2{}^*q_4$, the receiver outputs $q_2$ and $q_4$.

If not, the receiver computes an angle $F_d'$ by dividing the angle between $q_{24}$ and $q_2{}^*q_4$ by 2. Then the receiver searches for desired first and second symbols by calculating the ML decoding metric values of first symbol and second symbol candidates whose angles are respectively within the angular distance $F_d'$ from $q_2$ and $q_4$.

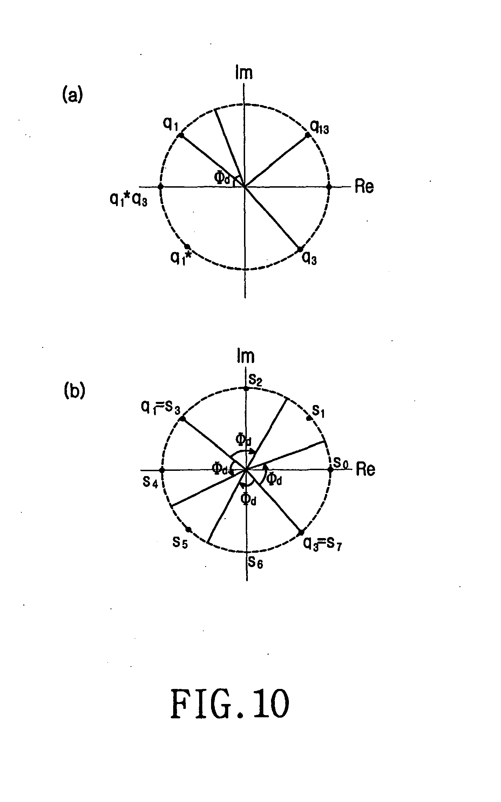

Figs. 10A and 10B illustrate 8PSK signal constellations to depict sub-optimal decoding according to the present invention. Referring to Fig. 10A, the closest constellation point $q_1$ to $R_1$ is $e^{j(3\pi/4)}$, the closest constellation point $q_3$ to $R_3$ is $e^{j(-\pi/4)}$, and the closest constellation point $q_{13}$ to $R_{13}$ is $e^{j(\pi/4)}$. $q_1{}^*q_3$ is $e^{j(\pi)}$ and $F_d'=3\pi/8$.

Referring to Fig. 10B, the receiver searches for a symbol pair that minimizes the ML decoding metric over all possible symbol pairs made out of first symbol candidates $s_2$, $s_3$ and $s_4$ which are within $3\pi/8$ from $q_1$ and second symbol candidates $s_0$, $s_6$ and $s_7$ which are within $3\pi/8$ from $q_3$. The same process is applied to other PSK transmission coding matrices.

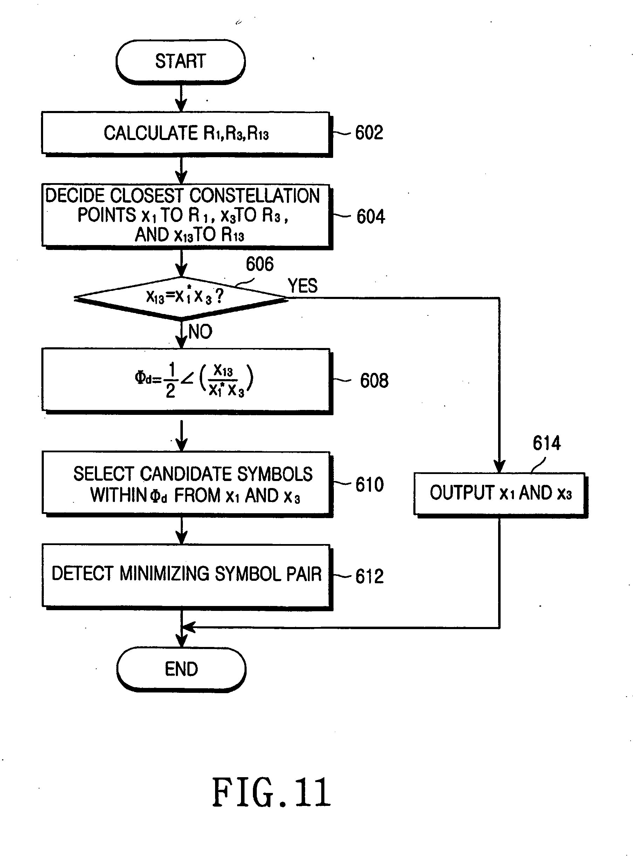

Fig. 11 is a flowchart illustrating decoding according to the third embodiment of the present invention. For notational simplicity, the decoding is carried out for only one symbol pair.

Referring to Fig. 11, the receiver computes the parameters $R_1$, $R_3$ and $R_{13}$ in step 602 and finds the closest constellation points $x_1$ to $R_1$, $x_3$ to $R_3$, and $x_{13}$ to $R_{13}$ in step 604. If $x_{13}=x_1{}^*x_3$ in step 606, the receiver outputs $x_1$ and $x_3$.

If not, the receiver computes $\Phi_d = \dfrac{1}{2} \measuredangle \left( \dfrac{x_{13}}{x_1^* x_3} \right)$ in step 608 and selects first symbol and second symbol candidates whose angles are respectively within the angular distance $F_d$ from $x_1$ and $x_3$ in step 610. In step 612, the receiver detects a symbol pair that minimizes the ML decoding metric of the first embodiment by calculating the ML decoding metric values of all possible symbol pairs made out of the first and second symbol candidates.

For the sub-optimal decoding, the receiver is configured in hardware as illustrated in Fig. 9. The symbol selector 560 computes the parameters $R_1$, $R_3$ and $R_{13}$, finds the closest constellation points to $R_1$, $R_3$, and to $R_{13}$, computes the angle $F_d$, and selects candidate symbols within $F_d$ from the constellation points. For QPSK, up to 3x3 candidate symbol pairs are produced from the candidate symbols and for 8PSK, the number of the candidate symbol pairs is up to 5x5.

The metric calculator 570 calculates the metric values of the symbol pairs using Eq. (19), (23), (27), (31), (35), or (39) and the minimum metric detector 580 detects one symbol pair having a minimum metric value.

The second decoder 545 operates in the same manner. Thus, the first decoder 540 detects $x_1$ and $x_3$ and the second decoder 545 detects $x_2$ and $x_4$. The P/S converter 590 arranges the detected symbols in the right order and outputs the recovered symbol combination of $x_1$, $x_2$, $x_3$ and $x_4$.

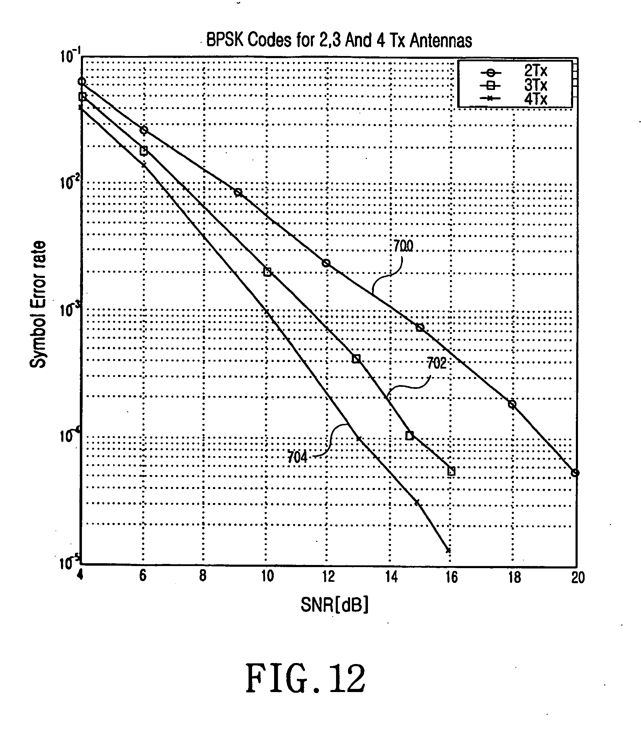

Figs. 12, 13 and 14 are graphs illustrating SER versus SNR from ML decoding for BPSK, QPSK, and 8PSK, respectively, assuming 2, 3 and 4 transmit antennas and, for example, one receive antenna in the first embodiment of the present invention.

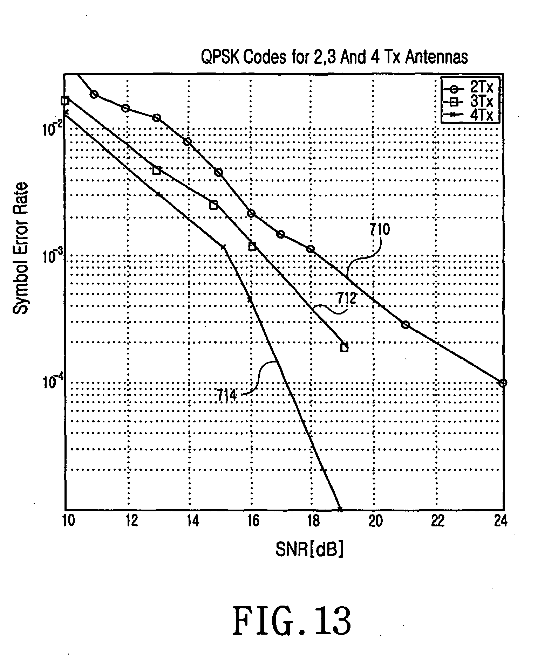

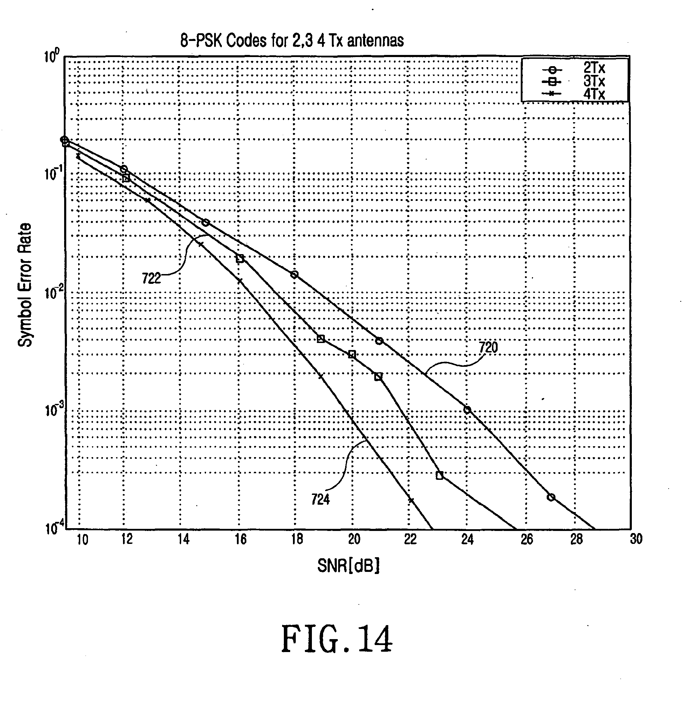

In Fig. 12, reference numerals 700, 702 and 704 denote SERs for 2, 3, and 4 transmit antennas, respectively. In Fig. 13, reference numerals 710, 712 and 714 denote SERs for 2, 3, and 4 transmit antennas, respectively. In Fig. 14, reference numerals 720, 722 and 724 denote SERs for 2, 3, and 4 transmit antennas, respectively.

The relation between SER and SNR is given by equation (45):

$$SER = C \cdot SNR^{-d}$$

$$\dots \dots (45)$$

where C is a constant and d is a diversity gain. Therefore, log(SER)=-d·log(C·SNR) in Figs. 12, 13 and 14. With log (SNR) on an X axis, y=-dx. Thus, d is the inclination. In other words, the inclination of the SER-SNR graph on a log scale is the diversity gain. As noted from Figs. 12, 13 and 14, the transmit diversity of the present invention offers a diversity order equal to the number of transmit antennas, that is, a maximum diversity order.

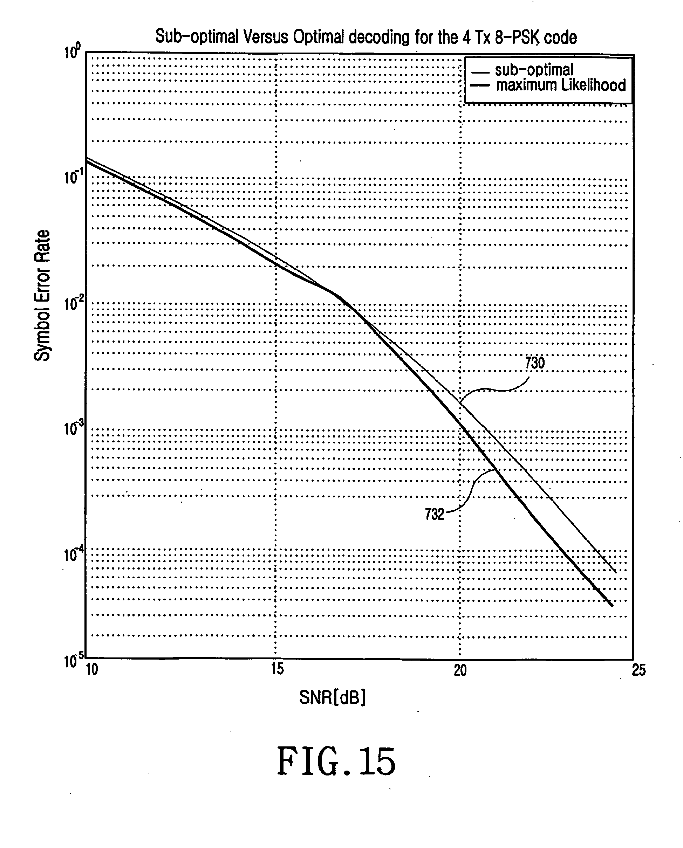

Fig. 15 is a graph comparing SERs between the decoding schemes of the first and third embodiments for four transmit antennas transmitting 8PSK symbols according to the present invention. Reference numeral 732 denotes the sub-optimal decoding according to the third embodiment and reference numeral 730 denotes the ML decoding according to the first embodiment. The sub-optimal decoding still provides a maximum diversity gain despite a slightly degraded performance as compared to the ML decoding.

As described above, the present invention advantageously provides a maximum diversity gain for space-time block codes with three or more transmit antennas and simplifies the structure of a decoder for detecting transmission symbols in a receiver. Therefore, a data processing rate is increased and system development cost is saved.

While the invention has been shown and described with reference to certain preferred embodiments thereof, it will be understood by those skilled in the art that various changes in form and details may be made therein without departing from the scope of the invention as defined by the appended claims.

**Claims**

1. A transmitter for transmitting modulation symbols in a wireless communication system, comprising:

   a plurality of transmit antennas (140a, 140b, 140c, 140d) for achieving transmit diversity; and
   a space-time encoder (120) for encoding a plurality of input symbols into a plurality of symbol combinations to transmit the input symbols once from each transmit antenna at each time period, by using a transmission coding matrix with rows corresponding to transmission time periods and columns corresponding to the transmit antennas, and outputting the symbol combinations to the transmit antennas during the transmission time periods, the symbol combinations having orthogonal symbols in at least two rows, inversions and conjugates of the input symbols; and
a phase rotator part (130a, 130b) for rotating the phases of some of the symbol combinations outputted from the space-time encoder by using the transmission coding matrix,
**characterized in that** if the number of the transmit antennas is 4,
the space-time encoder (120) generates a transmission coding matrix with four rows and four columns from four input symbols, and the inversions and the conjugates of the four symbols, and
the phase rotator part (130a, 130b) selectively rotates the phases of symbols in at least two of the columns of the transmission coding matrix by a predetermined phase value.

2. The transmitter of claim 1, wherein the transmission coding matrix is one of

$$
\begin{bmatrix} s_1 & s_2 & s_3^* & s_4^* \\ s_2^* & -s_1^* & s_4 & -s_3 \\ s_3 & s_4 & -s_1^* & -s_2^* \\ s_4^* & -s_3^* & -s_2 & s_1 \end{bmatrix}
\begin{bmatrix} s_1 & s_2 & s_3^* & -s_4^* \\ s_2^* & -s_1^* & s_4 & s_3 \\ s_3 & s_4 & -s_1^* & s_2^* \\ s_4^* & -s_3^* & -s_2 & -s_1 \end{bmatrix}
\begin{bmatrix} s_1 & s_2 & s_3^* & -s_4^* \\ s_2^* & -s_1^* & -s_4 & -s_3 \\ s_3 & s_4 & -s_1^* & s_2^* \\ s_4^* & -s_3^* & s_2 & s_1 \end{bmatrix}
\begin{bmatrix} s_1 & s_2 & s_3^* & s_4^* \\ s_2^* & -s_1^* & -s_4 & s_3 \\ s_3 & s_4 & -s_1^* & -s_2^* \\ s_4^* & -s_3^* & s_2 & -s_1 \end{bmatrix}
$$

$$
\begin{bmatrix} s_1 & s_2 & -s_3^* & -s_4^* \\ s_2^* & -s_1^* & s_4 & -s_3 \\ s_3 & s_4 & s_1^* & s_2^* \\ s_4^* & -s_3^* & -s_2 & s_1 \end{bmatrix}
\begin{bmatrix} s_1 & s_2 & -s_3^* & s_4^* \\ s_2^* & -s_1^* & s_4 & s_3 \\ s_3 & s_4 & s_1^* & -s_2^* \\ s_4^* & -s_3^* & -s_2 & -s_1 \end{bmatrix}
\begin{bmatrix} s_1 & s_2 & -s_3^* & -s_4^* \\ s_2^* & -s_1^* & -s_4 & s_3 \\ s_3 & s_4 & s_1^* & s_2^* \\ s_4^* & -s_3^* & s_2 & -s_1 \end{bmatrix}
\begin{bmatrix} s_1 & s_2 & -s_3^* & s_4^* \\ s_2^* & -s_1^* & -s_4 & -s_3 \\ s_3 & s_4 & s_1^* & -s_2^* \\ s_4^* & -s_3^* & s_2 & s_1 \end{bmatrix}
$$

where $s_1$, $s_2$, $s_3$ and $s_4$ are the four input symbols.

3. The transmitter of claim 1, wherein if the input symbols are BPSK (Binary Phase Shift Keying) symbols, the transmission coding matrix is

$$
U_2 = \begin{pmatrix} s_1 & s_2 & js_3 & s_4 \\ -s_2^* & s_1^* & -js_4^* & s_3^* \\ -s_4^* & -s_3^* & js_2^* & s_1^* \\ s_3 & -s_4 & -js_1 & s_2 \end{pmatrix}
$$

where $s_1$, $s_2$, $s_3$ and $s_4$ are the four input symbols.

4. The transmitter of claim 1, wherein if the input symbols are QPSK (Quadrature Phase Shift Keying) symbols, the transmission coding matrix is

$$
U_4 = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}
$$

where $s_1$, $s_2$, $s_3$ and $s_4$ are the four input symbols and $v$ is the predetermined phase value.

5. The transmitter of claim 4, wherein $v$ is $e^{-j2\pi/3}$.

**6.** The transmitter of claim 1, wherein if the input symbols are 8PSK (8-ary Phase Shift Keying) symbols, the transmission coding matrix is

$$U_6 = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

where $s_1$, $s_2$, $s_3$ and $s_4$ are the four input symbols and $v$ is the predetermined phase value.

**7.** The transmitter of claim 6, wherein $v$ is $e^{-j5\pi/6}$.

**8.** The transmitter of claim 1, wherein if the input symbols are 16QAM (16-ary Quadrature Amplitude Modulation) symbols, the transmission coding matrix is

$$U_8 = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

where $s_1$, $s_2$, $s_3$ and $s_4$ are the four input symbols and $v$ is the predetermined phase value.

**9.** The transmitter of claim 8, wherein $v$ is $e^{-j5\pi/12}$.

**10.** The transmitter of claim 1, wherein if the input symbols are 64QAM (64-ary Quadrature Amplitude Modulation) symbols, the transmission coding matrix is

$$U_{10} = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix} .$$

where $s_1$, $s_2$, $s_3$ and $s_4$ are the four input symbols and $v$ is the predetermined phase value.

**11.** The transmitter of claim 10, wherein $v$ is $e^{-j7\pi/48}$.

**12.** A transmitter for transmitting modulation symbols in a wireless communication system, comprising:

a plurality of transmit antennas (250a, 250b, 250c) for achieving transmit diversity; and
a space-time encoder (220) for encoding a plurality of input symbols into a plurality of symbol combinations to transmit the input symbols once from each transmit antenna at each time period, by using a transmission coding matrix with rows corresponding to transmission time periods and columns corresponding to the transmit antennas, and outputting the symbol combinations to the transmit antennas during the transmission time periods, the symbol combinations having orthogonal symbols in at least two rows, inversions and conjugates of the input symbols; and

a phase rotator part (230a, 230b) for rotating the phases of some of the symbol combinations outputted from the space-time encoder by using the transmission coding matrix,

**characterized in that** if the number of the transmit antennas is 3,

the space-time encoder (220) generates a transmission coding matrix with four rows and four columns from four input symbols, and the inversions and the conjugates of the four symbols, and

the phase rotator part (230a, 230b) selectively rotates the phases of symbols in at least two of the columns of the transmission coding matrix by a predetermined phase value,

wherein the transmitter further comprise a column generator (240) for generating a new column by summing the symbols of the selected two columns containing phase-rotated symbols and replacing the selected two columns with the new column, thereby generating the transmission coding matrix with four rows and three columns.

13. The transmitter of claim 12, wherein the transmission coding matrix generated from the space-time encoder (220) is one of

$$
\begin{bmatrix} s_1 & s_2 & s_3^* & s_4^* \\ s_2^* & -s_1^* & s_4 & -s_3 \\ s_3 & s_4 & -s_1^* & -s_2^* \\ s_4^* & -s_3^* & -s_2 & s_1 \end{bmatrix}
\begin{bmatrix} s_1 & s_2 & s_3^* & -s_4^* \\ s_2^* & -s_1^* & s_4 & s_3 \\ s_3 & s_4 & -s_1^* & s_2^* \\ s_4^* & -s_3^* & -s_2 & -s_1 \end{bmatrix}
\begin{bmatrix} s_1 & s_2 & s_3^* & -s_4^* \\ s_2^* & -s_1^* & -s_4 & -s_3 \\ s_3 & s_4 & -s_1^* & s_2^* \\ s_4^* & -s_3^* & s_2 & s_1 \end{bmatrix}
\begin{bmatrix} s_1 & s_2 & s_3^* & s_4^* \\ s_2^* & -s_1^* & -s_4 & s_3 \\ s_3 & s_4 & -s_1^* & -s_2^* \\ s_4^* & -s_3^* & s_2 & -s_1 \end{bmatrix}
$$

$$
\begin{bmatrix} s_1 & s_2 & -s_3^* & -s_4^* \\ s_2^* & -s_1^* & s_4 & -s_3 \\ s_3 & s_4 & s_1^* & s_2^* \\ s_4^* & -s_3^* & -s_2 & s_1 \end{bmatrix}
\begin{bmatrix} s_1 & s_2 & -s_3^* & s_4^* \\ s_2^* & -s_1^* & s_4 & s_3 \\ s_3 & s_4 & s_1^* & -s_2^* \\ s_4^* & -s_3^* & -s_2 & -s_1 \end{bmatrix}
\begin{bmatrix} s_1 & s_2 & -s_3^* & -s_4^* \\ s_2^* & -s_1^* & -s_4 & s_3 \\ s_3 & s_4 & s_1^* & s_2^* \\ s_4^* & -s_3^* & s_2 & -s_1 \end{bmatrix}
\begin{bmatrix} s_1 & s_2 & -s_3^* & s_4^* \\ s_2^* & -s_1^* & -s_4 & -s_3 \\ s_3 & s_4 & s_1^* & -s_2^* \\ s_4^* & -s_3^* & s_2 & s_1 \end{bmatrix}
$$

where $s_1$, $s_2$, $s_3$ and $s_4$ are the four input symbols.

14. The transmitter of claim 12, wherein if the input symbols are BPSK symbols, the transmission coding matrix is

$$
U_1 = \begin{pmatrix} s_1 & \dfrac{s_2 + js_3}{\sqrt{2}} & s_4 \\ -s_2^* & \dfrac{s_1^* - js_4^*}{\sqrt{2}} & s_3^* \\ -s_4^* & \dfrac{-s_3^* + js_2^*}{\sqrt{2}} & s_1^* \\ s_3 & \dfrac{-s_4 - js_1}{\sqrt{2}} & s_2 \end{pmatrix}
$$

where $s_1$, $s_2$, $s_3$ and $s_4$ are the four input symbols.

15. The transmitter of claim 12, wherein if the input symbols are QPSK symbols, the transmission coding matrix is

$$U_3 = \begin{pmatrix} s_1 & \dfrac{s_2 + s_3}{\sqrt{2}} & s_4 \\[2mm] -s_2^* & \dfrac{s_1^* - vs_4^*}{\sqrt{2}} & vs_3^* \\[2mm] -s_4^* & \dfrac{-s_3^* + s_2^*}{\sqrt{2}} & s_1^* \\[2mm] s_3 & \dfrac{-s_4 - vs_1}{\sqrt{2}} & vs_2 \end{pmatrix}$$

where $s_1$, $s_2$, $s_3$ and $s_4$ are the four input symbols and $v$ is the predetermined phase value.

**16.** The transmitter of claim 15, wherein $v$ is $e^{-j2\pi/3}$.

**17.** The transmitter of claim 12, wherein if the input symbols are 8PSK symbols, the transmission coding matrix is

$$U_5 = \begin{pmatrix} s_1 & \dfrac{s_2 + s_3}{\sqrt{2}} & s_4 \\[2mm] -s_2^* & \dfrac{s_1^* - vs_4^*}{\sqrt{2}} & vs_3^* \\[2mm] -s_4^* & \dfrac{-s_3^* + s_2^*}{\sqrt{2}} & s_1^* \\[2mm] s_3 & \dfrac{-s_4 - vs_1}{\sqrt{2}} & vs_2 \end{pmatrix}$$

where $s_1$, $s_2$, $s_3$ and $s_4$ are the four input symbols and $v$ is the predetermined phase value.

**18.** The transmitter of claim 17, wherein $v$ is $e^{-j5\pi/6}$.

**19.** The transmitter of claim 12, wherein if the input symbols are 16QAM symbols, the transmission coding matrix is

$$U_7 = \begin{pmatrix} s_1 & \dfrac{s_2 + s_3}{\sqrt{2}} & s_4 \\[2mm] -s_2^* & \dfrac{s_1^* - vs_4^*}{\sqrt{2}} & vs_3^* \\[2mm] -s_4^* & \dfrac{-s_3^* + s_2^*}{\sqrt{2}} & s_1^* \\[2mm] s_3 & \dfrac{-s_4 - vs_1}{\sqrt{2}} & vs_2 \end{pmatrix}$$

where $s_1$, $s_2$, $s_3$ and $s_4$ are the four input symbols and $v$ is the predetermined phase value.

**20.** The transmitter of claim 19, wherein $\nu$ is $e^{-j5\pi/12}$.

**21.** The transmitter of claim 12, wherein if the input symbols are 64QAM symbols, the transmission coding matrix is

$$U_9 = \begin{pmatrix} s_1 & \dfrac{s_2 + s_3}{\sqrt{2}} & s_4 \\[2ex] -s_2^* & \dfrac{s_1^* - \nu s_4^*}{\sqrt{2}} & \nu s_3^* \\[2ex] -s_4^* & \dfrac{-s_3^* + s_2^*}{\sqrt{2}} & s_1^* \\[2ex] s_3 & \dfrac{-s_4 - \nu s_1}{\sqrt{2}} & \nu s_2 \end{pmatrix}$$

where $s_1$, $s_2$, $s_3$ and $s_4$ are the four input symbols and $\nu$ is the predetermined phase value.

**22.** The transmitter of claim 21, wherein $\nu$ is $e^{-j7\pi/48}$.

**23.** A receiver for receiving modulation symbols whose phases are rotated once from a transmitter in a wireless communication system, comprising:

first and second decoders (340, 345) for detecting symbol pairs that minimize maximum likelihood (ML) decoding metrics over all possible symbol pairs using signals received by a receive antenna (310) from three transmit antennas for four time periods and channel gains from the transmit antennas to the receive antenna, wherein if the modulation symbols are BPSK (Binary Phase Shift Keying) symbols, the first and second decoders compute parameters

$$R_1 = \alpha^* r_1 + \beta \frac{1}{\sqrt{2}} r_2^* + \gamma r_3^* + j\beta^* \frac{1}{\sqrt{2}} r_4$$

$$R_3 = \gamma r_2^* - j\beta^* \frac{1}{\sqrt{2}} r_1 + \alpha^* r_4 - \beta^* \frac{1}{\sqrt{2}} r_3^*$$

$$R_{13} = \frac{j(C_1 + C_3)}{2}$$

$$C_1 = -\alpha^* \beta\sqrt{2} - \alpha\beta^* \sqrt{2}$$

$$C_3 = j\gamma^* \beta\sqrt{2} - j\gamma\beta^* \sqrt{2}$$

$$R_2 = \beta^* \frac{1}{\sqrt{2}} r_1 - \alpha \ddot{r}_2^* + j\beta \frac{1}{\sqrt{2}} r_3^* + \gamma^* r_4$$

$$R_4 = \ddot{\gamma}^* r_1 - j\beta \frac{1}{\sqrt{2}} \ddot{r}_2^* - \alpha \ddot{r}_3^* - \beta^{**} \frac{1}{\sqrt{2}} r_4$$

$$R_{24} = \frac{j(C_2 + C_4)}{2}$$

$$C_2 = \alpha \beta^* \sqrt{2} + \alpha^* \beta \sqrt{2}$$

$$C_4 = j\gamma \beta^* \sqrt{2} - j\gamma^* \beta \sqrt{2}$$

where $\alpha$, $\beta$ and $\gamma$ are the channel gains and r1, r2, r3 and r4 are the received signals, and the first and second decoders find symbol pairs $(x_1, x_3)$ and $(x_2, x_4)$ that minimize $|R_1 - x_1|^2 + |R_3 - x_3|^2 + |R_{13} - x_1{}^*x_3|^2$ and $|R_2 - x_2|^2 + |R_4 - x_4|^2 + |R_{24} - x_2{}^*x_4|^2$, respectively.

24. A receiver for receiving modulation symbols whose phases are rotated once from a transmitter in a wireless communication system, comprising:

first and second decoders (340, 345) for detecting symbol pairs that minimize maximum likelihood (ML) decoding metrics over all possible symbol pairs using signals received by a receive antenna (310) from three transmit antennas for four time periods and channel gains from the transmit antennas to the receive antenna, wherein if the modulation symbols are QPSK (Quadrature Phase Shift Keying) or 8PSK (8-ary PSK) symbols, the first and second decoders compute parameters

$$R_1 = \alpha^* r_1 + \beta \frac{1}{\sqrt{2}} \ddot{r}_2^* + \gamma \ddot{r}_3^* - v^{**} \beta^* \frac{1}{\sqrt{2}} r_4$$

$$R_3 = v\gamma \ddot{r}_2^* + \beta^{**} \frac{1}{\sqrt{2}} r_1 + \alpha^{**} r_4 - \beta \frac{1}{\sqrt{2}} \ddot{r}_3^*$$

$$R_{13} = -\frac{(C_1 + C_3)}{2}$$

$$C_1 = -\alpha^* \beta v \sqrt{2} + \alpha \beta^* \sqrt{2}$$

$$C_3 = \gamma \beta^* v \sqrt{2} - \gamma^* \beta \sqrt{2}$$

$$R_2 = \beta^* \frac{1}{\sqrt{2}} r_1 - \alpha r_2^* + \beta \frac{1}{\sqrt{2}} r_3^* + v^* \gamma^* r_4$$

$$R_4 = \gamma^* r_1 - v\beta \frac{1}{\sqrt{2}} r_2^* - \alpha r_3^* - \beta^* \frac{1}{\sqrt{2}} r_4$$

$$R_{24} = -\frac{(C_2 + C_4)}{2}$$

$$C_2 = -\alpha \beta^* \sqrt{2} + v\alpha^* \beta \sqrt{2}$$

$$C_4 = -v\gamma \beta^* \sqrt{2} + \gamma^* \beta \sqrt{2}$$

where $\alpha$, $\beta$ and $\gamma$ are the channel gains, r1, r2, r3 and r4 are the received signals, and $v$ is a phase value by which the transmitter rotates the phases of the symbols,
and the first and second decoders find symbol pairs $(x_1, x_3)$ and $(x_2, x_4)$ that minimize $|R_1 - x_1|^2 + |R_3 - x_3|^2 + |R_{13} - x_1{}^*x_3|^2$ and $|R_2 - x_2|^2 + |R_4 - x_4|^2 + |R_{24} - x_2{}^*x_4|^2$ , respectively.

25. A receiver for receiving modulation symbols whose phases are rotated once from a transmitter in a wireless communication system, comprising:

first and second decoders (340, 345) for detecting symbol pairs that minimize maximum likelihood (ML) decoding metrics over all possible symbol pairs using signals received by a receive antenna (310) from three transmit antennas for four time periods and channel gains from the transmit antennas to the receive antenna,
wherein if the modulation symbols are 16QAM (16-ary Quadrature Amplitude Modulation) or 64QAM (64-ary QAM) symbols, the first and second decoders compute parameters

$$R_1 = \frac{\left( \alpha^* r_1 + \beta \frac{1}{\sqrt{2}} r_2^* + \gamma r_3^* - v^* \beta^* \frac{1}{\sqrt{2}} r_4 \right)}{K_3}$$

$$R_3 = \frac{\left( v\gamma r_2^{**} + \beta^* \frac{1}{\sqrt{2}} r_1 + \alpha^* r_4 - \beta \frac{1}{\sqrt{2}} r_3^{**} \right)}{K_3}$$

$$R_{13} = -\frac{(C_1 + C_3)}{2K_3}$$

$$K_3 = |\alpha|^2 + |\beta|^2 + |\gamma|^2$$

$$C_1 = -\alpha^* \beta v \sqrt{2} + \alpha \beta^* \sqrt{2}$$

$$C_3 = \gamma \beta^* v \sqrt{2} - \gamma^* \beta \sqrt{2}$$

$$R_2 = \frac{\left( \beta^* \frac{1}{\sqrt{2}} r_1 - \alpha r_2^{**} + \beta \frac{1}{\sqrt{2}} r_3^{**} + v^* \gamma^* r_4 \right)}{K_3}$$

$$R_4 = \frac{\left( \gamma^* r_1 - v\beta \frac{1}{\sqrt{2}} r_2^* - \alpha r_3^* - \beta^* \frac{1}{\sqrt{2}} r_4 \right)}{K_3}$$

$$R_{24} = -\frac{(C_2 + C_4)}{2K_3}$$

$$C_2 = -\alpha \beta^* \sqrt{2} + v\alpha^* \beta \sqrt{2}$$

$$C_4 = -v\gamma \beta^* \sqrt{2} + \gamma^* \beta \sqrt{2}$$

where $\alpha$, $\beta$ and $\gamma$ are the channel gains, r1, r2, r3 and r4 are the received signals, and v is a phase value by which the transmitter rotates the phases of the symbols,
and the first and second decoders find symbol pairs $(x_1, x_3)$ and $(x_2, x_4)$ that minimize $|R_1 - x_1|^2 + |R_3 - x_3|^2 + |R_{13} - x_1{}^*x_3|^2 - |x_1|^2|x_3|^2$ and $|R_2 - x_2|^2 + |R_4 - x_4|^2 + |R_{24} - x_2{}^*x_4|^2 - |x_2|^2|x_4|^2$, respectively.

**26.** A receiver for receiving modulation symbols whose phases are rotated once from a transmitter in a wireless communication system, comprising:

first and second decoders (340, 345) for detecting symbol pairs that minimize maximum likelihood (ML) decoding metrics over all possible symbol pairs using signals received by a receive antenna (310) from four transmit antennas for four time periods and channel gains from the transmit antennas to the receive antenna, wherein if the modulation symbols are BPSK (Binary Phase Shift Keying) symbols, the first and second decoders compute parameters

$$R_1 = \alpha^* r_1 + \beta r_2^* + \zeta r_3^* + j\gamma^* r_4$$

$$R_3 = \zeta r_2^* - j\gamma^* r_1 + \alpha^* r_4 - \beta r_3^*$$

$$R_{13} = -(C_1 + C_3)$$

$$C_1 = j\alpha^* \gamma + j\alpha\gamma^*$$

$$C_3 = \zeta^* \beta - \zeta\beta^*$$

$$R_2 = \beta^* r_1 - \alpha r_2^* + j\gamma r_3^* + \zeta^* r_4$$

$$R_4 = \zeta^* r_1 - j\gamma r_2^* - \alpha r_3^* - \beta^* r_4$$

$$R_{24} = -(C_2 + C_4)$$

$$C_2 = \zeta\beta^* - \zeta^* \beta$$

$$C_4 = -j\alpha\gamma^* - j\gamma\alpha^*$$

where $\alpha$, $\beta$, $\gamma$ and $\zeta$ are the channel gains and r1, r2, r3 and r4 are the received signals, and the first and second decoders find symbol pairs $(x_1, x_3)$ and $(x_2, x_4)$ that minimize $|R_1 - x_1|^2 + |R_3 - x_3|^2 + |R_{13} - x_1{}^*x_3|^2$ and $|R_2 - x_2|^2 + |R_4 - x_4|^2 + |R_{24} - x_2{}^*x_4|^2$, respectively.

**27.** A receiver for receiving modulation symbols whose phases are rotated once from a transmitter in a wireless communication system, comprising:

first and second decoders (340, 345) for detecting symbol pairs that minimize maximum likelihood (ML) decoding metrics over all possible symbol pairs using signals received by a receive antenna (310) from four transmit antennas for four time periods and channel gains from the transmit antennas to the receive antenna, wherein if the modulation symbols are QPSK (Quadrature Phase Shift Keying) or 8PSK (8-ary PSK) symbols, the first and second decoders compute parameters

$$R_1 = \alpha^* r_1 + \beta r_2^* + \zeta r_3^* - v^* \gamma^* r_4$$

$$R_3 = v\zeta r_2^* + \gamma^* r_1 + \alpha^* r_4 - \beta r_3^*$$

$$R_{13} = -(C_1 + C_3)$$

$$C_1 = -\alpha^* \gamma v + \alpha \gamma^*$$

$$C_3 = \zeta \beta^* v - \zeta^* \beta$$

$$R_2 = \beta^* r_1 - \alpha r_2^* + \gamma r_3^* + v^* \zeta^* r_4$$

$$R_4 = \zeta^* r_1 - v\gamma r_2^* - \alpha r_3^* - \beta^* r_4$$

$$R_{24} = -(C_2 + C_4)$$

$$C_2 = -\alpha \gamma^* + v\alpha^* \gamma$$

$$C_4 = -v\zeta\beta^* + \zeta^*\beta$$

where $\alpha$, $\beta$, $\gamma$ and $\zeta$ are the channel gains, r1, r2, r3 and r4 are the received signals, and $v$ is a phase value by which the transmitter rotates the phases of the symbols,
and the first and second decoders find symbol pairs $(x_1, x_3)$ and $(x_2, x_4)$ that minimize $|R_1 - x_1|^2 + |R_3 - x_3|^2 + |R_{13} - x_1*x_3|^2$ and $|R_1 - x_2|^2 + |R_4 - x_4|^2 + |R_{24} - x_2*x_4|^2$, respectively.

28. A receiver for receiving modulation symbols whose phases are rotated once from a transmitter in a wireless communication system, comprising:

first and second decoders (340, 345) for detecting symbol pairs that minimize maximum likelihood (ML) decoding metrics over all possible symbol pairs using signals received by a receive antenna (310) from four transmit antennas for four time periods and channel gains from the transmit antennas to the receive antenna,
wherein if the modulation symbols are 16QAM (16-ary Quadrature Amplitude Modulation) or 64QAM (64-ary QAM) symbols, the first and second decoders compute parameters

$$R_1 = \frac{(\alpha^* r_1 + \beta r_2^* + \zeta r_3^* - v^* \gamma^* r_4)}{K_4}$$

$$R_3 = \frac{(v\zeta r_2^* + \gamma^* r_1 + \alpha^* r_4 - \beta r_3^*)}{K_4}$$

$$R_{13} = -\frac{(C_1 + C_3)}{K_4}$$

$$K_4 = |\alpha|^2 + |\beta|^2 + |\gamma|^2$$

$$C_1 = -\alpha^* \gamma v + \alpha \gamma^*$$

$$C_3 = \zeta\beta^* v - \zeta^*\beta$$

$$R_2 = \frac{(\beta^* r_1 - \alpha r_2^* + \gamma r_3^* + v^* \zeta^* r_4)}{K_4}$$

$$R_4 = \frac{(\zeta^* r_1 - v\gamma r_2^* - \alpha r_3^* - \beta^* r_4)}{K_4}$$

$$R_{24} = -\frac{(C_2 + C_4)}{K_4}$$

$$C_2 = -\alpha\gamma^* + v\alpha^*\gamma$$

$$C_4 = -v\zeta\beta^* + \zeta^*\beta$$

where $\alpha$, $\beta$, $\gamma$ and $\zeta$ are the channel gains, r1, r2, r3 and r4 are the received signals, and $v$ is a phase value by which the transmitter rotates the phases of the symbols,

and the first and second decoders find symbol pairs $(x_1, x_3)$ and $(x_2, x_4)$ that minimize $|R_1 - x_1|^2 + |R_3 - x_3|^2 + |R_{13} - x_1^*x_3|^2 - |x_1|^2|x_3|^2$ and $|R_2 - x_2|^2 + |R_4 - x_4|^2 + |R_{24} - x_2^*x_4|^2 - |x_2|^2|x_4|^2$, respectively.

29. A receiver for receiving PSK (Phase Shift Keying) modulation symbols whose phases are rotated once from a transmitter in a wireless communication system, comprising:

first and second decoders (540, 545) for selecting candidate symbol pairs among all possible symbol pairs using signals received by a receive antenna (510) from three transmit antennas for four time periods and channel gains from the transmit antennas to the receive antenna, and detecting symbol pairs that minimize maximum likelihood (ML) decoding metrics over the candidate symbol pairs, wherein the first and second decoders compute parameters

$$R_1 = \alpha^* r_1 + \beta \frac{1}{\sqrt{2}} r_2^* + \gamma r_3^* - v^* \beta^* \frac{1}{\sqrt{2}} r_4$$

$$R_3 = v\gamma r_2^* + \beta^* \frac{1}{\sqrt{2}} r_1 + \alpha^* r_4 - \beta \frac{1}{\sqrt{2}} r_3^*$$

$$R_{13} = -\frac{(C_1 + C_3)}{2}$$

$$C_1 = -\alpha^* \beta v \sqrt{2} + \alpha\beta^* \sqrt{2}$$

$$C_3 = \gamma\beta^* v\sqrt{2} - \gamma^*\beta\sqrt{2}$$

$$R_2 = \beta^* \frac{1}{\sqrt{2}} r_1 - \alpha r_2^* + \beta \frac{1}{\sqrt{2}} r_3^* + v^* \gamma^* r_4$$

$$R_4 = \gamma^* r_1 - v\beta \frac{1}{\sqrt{2}} r_2^* - \alpha r_3^* - \beta^* \frac{1}{\sqrt{2}} r_4$$

$$R_{24} = -\frac{(C_2 + C_4)}{2}$$

$$C_2 = -\alpha\beta^*\sqrt{2} + v\alpha^*\beta\sqrt{2}$$

$$C_4 = -v\gamma\beta^*\sqrt{2} + \gamma^*\beta\sqrt{2}$$

where $\alpha$, $\beta$ and $\gamma$ are the channel gains and r1, r2, r3 and r4 are the received signals, and $v$ is a phase value by which the transmitter rotates the phases of the symbols, and the first and second decoders find all possible symbol pairs $(x_1, x_3)$ and $(x_2, x_4)$ as the candidate symbol pairs, symbols $x_3$ and $x_4$ being constellation points closest to $R_3 + x_1 R_{13}$ and $R_4 + x_2 R_{24}$, respectively.

**30.** A receiver for receiving QAM (Quadrature Amplitude Modulation) modulation symbols whose phases are rotated once from a transmitter in a wireless communication system, comprising:

first and second decoders (540, 545) for selecting candidate symbol pairs among all possible symbol pairs using signals received by a receive antenna (510) from three transmit antennas for four time periods and channel gains from the transmit antennas to the receive antenna, and detecting symbol pairs that minimize maximum likelihood (ML) decoding metrics over the candidate symbol pairs,
wherein the first and second decoders compute parameters

$$R_1 = \frac{\left( \alpha^* r_1 + \beta \frac{1}{\sqrt{2}} r_2^* + \gamma r_3^* - v^* \beta^* \frac{1}{\sqrt{2}} r_4 \right)}{K_3}$$

$$R_3 = \frac{\left( v\gamma r_2^* + \beta^* \frac{1}{\sqrt{2}} r_1 + \alpha^* r_4 - \beta \frac{1}{\sqrt{2}} r_3^* \right)}{K_3}$$

$$R_{13} = -\frac{(C_1 + C_3)}{2K_3}$$

$$K_3 = |\alpha|^2 + |\beta|^2 + |\gamma|^2$$

$$C_1 = -\alpha^* \beta \nu \sqrt{2} + \alpha \beta^* \sqrt{2}$$

$$C_3 = \gamma \beta^* \nu \sqrt{2} - \gamma^* \beta \sqrt{2}$$

$$R_2 = \frac{\left( \beta^* \frac{1}{\sqrt{2}} r_1 - \alpha r_2^* + \beta \frac{1}{\sqrt{2}} r_3^* + \nu^* \gamma^* r_4 \right)}{K_3}$$

$$R_4 = \frac{\left( \gamma^* r_1 - \nu \beta \frac{1}{\sqrt{2}} r_2^* - \alpha r_3^* - \beta^* \frac{1}{\sqrt{2}} r_4 \right)}{K_3}$$

$$R_{24} = -\frac{(C_2 + C_4)}{2K_3}$$

$$C_2 = -\alpha \beta^* \sqrt{2} + \nu \alpha^* \beta \sqrt{2}$$

$$C_4 = -\nu \gamma \beta^* \sqrt{2} + \gamma^* \beta \sqrt{2}$$

where $\alpha$, $\beta$, $\gamma$ and $\zeta$ are the channel gains, r1, r2, r3 and r4 are the received signals, and $\nu$ is a phase value by which the transmitter rotates the phases of the symbols,

and the first and second decoders find all possible symbol pairs $(x_1, x_3)$ and $(x_2, x_4)$ as the candidate symbol pairs, symbols $x_3$ and $x_4$ being the constellation points closest to $R_3 + x_1 R_{13}$ and $R_4 + x_2 R_{24}$, respectively.

**31.** A receiver for receiving PSK (Phase Shift Keying) modulation symbols whose phases are rotated once from a transmitter in a wireless communication system, comprising:

first and second decoders (540, 545) for selecting candidate symbol pairs among all possible symbol pairs using signals received by a receive antenna (510) from four transmit antennas for four time periods and channel gains from the transmit antennas to the receive antenna, and detecting symbol pairs that minimize maximum likelihood (ML) decoding metrics over the candidate symbol pairs,
wherein the first and second decoders compute parameters

$$R_1 = \alpha^* r_1 + \beta r_2^* + \zeta r_3^* - v^* \gamma^* r_4$$

$$R_3 = v\zeta r_2^* + \gamma^* r_1 + \alpha^* r_4 - \beta r_3^*$$

$$R_{13} = -(C_1 + C_3)$$

$$C_1 = -\alpha^* \gamma v + \alpha\gamma^*$$

$$C_3 = \zeta\beta^* v - \zeta^* \beta$$

$$R_2 = \beta^* r_1 - \alpha r_2^* + \gamma r_3^* + v^* \zeta^* r_4$$

$$R_4 = \zeta^* r_1 - v\gamma r_2^* - \alpha r_3^* - \beta^* r_4$$

$$R_{24} = -(C_2 + C_4)$$

$$C_2 = -\alpha\gamma^* + v\alpha^* \gamma$$

$$C_4 = -v\zeta\beta^* + \zeta^* \beta$$

where $\alpha$, $\beta$, $\gamma$ and $\zeta$ are the channel gains, r1, r2, r3 and r4 are the received signals, and v is a phase value by which the transmitter rotates the phases of the symbols,
and the first and second decoders find all possible symbol pairs $(x_1, x_3)$ and $(x_2, x_4)$ as the candidate symbol

pairs, symbols $x_3$ and $x_4$ being the constellation points closest to $R_3+x_1R_{13}$ and $R_4+x_2R_{24}$, respectively.

**32.** A receiver for receiving QAM (Quadrature Amplitude Modulation) modulation symbols whose phases are rotated once from a transmitter in a wireless communication system, comprising:

first and second decoders (540, 545) for selecting candidate symbol pairs among all possible symbol pairs using signals received by a receive antenna (510) from four transmit antennas for four time periods and channel gains from the transmit antennas to the receive antenna, and detecting symbol pairs that minimize maximum likelihood (ML) decoding metrics over the candidate symbol pairs,
wherein the first and second decoders compute parameters

$$R_1 = \frac{\left(\alpha^* r_1 + \beta r_2^* + \zeta r_3^* - v^* \gamma^* r_4\right)}{K_4}$$

$$R_3 = \frac{\left(v\zeta r_2^* + \gamma^* r_1 + \alpha^* r_4 - \beta r_3^*\right)}{K_4}$$

$$R_{13} = -\frac{(C_1 + C_3)}{K_4}$$

$$K_4 = |\alpha|^2 + |\beta|^2 + |\gamma|^2$$

$$C_1 = -\alpha^* \gamma v + \alpha \gamma^*$$

$$C_3 = \zeta \beta^* v - \zeta^* \beta$$

$$R_2 = \frac{\left(\beta^* r_1 - \alpha r_2^* + \gamma r_3^* + v^* \zeta^* r_4\right)}{K_4}$$

$$R_4 = \frac{\left(\zeta^* r_1 - v\gamma r_2^* - \alpha r_3^* - \beta^* r_4\right)}{K_4}$$

$$R_{24} = -\frac{(C_2 + C_4)}{K_4}$$

$$C_2 = -\alpha\gamma^* + v\alpha^*\gamma$$

$$C_4 = -v\zeta\beta^* + \zeta^*\beta$$

where $\alpha$, $\beta$, $\gamma$ and $\zeta$ are the channel gains, r1, r2, r3 and r4 are the received signals, and $v$ is a phase value by which the transmitter rotates the phases of the symbols,
and the first and second decoders find all possible symbol pairs $(x_1, x_3)$ and $(x_2, x_4)$ as the candidate symbol pairs, symbols $x_3$ and $x_4$ being the constellation points closest to $R_3 + x_1 R_{13}$ and $R_4 + x_2 R_{24}$, respectively.

**33.** A receiver for receiving PSK (Phase Shift Keying) modulation symbols whose phases are rotated once from a transmitter in a wireless communication system, comprising:

first and second decoders (540, 545) for selecting candidate symbol pairs among all possible symbol pairs using signals received by a receive antenna (510) from three transmit antennas for four time periods and channel gains from the transmit antennas to the receive antenna, and detecting symbol pairs that minimize maximum likelihood (ML) decoding metrics over the candidate symbol pairs,
wherein the first decoder computes

$$R_1 = \alpha^* r_1 + \beta \frac{1}{\sqrt{2}} r_2^* + \gamma r_3^* - v^* \beta^* \frac{1}{\sqrt{2}} r_4$$

$$R_3 = v\gamma r_2^* + \beta^* \frac{1}{\sqrt{2}} r_1 + \alpha^* r_4 - \beta \frac{1}{\sqrt{2}} r_3^*$$

$$R_{13} = -\frac{(C_1 + C_3)}{2}$$

$$C_1 = -\alpha^* \beta v\sqrt{2} + \alpha\beta^* \sqrt{2}$$

$$C_3 = \gamma\beta^* v\sqrt{2} - \gamma^* \beta\sqrt{2}$$

where $\alpha$, $\beta$ and $\gamma$ are the channel gains, r1, r2, r3 and r4 are the received signals, and $v$ is a predetermined

phase value by which the transmitter rotates the phases of the symbols, outputs a symbol pair $(x_1, x_3)$ if $x_1^*x_3 = x_{13}$, $x_1$ being the closest symbol to $R_1$, $x_3$ being the closest symbol to $R_3$, and $x_{13}$ being the closest symbol to $R_{13}$, and if $x_1^*x_3 \neq x_{13}$, computes an angle $\Phi_d$ by dividing the angle between $x_{13}$ and $x_1^*x_3$ by 2 and selects symbols whose angles are within $\Phi_d$ from $x_1$ and $x_3$, respectively, as the candidate symbols, and the second decoder computes

$$R_2 = \beta^* \frac{1}{\sqrt{2}} \, r_1^* - \alpha r_2^* + \beta \frac{1}{\sqrt{2}} \, r_3^* + v^* \gamma^* r_4$$

$$R_4 = \gamma^* r_1^* - v\beta \frac{1}{\sqrt{2}} \, r_2^* - \alpha r_3^* - \beta^* \frac{1}{\sqrt{2}} \, r_4$$

$$R_{24} = -\frac{(C_2 + C_4)}{2}$$

$$C_2 = -\alpha\beta^* \sqrt{2} + v\alpha^* \beta \sqrt{2}$$

$$C_4 = -v\gamma\beta^* \sqrt{2} + \gamma^* \beta \sqrt{2}$$

where $\alpha$, $\beta$ and $\gamma$ are the channel gains, r1, r2, r3 and r4 are the received signals, and $v$ is the predetermined phase value by which the transmitter rotates the phases of the symbols, outputs a symbol pair $(x_2, x_4)$ if $x_2^*x_4 = x_{24}$, $x_2$ being the closest symbol to $R_2$, $x_4$ being the closest symbol to $R_4$, and $x_{24}$ being the closest symbol to $R_{24}$, and if $x_2^*x_4 \neq x_{13}$, computes an angle $\Phi_d'$ by dividing the angle between $x_{24}$ and $x_2^*x_4$ by 2 and selects symbols whose angles are within $\Phi_d'$ from $x_2$ and $x_4$, respectively, as the candidate symbols.

**34.** A receiver for receiving PSK (Phase Shift Keying) modulation symbols whose phases are rotated once from a transmitter in a wireless communication system, comprising:

first and second decoders (540, 545) for selecting candidate symbol pairs among all possible symbol pairs using signals received by a receive antenna (510) from four transmit antennas for four time periods and channel gains from the transmit antennas to the receive antenna, and detecting symbol pairs that minimize maximum likelihood (ML) decoding metrics over the candidate symbol pairs, wherein the first decoder computes

$$R_1 = \alpha^* r_1 + \beta r_2^* + \zeta r_3^* - v^* \gamma^* r_4$$

$$R_3 = v\zeta r_2^* + \gamma^* r_1 + \alpha^* r_4 - \beta r_3^*$$

$$R_{13} = -(C_1 + C_3)$$

$$C_1 = -\alpha^* \gamma v + \alpha \gamma^*$$

$$C_3 = \zeta \beta^* v - \zeta^* \beta$$

where $\alpha$, $\beta$, $\gamma$ and $\zeta$ are the channel gains, r1, r2, r3 and r4 are the received signals, and $v$ is a predetermined phase value by which the transmitter rotates the phases of the symbols,

outputs a symbol pair $(x_1, x_3)$ if $x_1^* x_3 = x_{13}$, $x_1$ being the closest symbol to $R_1$, $x_3$ being the closest symbol to $R_3$, and $x_{13}$ being the closest symbol to $R_{13}$, and if $x_1^* x_3 \neq x_{13}$, computes an angle $\Phi_d$ by dividing the angle between $x_{13}$ and $x_1^* x_3$ by 2 and selects symbols whose angles are within $\Phi_d$ from $x_1$ and $x_3$, respectively, as the candidate symbols,

and the second decoder computes

$$R_2 = \beta^* r_1 - \alpha r_2^* + \gamma r_3^* + v^* \zeta^* r_4$$

$$R_4 = \zeta^* r_1 - v\gamma r_2^* - \alpha r_3^* - \beta^* r_4$$

$$R_{24} = -(C_2 + C_4)$$

$$C_2 = -\alpha \gamma^* + v \alpha^* \gamma$$

$$C_4 = -v \zeta \beta^* + \zeta^* \beta$$

where $\alpha$, $\beta$, $\gamma$ and $\zeta$ are the channel gains, r1, r2, r3 and r4 are the received signals, and $v$ is the predetermined phase value by which the transmitter rotates the phases of the symbols,

outputs a symbol pair $(x_2, x_4)$ if $x_2^* x_4 = x_{24}$, $x_2$ being the closest symbol to $R_2$, $x_4$ being the closest symbol to $R_4$, and $x_{24}$ being the closest symbol to $R_{24}$, and if $x_2^* x_4 \neq x_{13}$, computes an angle $\Phi_d'$ by dividing the angle between $x_{24}$ and $x_2^* x_4$ by 2 and selects symbols whose angles are within $\Phi_d'$ from $x_2$ and $x_4$, respectively as the candidate symbols.

**Patentansprüche**

1. Sender zum Senden von Modulationssymbolen in einem drahtlosen Kommunikationssystem mit:

einer Anzahl von Sendeantennen (140a, 140b, 140c, 140d) zum Erzielen von Sendediversität und
einem Raum-Zeit-Kodierer (120) zum Kodieren einer Anzahl von Eingabesymbolen in eine Anzahl von Symbolkombinationen, um die Eingabesymbole einmal von jeder Sendeantenne zu jeder Zeitspanne zu senden, unter Verwendung einer Sendekodiermatrix mit Reihen, die Sendezeitspannen entsprechen, und Spalten, die Sendeantennen entsprechen, und zum Ausgeben der Symbolkombinationen an die Sendeantennen während der Sendezeitspannen, wobei die Symbolkombinationen orthogonale Symbole in mindestens zwei Reihen, Inversionen und Konjugierte der Eingabesymbole aufweisen, und
einem Phasendrehteil (130a, 130b) zum Drehen der Phasen einiger der Symbolkombinationen, die von dem Raum-Zeit-Kodierer ausgegeben werden, unter Verwendung der Sendekodiermatrix,
**dadurch gekennzeichnet, dass**, falls die Zahl der Sendeantennen 4 beträgt,
der Raum-Zeit-Kodierer (120) eine Sendekodiermatrix mit vier Zeilen und vier Spalten aus vier Eingabesymbolen und den Inversionen und den Konjugierten der vier Symbole erzeugt, und
der Phasendrehteil (130a, 130b) selektiv die Phasen von Symbolen in zumindest zwei der Spalten der Sendekodiermatrix um einen vorbestimmten Phasenwert dreht.

2. Sender nach Anspruch 1, wobei die Sendekodiermatrix eine von

$$
\begin{bmatrix} s_1 & s_2 & s_3^* & s_4^* \\ s_2^* & -s_1^* & s_4 & -s_3 \\ s_3 & s_4 & -s_1^* & -s_2^* \\ s_4^* & -s_3^* & -s_2 & s_1 \end{bmatrix}
\begin{bmatrix} s_1 & s_2 & s_3^* & -s_4^* \\ s_2^* & -s_1^* & s_4 & s_3 \\ s_3 & s_4 & -s_1^* & s_2^* \\ s_4^* & -s_3^* & -s_2 & -s_1 \end{bmatrix}
\begin{bmatrix} s_1 & s_2 & s_3^* & -s_4^* \\ s_2^* & -s_1^* & -s_4 & -s_3 \\ s_3 & s_4 & -s_1^* & s_2^* \\ s_4^* & -s_3^* & s_2 & s_1 \end{bmatrix}
\begin{bmatrix} s_1 & s_2 & s_3^* & s_4^* \\ s_2^* & -s_1^* & -s_4 & s_3 \\ s_3 & s_4 & -s_1^* & -s_2^* \\ s_4^* & -s_3^* & s_2 & -s_1 \end{bmatrix}
$$

$$
\begin{bmatrix} s_1 & s_2 & -s_3^* & -s_4^* \\ s_2^* & -s_1^* & s_4 & -s_3 \\ s_3 & s_4 & s_1^* & s_2^* \\ s_4^* & -s_3^* & -s_2 & s_1 \end{bmatrix}
\begin{bmatrix} s_1 & s_2 & -s_3^* & s_4^* \\ s_2^* & -s_1^* & s_4 & s_3 \\ s_3 & s_4 & s_1^* & -s_2^* \\ s_4^* & -s_3^* & -s_2 & -s_1 \end{bmatrix}
\begin{bmatrix} s_1 & s_2 & -s_3^* & -s_4^* \\ s_2^* & -s_1^* & -s_4 & s_3 \\ s_3 & s_4 & s_1^* & s_2^* \\ s_4^* & -s_3^* & s_2 & -s_1 \end{bmatrix}
\begin{bmatrix} s_1 & s_2 & -s_3^* & s_4^* \\ s_2^* & -s_1^* & -s_4 & -s_3 \\ s_3 & s_4 & s_1^* & -s_2^* \\ s_4^* & -s_3^* & s_2 & s_1 \end{bmatrix}
$$

ist, wobei $s_1$, $s_2$, $s_3$ und $s_4$ die vier Eingabesymbole sind.

3. Sender nach Anspruch 1, wobei, falls die Eingabesymbole BPSK Symbole (Binary Phase Shift Keying; Binärphasenverschiebungskodierung) sind, die Sendekodiermatrix

$$
U_2 = \begin{pmatrix} s_1 & s_2 & js_3 & s_4 \\ -s_2^* & s_1^* & -js_4^* & s_3^* \\ -s_4^* & -s_3^* & js_2^* & s_1^* \\ s_3 & -s_4 & -js_1 & s_2 \end{pmatrix}
$$

ist, wobei $s_1$, $s_2$, $s_3$ und $s_4$ die vier Eingabesymbole sind.

4. Sender nach Anspruch 1, wobei, wenn die Eingabesymbole QPSK-Symbole (Quadrature Phase Shift Keying; Quadaraturphasenverschiebungskodierung) sind, die Sendekodiermatrix

$$U_4 = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

ist, wobei $s_1$, $s_2$, $s_3$ und $s_4$ die vier Eingabesymbole sind und $v$ der vorgegebene Phasenwert ist.

5. Sender nach Anspruch 4, wobei $v$ $e^{-j2\pi/3}$ ist.

6. Sender nach Anspruch 1, wobei, wenn die Sendesymbole 8PSK-Symbole (achtfache Phasenverschiebungskodierung) sind, die Sendekodiermatrix

$$U_6 = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

ist, wobei $s_1$, $s_2$, $s_3$ und $s_4$ die vier Eingabesymbole sind und $v$ der vorgegebene Phasenwert ist.

7. Sender nach Anspruch 6, wobei $v$ $e^{-j5\pi/6}$ ist.

8. Sender nach Anspruch 1, wobei, falls die Eingangssymbole 16QAM-Symbole (16-fache Quadraturamplitudenmodulation) sind, die Sendekodiermatrix

$$U_8 = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

ist, wobei $s_1$, $s_2$, $s_3$ und $s_4$ die vier Eingabesymbole sind und $v$ der vorgegebene Phasenwert ist.

9. Sender nach Anspruch 8, wobei $v$ $e^{-j5\pi/12}$ ist.

10. Sender nach Anspruch 1, wobei, falls die Eingabesymbole 64QAM-Symbole (64-fache Quadraturamplitudenmodulation) sind, die Sendekodiermatrix

$$U_{10} = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

ist, wobei $s_1$, $s_2$, $s_3$ und $s_4$ die vier Eingabesymbole sind und $v$ der vorgegebene Phasenwert ist.

**11.** Sender nach Anspruch 10, wobei $v$ $e^{-j7\pi/48}$ ist.

**12.** Sender zum Senden von Modulationssymbolen in einem drahtlosen Kommunikationssystem mit:

einer Anzahl von Sendeantennen (250a, 250b, 250c) zum Erzielen von Sendediversität und
einem Raum-Zeit-Kodierer (220) zum Kodieren einer Anzahl von Eingangssymbolen in eine Anzahl von Symbolkombinationen, zum Senden der Eingangssymbole einmal von jeder Sendeantenne zu jeder Zeitdauer unter Verwendung einer Sendekodiermatrix mit Reihen, die Sendezeitspannen entsprechen, und Spalten, die Sendeantennen entsprechen, und Ausgeben der Symbolkombinationen an die Sendeantennen während der Sendezeitspannen, wobei die Symbolkombinationen orthogonale Symbole in mindestens zwei Reihen, Inversionen und Konjugierte der Eingabesymbole aufweisen, und
einem Phasendrehteil (230a, 230b) zum Drehen der Phasen einiger der Symbolkombinationen, die von dem Raum-Zeit-Kodierer ausgegeben werden, unter Verwendung der Sendekodiermatrix,
**dadurch gekennzeichnet, dass,** falls die Zahl der Sendeantennen 3 beträgt,
der Raum-Zeit-Kodierer (220) eine Sendekodiermatrix mit vier Reihen und vier Spalten aus vier Eingangssymbolen erzeugt und die Inversionen und Konjugierten der vier Eingangssymbole, und
der Phasendrehteil (230a, 230b) selektiv die Phasen von Symbolen in zumindest zwei der Spalten der Sendekodiermatrix um einen vorgegebenen Phasenwert dreht,
wobei der Sender ferner einen Spaltengenerator (240) aufweist zum Erzeugen einer neuen Spalte durch Summieren der Symbole der ausgewählten zwei Spalten, die phasengedrehte Symbole enthalten, und Ersetzen der ausgewählten zwei Spalten mit der neuen Spalte, wodurch die Sendekodiermatrix mit vier Zeilen und drei Spalten erzeugt wird.

**13.** Sender nach Anspruch 12, wobei die Sendekodiermatrix, die von dem Raum-Zeit-Kodierer (220) erzeugt wird, eine von

$$\begin{bmatrix} s_1 & s_2 & s_3^* & s_4^* \\ s_2^* & -s_1^* & s_4 & -s_3 \\ s_3 & s_4 & -s_1^* & -s_2^* \\ s_4^* & -s_3^* & -s_2 & s_1 \end{bmatrix} \begin{bmatrix} s_1 & s_2 & s_3^* & -s_4^* \\ s_2^* & -s_1^* & s_4 & s_3 \\ s_3 & s_4 & -s_1^* & s_2^* \\ s_4^* & -s_3^* & -s_2 & -s_1 \end{bmatrix} \begin{bmatrix} s_1 & s_2 & s_3^* & -s_4^* \\ s_2^* & -s_1^* & -s_4 & -s_3 \\ s_3 & s_4 & -s_1^* & s_2^* \\ s_4^* & -s_3^* & s_2 & s_1 \end{bmatrix} \begin{bmatrix} s_1 & s_2 & s_3^* & s_4^* \\ s_2^* & -s_1^* & -s_4 & s_3 \\ s_3 & s_4 & -s_1^* & -s_2^* \\ s_4^* & -s_3^* & s_2 & -s_1 \end{bmatrix}$$

$$\begin{bmatrix} s_1 & s_2 & -s_3^* & -s_4^* \\ s_2^* & -s_1^* & s_4 & -s_3 \\ s_3 & s_4 & s_1^* & s_2^* \\ s_4^* & -s_3^* & -s_2 & s_1 \end{bmatrix} \begin{bmatrix} s_1 & s_2 & -s_3^* & s_4^* \\ s_2^* & -s_1^* & s_4 & s_3 \\ s_3 & s_4 & s_1^* & -s_2^* \\ s_4^* & -s_3^* & -s_2 & -s_1 \end{bmatrix} \begin{bmatrix} s_1 & s_2 & -s_3^* & -s_4^* \\ s_2^* & -s_1^* & -s_4 & s_3 \\ s_3 & s_4 & s_1^* & s_2^* \\ s_4^* & -s_3^* & s_2 & -s_1 \end{bmatrix} \begin{bmatrix} s_1 & s_2 & -s_3^* & s_4^* \\ s_2^* & -s_1^* & -s_4 & -s_3 \\ s_3 & s_4 & s_1^* & -s_2^* \\ s_4^* & -s_3^* & s_2 & s_1 \end{bmatrix}$$

ist, wobei $s_1$, $s_2$, $s_3$ und $s_4$ die vier Eingabesymbole sind.

**14.** Sender nach Anspruch 12, wobei, falls die Eingabesymbole BPSK-Symbole sind, die Sendekodiermatrix

$$U_1 = \begin{pmatrix} s_1 & \dfrac{s_2 + js_3}{\sqrt{2}} & s_4 \\[2ex] -s_2^* & \dfrac{s_1^* - js_4^*}{\sqrt{2}} & s_3^* \\[2ex] -s_4^* & \dfrac{-s_3^* + js_2^*}{\sqrt{2}} & s_1^* \\[2ex] s_3 & \dfrac{-s_4 - js_1}{\sqrt{2}} & s_2 \end{pmatrix}$$

ist, wobei $s_1$, $s_2$, $s_3$ und $s_4$ die vier Eingabesymbole sind.

**15.** Sender nach Anspruch 12, wobei, falls die Eingabesymbole QPSK-Symbole sind, die Sendekodiermatrix

$$U_3 = \begin{pmatrix} s_1 & \dfrac{s_2 + s_3}{\sqrt{2}} & s_4 \\[2ex] -s_2^* & \dfrac{s_1^* - v s_4^*}{\sqrt{2}} & v s_3^* \\[2ex] -s_4^* & \dfrac{-s_3^* + s_2^*}{\sqrt{2}} & s_1^* \\[2ex] s_3 & \dfrac{-s_4 - v s_1}{\sqrt{2}} & v s_2 \end{pmatrix}$$

ist, wobei $s_1$, $s_2$, $s_3$ und $s_4$ die vier Eingabesymbole sind und $v$ der vorgegebenen Phasenwert ist.

**16.** Sender nach Anspruch 15, wobei $v$ $e^{-j2\pi/3}$ ist.

**17.** Sender nach Anspruch 12, wobei, falls die Eingabesymbole 8PSK-Symbole sind, die Sendekodiermatrix

$$U_5 = \begin{pmatrix} s_1 & \dfrac{s_2 + s_3}{\sqrt{2}} & s_4 \\[2ex] -s_2^* & \dfrac{s_1^* - v s_4^*}{\sqrt{2}} & v s_3^* \\[2ex] -s_4^* & \dfrac{-s_3^* + s_2^*}{\sqrt{2}} & s_1^* \\[2ex] s_3 & \dfrac{-s_4 - v s_1}{\sqrt{2}} & v s_2 \end{pmatrix}$$

ist, wobei $s_1$, $s_2$, $s_3$ und $s_4$ die vier Eingabesymbole sind und $v$ der vorgegebenen Phasenwert ist.

**18.** Sender nach Anspruch 17, wobei $v$ $e^{-j5\pi/6}$ ist.

**19.** Sender nach Anspruch 12, wobei, falls die Eingabesymbole 16QAM-Symbole sind, die Sendekodiermatrix

$$U_7 = \begin{pmatrix} s_1 & \dfrac{s_2 + s_3}{\sqrt{2}} & s_4 \\ -s_2^* & \dfrac{s_1^* - v s_4^*}{\sqrt{2}} & v s_3^* \\ -s_4^* & \dfrac{-s_3^* + s_2^*}{\sqrt{2}} & s_1^* \\ s_3 & \dfrac{-s_4 - v s_1}{\sqrt{2}} & v s_2 \end{pmatrix}$$

ist, wobei $s_1$, $s_2$, $s_3$ und $s_4$ die vier Eingabesymbole sind und $v$ der vorgegebenen Phasenwert ist.

**20.** Sender nach Anspruch 19, wobei $v$ $e^{-j5\pi/12}$ ist.

**21.** Sender nach Anspruch 12, wobei, falls die Eingabesymbole 64QAM-Symbole sind, die Sendekodiermatrix

$$U_9 = \begin{pmatrix} s_1 & \dfrac{s_2 + s_3}{\sqrt{2}} & s_4 \\ -s_2^* & \dfrac{s_1^* - v s_4^*}{\sqrt{2}} & v s_3^* \\ -s_4^* & \dfrac{-s_3^* + s_2^*}{\sqrt{2}} & s_1^* \\ s_3 & \dfrac{-s_4 - v s_1}{\sqrt{2}} & v s_2 \end{pmatrix}$$

ist, wobei $s_1$, $s_2$, $s_3$ und $s_4$ die vier Eingabesymbole sind und $v$ der vorgegebenen Phasenwert ist.

**22.** Sender nach Anspruch 21, wobei $v$ $e^{-j7\pi/48}$ ist.

**23.** Empfänger zum Empfangen von Modulationssymbolen, deren Phasen einmal von einem Sender in einem drahtlosen Kommunikationssystem gedreht wurden, mit:

einem ersten und einem zweiten Decoder (340, 345) zum Detektieren von Symbolpaaren, die Maximalwahrscheinlichkeit-(ML)-Dekodiermetriken über alle mögliche Symbolpaare minimieren unter Verwendung von Signalen, die durch eine Empfangsantenne (310) von drei Sendeantennen für vier Zeitspannen empfangen werden, und Kanalverstärkungen von den Sendeantennen zu der Empfangsantenne,
wobei, falls die Modulationssymbole BPSK-Symbole (Binärphasenverschiebungskodierung) sind, der erste und der zweite Decoder Parameter

$$R_1 = \alpha^* r_1 + \beta \frac{1}{\sqrt{2}} r_2^* + \gamma r_3^* + j\beta^* \frac{1}{\sqrt{2}} r_4$$

$$R_3 = \gamma \overset{**}{r}_2 - j\beta \overset{*}{\phantom{.}} \frac{1}{\sqrt{2}} \, r_1 + \alpha \overset{*}{\phantom{.}} r_4 - \beta \overset{*}{\phantom{.}} \frac{1}{\sqrt{2}} \, \overset{**}{r}_3$$

$$R_{13} = \frac{j(C_1 + C_3)}{2}$$

$$C_1 = -\alpha \overset{*}{\phantom{.}} \beta \sqrt{2} - \alpha \beta \overset{*}{\phantom{.}} \sqrt{2}$$

$$C_3 = j\gamma \overset{*}{\phantom{.}} \beta \sqrt{2} - j\gamma \beta \overset{*}{\phantom{.}} \sqrt{2}$$

$$R_2 = \beta \overset{*}{\phantom{.}} \frac{1}{\sqrt{2}} \, r_1 - \alpha \overset{**}{r}_2 + j\beta \frac{1}{\sqrt{2}} \, \overset{**}{r}_3 + \gamma \overset{*}{\phantom{.}} r_4$$

$$R_4 = \gamma \overset{*}{\phantom{.}} r_1 - j\beta \frac{1}{\sqrt{2}} \, \overset{**}{r}_2 - \alpha \overset{**}{r}_3 - \beta \overset{*}{\phantom{.}} \frac{1}{\sqrt{2}} \, \overset{*}{r}_4$$

$$R_{24} = \frac{j(C_2 + C_4)}{2}$$

$$C_2 = \alpha \beta \overset{*}{\phantom{.}} \sqrt{2} + \alpha \overset{*}{\phantom{.}} \beta \sqrt{2}$$

$$C_4 = j\gamma \beta \overset{*}{\phantom{.}} \sqrt{2} - j\gamma \overset{*}{\phantom{.}} \beta \sqrt{2}$$

berechnen, wobei $\alpha$, $\beta$ und $\gamma$ die Kanalverstärkungen sind, r1, r2, r3 und r4 die Empfangssignale sind, und der erste und der zweite Decoder Symbolpaare $(x_1, x_3)$ und $(x_2, x_4)$ finden, die $|R_1 - x_1|^2 + |R_3 - x_3|^2 + |R_{13} - x_1{}^* x_3|^2$ bzw. $|R_2 - x_2|^2 + |R_4 - x_4|^2 + |R_{24} - x_2{}^* x_4|^2$ minimieren.

24. Empfänger zum Empfangen von Modulationssymbolen, deren Phasen einmal von einem Sender in einem drahtlosen Kommunikationssystem gedreht wurden, mit:

einem ersten und einem zweiten Decoder (340, 345) zum Erfassen von Symbolpaaren, die Maximalwahrscheinlichkeits-(ML)-Dekodiermetriken über alle möglichen Symbolpaare unter Verwendung von Signalen minimieren, die durch eine Empfangsantenne (310) von drei Sendeantennen für vier Zeitspannen empfangen werden, und Kanalverstärkungen von den Sendeantennen zu der Empfangsantenne,
wobei, falls Modulationssymbole QPSK (Quadraturphasenshiftkodierung) oder 8PSK (8-fache PSK) Symbole sind, der erste und der zweite Decoder Parameter

$$R_1 = \alpha^* r_1 + \beta \frac{1}{\sqrt{2}} r_2^* + \gamma r_3^* - v^* \beta^* \frac{1}{\sqrt{2}} r_4$$

$$R_3 = v\gamma r_2^* + \beta^* \frac{1}{\sqrt{2}} r_1 + \alpha^* r_4 - \beta \frac{1}{\sqrt{2}} r_3^*$$

$$R_{13} = -\frac{(C_1 + C_3)}{2}$$

$$C_1 = -\alpha^* \beta v \sqrt{2} + \alpha \beta^* \sqrt{2}$$

$$C_3 = \gamma \beta^* v \sqrt{2} - \gamma^* \beta \sqrt{2}$$

$$R_2 = \beta^* \frac{1}{\sqrt{2}} r_1 - \alpha r_2^* + \beta \frac{1}{\sqrt{2}} r_3^* + v^* \gamma^* r_4$$

$$R_4 = \gamma^* r_1 - v\beta \frac{1}{\sqrt{2}} r_2^* - \alpha r_3^* - \beta^* \frac{1}{\sqrt{2}} r_4$$

$$R_{24} = -\frac{(C_2 + C_4)}{2}$$

$$C_2 = -\alpha \beta^* \sqrt{2} + v\alpha^* \beta \sqrt{2}$$

$$C_4 = -v\gamma \beta^* \sqrt{2} + \gamma^* \beta \sqrt{2}$$

berechnen, wobei $\alpha$, $\beta$ und $\gamma$ die Kanalverstärkungen sind, r1, r2, r3 und r4 die empfangenen Signale sind, und $v$ ein Phasenwert ist, durch den der Sender die Phasen der Symbole dreht,
und wobei der erste und der zweite Decoder Symbolpaare ($x_1$, $x_3$) und ($x_2$, $x_4$) finden, die $|R_1 - x_1|^2 + |R_3 - x_3|^2 + |R_{13} - x_1{}^*x_3|^2$ bzw.
$|R_2 - x_2|^2 + |R_4 - x_4|^2 + |R_{24} - x_2{}^*x_4|^2$ minimieren.

**25.** Empfänger zum Empfangen von Modulationssymbolen, deren Phase einmal von einem Sender in einem drahtlosen Kommunikationssystem gedreht wurden, mit:

einem ersten und einem zweiten Decoder (340, 345) zum Erfassen von Symbolpaaren, die Maximalwahrscheinlichkeits-(ML)-Dekodiermetriken über alle möglichen Symbolpaare unter Verwendung von Signalen minimieren, die durch eine Empfangsantenne (310) von drei Sendeantennen für vier Zeitspannen empfangen werden, und Kanalverstärkungen von den Sendeantennen zu der Empfangsantenne,
wobei, falls die Modulationssymbole 16QAM (16-fache Quadraturamplitudenmodulation) oder 64QAM (64-fache QAM) Symbole sind, der erste und der zweite Decoder Parameter

$$R_1 = \frac{\left( \alpha^* r_1 + \beta \frac{1}{\sqrt{2}} r_2^* + \gamma r_3^* - \nu^* \beta^* \frac{1}{\sqrt{2}} r_4 \right)}{K_3}$$

$$R_3 = \frac{\left( \nu \gamma r_2^* + \beta^* \frac{1}{\sqrt{2}} r_1 + \alpha^* r_4 - \beta \frac{1}{\sqrt{2}} r_3^* \right)}{K_3}$$

$$R_{13} = -\frac{(C_1 + C_3)}{2K_3}$$

$$K_3 = |\alpha|^2 + |\beta|^2 + |\gamma|^2$$

$$C_1 = -\alpha^* \beta \nu \sqrt{2} + \alpha \beta^* \sqrt{2}$$

$$C_3 = \gamma \beta^* \nu \sqrt{2} - \gamma^* \beta \sqrt{2}$$

$$R_2 = \frac{\left( \beta^* \frac{1}{\sqrt{2}} r_1 - \alpha r_2^* + \beta \frac{1}{\sqrt{2}} r_3^* + \nu^* \gamma^* r_4 \right)}{K_3}$$

$$R_4 = \frac{\left( \gamma^* r_1 - \nu \beta \frac{1}{\sqrt{2}} r_2^* - \alpha r_3^* - \beta^* \frac{1}{\sqrt{2}} r_4 \right)}{K_3}$$

$$R_{24} = -\frac{(C_2 + C_4)}{2K_3}$$

$$C_2 = -\alpha\beta^* \sqrt{2} + \nu\alpha^* \beta\sqrt{2}$$

$$C_4 = -\nu\gamma\beta^* \sqrt{2} + \gamma^* \beta\sqrt{2}$$

berechnen, wobei $\alpha$, $\beta$ und $\gamma$ die Kanalverstärkungen sind, r1, r2, r3 und r4 die empfangenen Signale sind, und $\nu$ ein Phasenwert ist, durch den der Sender die Phasen der Symbole dreht,
und der erste und der zweite Decoder Symbolpaare $(x_1, x_3)$ und $(x_2, x_4)$ finden, die $|R_1 - x_1|^2 + |R_3 - x_3|^2 + |R_{13} - x_1{}^*x_3|^2 - |x_1|^2|x_3|^2$ bzw.
$|R_2 - x_2|^2 + |R_4 - x_4|^2 + |R_{24} - x_2{}^*x_4|^2 - |x_2|^2 |x_4|^2$ minimieren.

26. Empfänger zum Empfangen von Modulationssymbolen, deren Phasen einmal von einem Sender in einem drahtlosen Kommunikationssystem gedreht werden, mit:

einem ersten und einem zweiten Decoder (340, 345) zum Erfassen von Symbolpaaren, die Maximalwahrscheinlichkeits-(ML)-Dekodiermetriken über alle möglichen Symbolpaaren zur Verwendung von Signalen minimieren, die durch eine Empfangsantenne (310) von vier Sendeantennen für vier Zeitspannen empfangen wurden, und Kanalverstärkungen von den Sendeantennen an die Empfangsantenne,
wobei, falls die Modulationssymbole BPSK-Symbole (Binärphasenshiftkodierung) sind, der erste und der zweite Decoder Parameter

$$R_1 = \alpha^* r_1 + \beta r_2^* + \zeta r_3^* + j\gamma^* r_4$$

$$R_3 = \zeta r_2^* - j\gamma^* r_1 + \alpha^* r_4 - \beta r_3^*$$

$$R_{13} = -(C_1 + C_3)$$

$$C_1 = j\alpha^* \gamma + j\alpha\gamma^*$$

$$C_3 = \zeta^* \beta - \zeta\beta^*$$

$$R_2 = \beta^* r_1 - \alpha r_2^* + j\gamma r_3^* + \zeta^* r_4$$

$$R_4 = \zeta^* r_1 - j\gamma r_2^* - \alpha r_3^* - \beta^* r_4$$

$$R_{24} = -(C_2 + C_4)$$

$$C_2 = \zeta \beta^* - \zeta^* \beta$$

$$C_4 = -j\alpha\gamma^* - j\gamma\alpha^*$$

berechnen, wobei, $\alpha$, $\beta$, $\gamma$ und Kanalverstärkungen sind und r1, r2, r3 und r4 die Empfangssignale sind, und wobei der erste und der zweite Decoder Symbolpaare $(x_1, x_3)$ und $(x_2, x_4)$ finden, die $|R_1 - x_1|^2 + |R_3 - x_3|^2 + |R_{13} - x_1{}^* x_3|^2$ bzw.
$|R_2 - x_2|^2 + |R_4 - x_4|^2 + |R_{24} - x_2{}^* x_4|^2$ minimieren.

**27.** Empfänger zum Empfangen von Modulationssymbolen, deren Phasen einmal von einem Sender in einem drahtlosen Kommunikationssystem gedreht wurden, mit:

einem ersten und einem zweiten Decoder (340, 345) zum Erfassen von Symbolpaaren, die Maximalwahrscheinlichkeits-(ML)-Dekodiermetriken über alle möglichen Symbolpaaren unter Verwendung von Signalen minimieren, die durch eine Empfangsantenne (310) von vier Sendeantennen für vier Zeitspannen empfangen werden, und Kanalverstärkungen von den Sendeantennen zu der Empfangsantenne,
wobei, falls die Modulationssymbole QPSK (Quadraturphasenshiftkodierung) oder 8PSK (8-fache PSK) Symbole sind, der erste und der zweite Decoder Parameter

$$R_1 = \alpha^* r_1 + \beta r_2^* + \zeta r_3^* - v^* \gamma^* r_4$$

$$R_3 = v\zeta r_2^* + \gamma^* r_1 + \alpha^* r_4 - \beta r_3^*$$

$$R_{13} = -(C_1 + C_3)$$

$$C_1 = -\alpha^* \gamma v + \alpha \gamma^*$$

$$C_3 = \zeta \beta^* v - \zeta^* \beta$$

$$R_2 = \beta^* r_1 - \alpha r_2^* + \gamma r_3^* + v^* \zeta^* r_4$$

$$R_4 = \zeta^* r_1 - v\gamma r_2^* - \alpha r_3^* - \beta^* r_4$$

$$R_{24} = -(C_2 + C_4)$$

$$C_2 = -\alpha\gamma^* + v\alpha^*\gamma$$

$$C_4 = -v\zeta\beta^* + \zeta^*\beta$$

berechnen, wobei $\alpha$, $\beta$, $\gamma$, und $\zeta$ die Kanalverstärkungen sind, r1, r2, r3 und r4 die empfangenen Signale sind und $v$ ein Phasenwert ist, durch den der Sender die Phasen der Symbole dreht,
und der erste und der zweite Decoder Symbolpaare $(x_1, x_3)$ und $(x_2, x_4)$ finden, die $|R_1 - x_1|^2 + |R_3 - x_3|^2 + |R_{13} - x_1^*x_3|^2$ bzw.
$|R_2 - x_2|^2 + |R_4 - x_4|^2 + |R_{24} - x_2^*x_4|^2$ minimieren.

28. Empfänger zum Empfangen von Modulationssymbolen, deren Phase einmal von einem Sender in einem drahtlosen Kommunikationssystem gedreht wurden, mit:

einem ersten und einem zweiten Decoder (340, 345) zum Erfassen von Symbolpaaren, die Maximalwahrscheinlichkeits-(ML)-Dekodiermetriken über alle möglichen Symbolpaare unter Verwendung von Signalen minimieren, die durch eine Empfangsantenne (310) von vier Sendeantennen für vier Zeitspannen empfangen werden, und Kanalverstärkungen von den Sendeantennen zu der Empfangsantenne,
wobei, falls die Modulationssymbole 16QAM (16-fache Quadraturamplitudenmodulation) oder 64QAM (64-fache QAM) Symbole sind, der erste und der zweite Decoder Parameter

$$R_1 = \frac{(\alpha^* r_1 + \beta r_2^* + \zeta r_3^* - v^*\gamma^* r_4)}{K_4}$$

$$R_3 = \frac{(v\zeta r_2^* + \gamma^* r_1 + \alpha^* r_4 - \beta r_3^*)}{K_4}$$

$$R_{13} = -\frac{(C_1 + C_3)}{K_4}$$

$$K_4 = |\alpha|^2 + |\beta|^2 + |\gamma|^2$$

$$C_1 = -\alpha^* \gamma \nu + \alpha \gamma^*$$

$$C_3 = \zeta \beta^* \nu - \zeta^* \beta$$

$$R_2 = \frac{\left(\beta^* r_1 - \alpha r_2^* + \gamma r_3^* + \nu^* \zeta^* r_4\right)}{K_4}$$

$$R_4 = \frac{\left(\zeta^* r_1 - \nu \gamma r_2^* - \alpha r_3^* - \beta^* r_4\right)}{K_4}$$

$$R_{24} = -\frac{(C_2 + C_4)}{K_4}$$

$$C_2 = -\alpha \gamma^* + \nu \alpha^* \gamma$$

$$C_4 = -\nu \zeta \beta^* + \zeta^* \beta$$

berechnen, wobei $\alpha$, $\beta$, $\gamma$ und $\zeta$ die Kanalverstärkungen sind, r1, r2, r3 und r4 die empfangenen Signale sind und $\nu$ ein Phasenwert ist, durch den der Sender die Phasen der Symbole dreht,
und der erste und der zweite Decoder Symbolpaare $(x_1, x_3)$ und $(x_2, x_4)$ finden, die $|R_1 - x_1|^2 + |R_3 - x_3|^2 + |R_{13} - x_1^* x_3|^2 - |x_1|^2 |x_3|^2$ bzw.
$|R_2 - x_2|^2 + |R_4 - x_4|^2 + |R_{24} - x_2^* x_4|^2 - |x_2|^2 |x_4|^2$ minimieren.

29. Empfänger zum Empfangen von PSK-(Phasenverschiebungskodierung)-Modulationssymbolen, deren Phasen einmal von einem Sender in einem drahtlosen Kommunikationssystem gedreht werden, mit:

einem ersten und einem zweiten Decoder (540, 545) zum Auswählen von Kandidatensymbolpaaren unter allen möglichen Symbolpaaren unter Verwendung von Signalen, die durch eine Empfangsantenne (510) von drei Sendeantennen für vier Zeitspannen empfangen werden, und Kanalverstärkungen von den Sendeantennen zu der Empfangsantenne, und zum Detektieren von Symbolpaaren, die eine Maximalwahrscheinlichkeits-(ML)-Dekodierungsmetriken über die Kandidatensymbolpaare minimieren,
wobei der erste und der zweite Decoder Parameter

$$R_1 = \alpha^* r_1 + \beta \frac{1}{\sqrt{2}} r_2^* + \gamma r_3^* - \nu^* \beta^* \frac{1}{\sqrt{2}} r_4$$

$$R_3 = v\gamma r_2^* + \beta^* \frac{1}{\sqrt{2}} r_1 + \alpha^* r_4 - \beta \frac{1}{\sqrt{2}} r_3^*$$

$$R_{13} = -\frac{(C_1 + C_3)}{2}$$

$$C_1 = -\alpha^* \beta v \sqrt{2} + \alpha \beta^* \sqrt{2}$$

$$C_3 = \gamma \beta^* v \sqrt{2} - \gamma^* \beta \sqrt{2}$$

$$R_2 = \beta^* \frac{1}{\sqrt{2}} r_1 - \alpha r_2^* + \beta \frac{1}{\sqrt{2}} r_3^* + v^* \gamma^* r_4$$

$$R_4 = \gamma^* r_1 - v\beta \frac{1}{\sqrt{2}} r_2^* - \alpha r_3^* - \beta^* \frac{1}{\sqrt{2}} r_4$$

$$R_{24} = -\frac{(C_2 + C_4)}{2}$$

$$C_2 = -\alpha \beta^* \sqrt{2} + v\alpha^* \beta \sqrt{2}$$

$$C_4 = -v\gamma \beta^* \sqrt{2} + \gamma^* \beta \sqrt{2}$$

berechnen, wobei $\alpha$, $\beta$ und $\gamma$ die Kanalverstärkungen sind, r1, r2, r3 und r4 die empfangenen Signale sind und $v$ ein Phasenwert ist, durch den der Sender die Phasen der Symbole dreht, und der erste und der zweite Decoder alle möglichen Symbolpaare ($x_1$, $x_3$) und ($x_2$, $x_4$) als die Kandidatensymbolpaare finden, wobei die Symbole $x_3$ und $x_4$ Konstellationspunkte sind die am nächsten an $R_3 + x_1 R_{13}$ bzw. $R_4 + x_2 R_{24}$ liegen.

30. Empfänger zum Empfangen vom QAM-(Quadraturamplitudenmodulation)-Modulationssymbolen, deren Phase von einem Sender in einem drahtlosen Kommunikationssystem gedreht wurden, mit:

einem ersten und einem zweiten Decoder (540, 545) zum Auswählen von Kandidatensymbolpaaren unter allen möglichen Symbolpaaren unter Verwendung von Signalen, die durch eine Empfangsantenne (510) von drei Sendeantennen für vier Zeitspannen empfangen werden, und Kanalverstärkungen von den Sendeantennen zu der Empfangsantenne und Erfassung von Symbolpaaren, die Maximalwahrscheinlichkeit-(ML)-Dekodiermetriken über die Kandidatensymbolpaaren minimieren,
wobei der erste und der zweite Decoder Parameter

$$R_1 = \frac{\left( \alpha^* r_1 + \beta \frac{1}{\sqrt{2}} r_2^* + \gamma^* r_3^* - \nu^* \beta^* \frac{1}{\sqrt{2}} r_4 \right)}{K_3}$$

$$R_3 = \frac{\left( \nu \gamma r_2^* + \beta^* \frac{1}{\sqrt{2}} r_1 + \alpha^* r_4 - \beta \frac{1}{\sqrt{2}} r_3^* \right)}{K_3}$$

$$R_{13} = -\frac{(C_1 + C_3)}{2K_3}$$

$$K_3 = |\alpha|^2 + |\beta|^2 + |\gamma|^2$$

$$C_1 = -\alpha^* \beta \nu \sqrt{2} + \alpha \beta^* \sqrt{2}$$

$$C_3 = \gamma \beta^* \nu \sqrt{2} - \gamma^* \beta \sqrt{2}$$

$$R_2 = \frac{\left( \beta^* \frac{1}{\sqrt{2}} r_1 - \alpha r_2^* + \beta \frac{1}{\sqrt{2}} r_3^* + \nu^* \gamma^* r_4 \right)}{K_3}$$

$$R_4 = \frac{\left( \gamma^* r_1 - \nu \beta \frac{1}{\sqrt{2}} r_2^* - \alpha r_3^* - \beta^* \frac{1}{\sqrt{2}} r_4 \right)}{K_3}$$

$$R_{24} = -\frac{(C_2 + C_4)}{2K_3}$$

$$C_2 = -\alpha \beta^* \sqrt{2} + \nu \alpha^* \beta \sqrt{2}$$

$$C_4 = -\nu \gamma \beta^* \sqrt{2} + \gamma^* \beta \sqrt{2}$$

berechnen, wobei $\alpha$, $\beta$, $\gamma$ und $\zeta$ die Kanalverstärkungen sind, r1, r2, r3 und r4 die empfangenen Signale sind und $\nu$ ein Phasenwert ist, durch den der Sender die Phasen der Symbole dreht,
wobei der erste und der zweite Decoder alle möglichen Symbolpaare $(x_1, x_3)$ und $(x_2, x_4)$ als die Kandidatensymbolpaare finden, wobei die Symbole $x_3$ und $x_4$ die Konstellationspunkte sind, die am nächsten an $R_3 + x_1 R_{13}$ bzw. $R_4 + x_2 R_{24}$ liegen.

31. Empfänger zum Empfangen von PSK-(Phasenverschiebungskodierung)-Modulationssymbolen, deren Phase von einem Sender in einem drahtlosen Kommunikationssystem gedreht werden, mit:

einem ersten und einem zweiten Decoder (540, 545) zum Auswählen von Kandidatensymbolpaaren unter allen möglichen Symbolpaaren unter Verwendung von Signalen, die durch eine Empfangsantenne (510) von vier Sendeantennen für vier Zeitspannen empfangen werden, und Kanalverstärkungen von den Sendeantennen zu der Empfangsantenne und zum Erfassen von Symbolpaaren, die Maximalwahrscheinlichkeits-(ML)-Dekodiermetriken über die Kandidatensymbolpaare minimieren,
wobei der erste und der zweite Decoder Parameter

$$R_1 = \alpha^* r_1 + \beta r_2^* + \zeta r_3^* - \nu^* \gamma^* r_4$$

$$R_3 = \nu \zeta r_2^* + \gamma^* r_1 + \alpha^* r_4 - \beta r_3^*$$

$$R_{13} = -(C_1 + C_3)$$

$$C_1 = -\alpha^* \gamma \nu + \alpha \gamma^*$$

$$C_3 = \zeta \beta^* \nu - \zeta^* \beta$$

$$R_2 = \beta^* r_1 - \alpha r_2^* + \gamma r_3^* + \nu^* \zeta^* r_4$$

$$R_4 = \zeta^* r_1 - \nu \gamma r_2^* - \alpha r_3^* - \beta^* r_4$$

$$R_{24} = -(C_2 + C_4)$$

$$C_2 = -\alpha \gamma^* + \nu \alpha^* \gamma$$

$$C_4 = -\nu\zeta\beta^* + \zeta^*\beta \cdot$$

berechnen, wobei $\alpha$, $\beta$, $\gamma$ und $\zeta$ die Kanalverstärkungen sind, r1, r2, r3 und r4 die empfangenen Signale sind und $\nu$ ein Phasenwert ist, durch den der Sender die Phasen der Symbole dreht,
und der erste und der zweite Decoder alle möglichen Symbolpaare $(x_1, x_3)$ und $(x_2, x_4)$ als die Kandidatensymbolpaare finden, wobei die Symbole $x_3$ und $x_4$ die Konstellationspunkte sind, die am nächsten an $R_3 + x_1 R_{13}$ bzw. $R_4 + x_2 R_{24}$ liegen.

**32.** Empfänger zum Empfangen von QAM (Quadraturamplitudenmodulations)-Modulationssymbolen, deren Phasen einmal von einem Sender in einem drahtlosen Kommunikationssystem gedreht werden, mit:

einem ersten und einem zweiten Decoder (540, 545) zum Auswählen von Kandidatensymbolpaaren aus allen möglichen Symbolpaaren unter Verwendung von Signalen, die durch eine Empfangsantenne (510) von vier Sendeantennen für vier Zeitspannen empfangen werden, und Kanalverstärkungen von den Sendeantennen zu der Empfangsantenne, und Erfassen von Symbolpaaren, die Maximalwahrscheinlichkeits-(ML)-Dekodiermetriken über die Kandidatensymbolpaare minimieren,
wobei der erste und der zweite Decoder Parameter

$$R_1 = \frac{\left(\alpha^* r_1 + \beta r_2^* + \zeta r_3^* - \nu^* \gamma^* r_4\right)}{K_4}$$

$$R_3 = \frac{\left(\nu\zeta r_2^* + \gamma^* r_1 + \alpha^* r_4 - \beta r_3^*\right)}{K_4}$$

$$R_{13} = -\frac{\left(C_1 + C_3\right)}{K_4}$$

$$K_4 = |\alpha|^2 + |\beta|^2 + |\gamma|^2$$

$$C_1 = -\alpha^* \gamma\nu + \alpha\gamma^*$$

$$C_3 = \zeta\beta^* \nu - \zeta^*\beta$$

$$R_2 = \frac{\left(\beta^* r_1 - \alpha r_2^* + \gamma r_3^* + \nu^* \zeta^* r_4\right)}{K_4}$$

$$R_4 = \frac{(\zeta^* r_1 - v\gamma r_2^* - \alpha r_3^* - \beta^* r_4)}{K_4}$$

$$R_{24} = -\frac{(C_2 + C_4)}{K_4}$$

$$C_2 = -\alpha\gamma^* + v\alpha^*\gamma$$

$$C_4 = -v\zeta\beta^* + \zeta^*\beta$$

berechnen, wobei $\alpha$, $\beta$, $\gamma$ und $\zeta$ die Kanalverstärkungen sind, r1, r2, r3 und r4 die empfangenen Signale sind und $v$ ein Phasenwert ist, durch den der Sender die Phasen der Symbole dreht, und der erste und der zweite Decoder alle möglichen Symbolpaare ($x_1$, $x_3$) und ($x_2$, $x_4$) als die Kandidatensymbolpaare finden, wobei die Symbole $x_3$ und $x_4$ die Konstellationspunkte sind, die am nächsten an $R_3 + x_1 R_{13}$ bzw. $R_4 + x_2 R_{24}$ liegen.

**33.** Empfänger zum Empfangen von PSK-(Phasenverschiebungskodierung)-Modulationssymbolen, deren Phase einmal von einem Sender in einem drahtlosen Kommunikationssystem gedreht werden, mit:

einem ersten und einem zweiten Decoder (540, 545) zum Auswählen von Kandidatensymbolpaaren unter allen möglichen Symbolpaaren unter Verwendung von Signalen, die durch eine Empfangsantenne (510) von drei Sendeantennen für vier Zeitspannen empfangen werden, und Kanalverstärkungen von den Sendeantennen zu der Empfangsantenne und Erfassung von Symbolpaaren, die Maximalwahrscheinlichkeits-(ML)-Dekodiermetriken über die Kandidatensymbolpaare minimieren, wobei der erste Decoder

$$R_1 = \alpha^* r_1 + \beta \frac{1}{\sqrt{2}} r_2^* + \gamma r_3^* - v^* \beta^* \frac{1}{\sqrt{2}} r_4$$

$$R_3 = v\gamma r_2^* + \beta^* \frac{1}{\sqrt{2}} r_1 + \alpha^* r_4 - \beta \frac{1}{\sqrt{2}} r_3^*$$

$$R_{13} = -\frac{(C_1 + C_3)}{2}$$

$$C_1 = -\alpha^* \beta v \sqrt{2} + \alpha \beta^* \sqrt{2}$$

$$C_3 = \gamma \beta^* v \sqrt{2} - \gamma^* \beta \sqrt{2} \quad .$$

berechnet, wobei $\alpha$, $\beta$ und $\gamma$ die Kanalverstärkungen sind, r1, r2, r3 und r4 die empfangenen Signale sind und $v$ ein vorgegebener Phasenwert ist, durch den der Sender die Phasen der Symbole dreht,

ein Symbolpaar $(x_1, x_3)$ ausgibt, falls $x_1^* x_3 = x_{13}$, wobei $x_1$ das nächste Symbol zu $R_1$ ist, $x_3$ das nächste Symbol zu $R_3$ ist und $x_{13}$ das nächste Symbole zu $R_{13}$ ist, und falls $x_1^* x_3 \neq x_{13}$ einen Winkel $\Phi_d$ berechnet durch Dividieren des Winkels zwischen $x_{13}$ und $x_1^* x_3$ durch 2 und Symbole auswählt, deren Winkel innerhalb von $\Phi_d$ von $x_1$ bzw. $x_3$ sind, als Kandidatensymbole,

und der zweite Decoder

$$R_2 = \beta^* \frac{1}{\sqrt{2}} r_1 - \alpha r_2^* + \beta \frac{1}{\sqrt{2}} r_3^* + v^* \gamma^* r_4$$

$$R_4 = \gamma^* r_1 - v \beta \frac{1}{\sqrt{2}} r_2^* - \alpha r_3^* - \beta^* \frac{1}{\sqrt{2}} r_4$$

$$R_{24} = - \frac{(C_2 + C_4)}{2}$$

$$C_2 = -\alpha \beta^* \sqrt{2} + v \alpha^* \beta \sqrt{2}$$

$$C_4 = -v \gamma \beta^* \sqrt{2} + \gamma^* \beta \sqrt{2}$$

berechnet, wobei $\alpha$, $\beta$, $\gamma$ die Kanalverstärkungen sind, r1, r2, r3 und r4 die empfangenen Signale sind und $v$ der vorgegebene Phasenwert ist, um den der Sender die Phasen der Symbole dreht,

ein Symbolpaar $(x_2, x_4)$ ausgibt, falls $x_2^* x_4 = x_{24}$, wobei $x_2$ das nächste Symbol zu $R_2$ ist, $x_4$ das nächste Symbol zu $R_4$ ist, und $x_{24}$ das nächste Symbol zu $R_{24}$ ist, und falls $x_2^* x_4 \neq x_{13}$, einen Winkel $\Phi_d'$ berechnet durch Dividieren des Winkels zwischen $x_{24}$ und $x_2^* x_4$ durch 2 und ein Symbol auswählt, dessen Winkel innerhalb von $\Phi_d'$ von $x_2$ bzw. $x_4$ sind, als Kandidatensymbole.

**34.** Empfänger zum Empfangen von PSK (Phasenverschiebungskodierung)-Modulationssymbolen, deren Phasen einmal von einem Sender in einem drahtlosen Kommunikationssystem gedreht werden, mit:

einem ersten und einem zweiten Decoder (540, 545) zum Auswählen von Kandidatensymbolpaaren aus allen möglichen Symbolpaaren unter Verwendung von Signalen, die durch eine Empfangsantenne (510) von vier Sendeantennen für vier Zeitspannen empfangen werden, und Kanalverstärkungen von den Sendeantennen zu der Empfangsantenne und zur Erfassung von Symbolpaaren, die Maximalwahrscheinlichkeits-(ML)-Dekodiermetriken über die Kandidatensymbolpaare minimieren, wobei der erste Decoder

$$R_1 = \alpha^* r_1 + \beta r_2^* + \zeta r_3^* - v^* \gamma^* r_4$$

$$R_3 = v\zeta r_2^* + \gamma^* r_1 + \alpha^* r_4 - \beta r_3^*$$

$$R_{13} = -(C_1 + C_3)$$

$$C_1 = -\alpha^* \gamma v + \alpha \gamma^*$$

$$C_3 = \zeta \beta^* v - \zeta^* \beta$$

berechnet, wobei $\alpha$, $\beta$, $\gamma$ und $\zeta$ die Kanalverstärkungen sind, r1, r2, r3 und r4 die Empfangssignale sind und $v$ ein vorgegebener Phasenwert ist, durch den der Sender die Phasen der Symbole dreht,

ein Symbolpaar $(x_1, x_3)$ ausgibt, falls $x_1^* x_3 = x_{13}$, wobei $x_1$ das nächste Symbol zu $R_1$ ist, $x_3$ das nächste Symbol zu $R_3$ ist und $x_{13}$ das nächste Symbol zu $R_{13}$ ist, und falls $x_1^* x_{13} \neq x_{13}$ einen Winkel $\Phi_d$ berechnet durch Dividieren des Winkels zwischen $x_{13}$ und $x_1^* x_3$ durch 2 und Symbole auswählt, deren Winkel innerhalb von $\Phi_d$ von $x_1$ bzw. $x_3$ sind als Kandidatensymbole, und der zweite Decoder

$$R_2 = \beta^* r_1 - \alpha r_2^* + \gamma r_3^* + v^* \zeta^* r_4$$

$$R_4 = \zeta^* r_1 - v\gamma r_2^* - \alpha r_3^* - \beta^* r_4$$

$$R_{24} = -(C_2 + C_4)$$

$$C_2 = -\alpha \gamma^* + v\alpha^* \gamma$$

$$C_4 = -v\zeta \beta^* + \zeta^* \beta$$

berechnet, wobei $\alpha$, $\beta$, $\gamma$ und $\zeta$ die Kanalverstärkungen sind, r1, r2, r3 und r4 die Empfangssignale sind und $v$ der vorgegebene Phasenwert ist, durch den der Transmitter die Phasen der Symbole dreht,

ein Symbolpaar $(x_2, x_4)$ ausgibt, falls $x_2^* x_4 = x_{24}$, wobei $x_2$ das nächste Symbol zu $R_2$ ist, $x_4$ das nächste Symbol zu $R_4$ ist und $x_{24}$ das nächste Symbol zu $R_{24}$ ist, und falls $x_2^* x_4 \neq x_{13}$, einen Winkel $\Phi_d'$ berechnet durch Dividieren des Winkels zwischen $x_{24}$ und $x_2^* x_4$ durch 2 und Symbole auswählt, deren Winkel innerhalb von $\Phi_d'$ von $x_2$ bzw. $x_4$ sind, als Kandidatensymbole.

**Revendications**

1. Emetteur pour émettre des symboles de modulation dans un système de communication sans fil, comprenant :

    une pluralité d'antennes d'émission (140a, 140b, 140c, 140d) pour réaliser une diversité d'émission ; et
    un codeur spatio-temporel (120) pour coder une pluralité de symboles d'entrée en une pluralité de combinaisons de symboles afin d'émettre les symboles d'entrée une fois depuis chaque antenne d'émission à chaque période de temps, en utilisant une matrice de codage d'émission avec des lignes correspondant à des périodes de temps d'émission et des colonnes correspondant aux antennes d'émission, et sortir les combinaisons de symboles vers les antennes d'émission pendant les périodes de temps d'émission, les combinaisons de symboles ayant des symboles orthogonaux dans au moins deux lignes, des inversions et des conjugués des symboles d'entrée ; et
    une partie de rotation de phase (130a, 130b) pour effectuer la rotation des phases de certaines des combinaisons de symboles sorties du codeur spatio-temporel en utilisant la matrice de codage d'émission,
    **caractérisé en ce que** si le nombre des antennes d'émission est 4,
    le codeur spatio-temporel (120) génère une matrice de codage d'émission avec quatre lignes et quatre colonnes à partir de quatre symboles d'entrée, et les inversions et les conjugués des quatre symboles, et
    la partie de rotation de phase (130a, 130b) effectue une rotation sélective des phases de symboles dans au moins deux des colonnes de la matrice de codage d'émission d'une valeur de phase prédéterminée.

2. Emetteur selon la revendication 1, dans lequel la matrice de codage d'émission est une de

$$
\begin{bmatrix} s_1 & s_2 & s_3^* & s_4^* \\ s_2^* & -s_1^* & s_4 & -s_3 \\ s_3 & s_4 & -s_1^* & -s_2^* \\ s_4^* & -s_3^* & -s_2 & s_1 \end{bmatrix}
\begin{bmatrix} s_1 & s_2 & s_3^* & -s_4^* \\ s_2^* & -s_1^* & s_4 & s_3 \\ s_3 & s_4 & -s_1^* & s_2^* \\ s_4^* & -s_3^* & -s_2 & -s_1 \end{bmatrix}
\begin{bmatrix} s_1 & s_2 & s_3^* & -s_4^* \\ s_2^* & -s_1^* & -s_4 & -s_3 \\ s_3 & s_4 & -s_1^* & s_2^* \\ s_4^* & -s_3^* & s_2 & s_1 \end{bmatrix}
\begin{bmatrix} s_1 & s_2 & s_3^* & s_4^* \\ s_2^* & -s_1^* & -s_4 & s_3 \\ s_3 & s_4 & -s_1^* & -s_2^* \\ s_4^* & -s_3^* & s_2 & -s_1 \end{bmatrix}
$$

$$
\begin{bmatrix} s_1 & s_2 & -s_3^* & -s_4^* \\ s_2^* & -s_1^* & s_4 & -s_3 \\ s_3 & s_4 & s_1^* & s_2^* \\ s_4^* & -s_3^* & -s_2 & s_1 \end{bmatrix}
\begin{bmatrix} s_1 & s_2 & -s_3^* & s_4^* \\ s_2^* & -s_1^* & s_4 & s_3 \\ s_3 & s_4 & s_1^* & -s_2^* \\ s_4^* & -s_3^* & -s_2 & -s_1 \end{bmatrix}
\begin{bmatrix} s_1 & s_2 & -s_3^* & -s_4^* \\ s_2^* & -s_1^* & -s_4 & s_3 \\ s_3 & s_4 & s_1^* & s_2^* \\ s_4^* & -s_3^* & s_2 & -s_1 \end{bmatrix}
\begin{bmatrix} s_1 & s_2 & -s_3^* & s_4^* \\ s_2^* & -s_1^* & -s_4 & -s_3 \\ s_3 & s_4 & s_1^* & -s_2^* \\ s_4^* & -s_3^* & s_2 & s_1 \end{bmatrix}
$$

où $s_1$, $s_2$, $s_3$ et $s_4$ sont les quatre symboles d'entrée.

3. Emetteur selon la revendication 1, dans lequel si les symboles d'entrée sont des symboles BPSK (Binary Phase Shift Keying, modulation par déplacement de phase à 2 états), la matrice de codage d'émission est

$$
U_2 = \begin{pmatrix} s_1 & s_2 & js_3 & s_4 \\ -s_2^* & s_1^* & -js_4^* & s_3^* \\ -s_4^* & -s_3^* & js_2^* & s_1^* \\ s_3 & -s_4 & -js_1 & s_2 \end{pmatrix}
$$

où $s_1$, $s_2$, $s_3$ et $s_4$ sont les quatre symboles d'entrée.

4. Emetteur selon la revendication 1, dans lequel si les symboles d'entrée sont des symboles QPSK (Quadrature Phase Shift Keying, modulation par déplacement de phase à 4 états), la matrice de codage d'émission est

$$U_4 = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

où $s_1$, $s_2$, $s_3$ et $s_4$ sont les quatre symboles d'entrée et $v$ est la valeur de phase prédéterminée.

5.   Emetteur selon la revendication 4, dans lequel $v$ est $e^{-j2\pi/3}$.

6.   Emetteur selon la revendication 1, dans lequel si les symboles d'entrée sont des symboles 8PSK (8-ary Phase Shift Keying, modulation par déplacement de phase à 8 états), la matrice de codage d'émission est

$$U_6 = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

où $s_1$, $s_2$, $s_3$ et $s_4$ sont les quatre symboles d'entrée et $v$ est la valeur de phase prédéterminée.

7.   Emetteur selon la revendication 6, dans lequel $v$ est $e^{-j5\pi/6}$.

8.   Emetteur selon la revendication 1, dans lequel si les symboles d'entrée sont des symboles 16QAM (16-ary Quadrature Amplitude Modulation, modulation d'amplitude en quadrature à 16 états), la matrice de codage d'émission est

$$U_8 = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

où $s_1$, $s_2$, $s_3$ et $s_4$ sont les quatre symboles d'entrée et $v$ est la valeur de phase prédéterminée.

9.   Emetteur selon la revendication 8, dans lequel $v$ est $e^{-j5\pi/12}$.

10.  Emetteur selon la revendication 1, dans lequel si les symboles d'entrée sont des symboles 64QAM (64-ary Quadrature Amplitude Modulation, modulation d'amplitude en quadrature à 64 états), la matrice de codage d'émission est

$$U_{10} = \begin{pmatrix} s_1 & s_2 & s_3 & s_4 \\ -s_2^* & s_1^* & -vs_4^* & vs_3^* \\ -s_4^* & -s_3^* & s_2^* & s_1^* \\ s_3 & -s_4 & -vs_1 & vs_2 \end{pmatrix}$$

où $s_1$, $s_2$, $s_3$ et $s_4$ sont les quatre symboles d'entrée et $v$ est la valeur de phase prédéterminée.

11. Emetteur selon la revendication 10, dans lequel $v$ est $e^{-j7\pi/48}$.

12. Emetteur pour émettre des symboles de modulation dans un système de communication sans fil, comprenant :

une pluralité d'antennes d'émission (250a, 250b, 250c) pour réaliser une diversité d'émission ; et
un codeur spatio-temporel (220) pour coder une pluralité de symboles d'entrée en une pluralité de combinaisons de symboles afin d'émettre les symboles d'entrée une fois depuis chaque antenne d'émission à chaque période de temps, en utilisant une matrice de codage d'émission avec des lignes correspondant à des périodes de temps d'émission et des colonnes correspondant aux antennes d'émission, et sortir les combinaisons de symboles vers les antennes d'émission pendant les périodes de temps d'émission, les combinaisons de symboles ayant des symboles orthogonaux dans au moins deux lignes, des inversions et des conjugués des symboles d'entrée ; et
une partie de rotation de phase (230a, 230b) pour effectuer la rotation des phases de certaines des combinaisons de symboles sorties du codeur spatio-temporel en utilisant la matrice de codage d'émission,
**caractérisé en ce que** si le nombre des antennes d'émission est 3,
le codeur spatio-temporel (220) génère une matrice de codage d'émission avec quatre lignes et quatre colonnes à partir de quatre symboles d'entrée, et les inversions et les conjugués des quatre symboles, et
la partie de rotation de phase (230a, 230b) effectue une rotation sélective des phases de symboles dans au moins deux des colonnes de la matrice de codage d'émission d'une valeur de phase prédéterminée,
dans lequel l'émetteur comprend en outre un générateur de colonne (240) pour générer une nouvelle colonne en sommant les symboles des deux colonnes sélectionnées contenant des symboles ayant fait l'objet d'une rotation de phase et en remplaçant les deux colonnes sélectionnées par la nouvelle colonne, générant ainsi la matrice de codage d'émission avec quatre lignes et trois colonnes.

13. Emetteur selon la revendication 12, dans lequel la matrice de codage d'émission générée à partir du codeur spatio-temporel (220) est une de

$$\begin{bmatrix} s_1 & s_2 & s_3^* & s_4^* \\ s_2^* & -s_1^* & s_4 & -s_3 \\ s_3 & s_4 & -s_1^* & -s_2^* \\ s_4^* & -s_3^* & -s_2 & s_1 \end{bmatrix} \begin{bmatrix} s_1 & s_2 & s_3^* & -s_4^* \\ s_2^* & -s_1^* & s_4 & s_3 \\ s_3 & s_4 & -s_1^* & s_2^* \\ s_4^* & -s_3^* & -s_2 & -s_1 \end{bmatrix} \begin{bmatrix} s_1 & s_2 & s_3^* & -s_4^* \\ s_2^* & -s_1^* & -s_4 & -s_3 \\ s_3 & s_4 & -s_1^* & s_2^* \\ s_4^* & -s_3^* & s_2 & s_1 \end{bmatrix} \begin{bmatrix} s_1 & s_2 & s_3^* & s_4^* \\ s_2^* & -s_1^* & -s_4 & s_3 \\ s_3 & s_4 & -s_1^* & -s_2^* \\ s_4^* & -s_3^* & s_2 & -s_1 \end{bmatrix}$$

$$\begin{bmatrix} s_1 & s_2 & -s_3^* & -s_4^* \\ s_2^* & -s_1^* & s_4 & -s_3 \\ s_3 & s_4 & s_1^* & s_2^* \\ s_4^* & -s_3^* & -s_2 & s_1 \end{bmatrix} \begin{bmatrix} s_1 & s_2 & -s_3^* & s_4^* \\ s_2^* & -s_1^* & s_4 & s_3 \\ s_3 & s_4 & s_1^* & -s_2^* \\ s_4^* & -s_3^* & -s_2 & -s_1 \end{bmatrix} \begin{bmatrix} s_1 & s_2 & -s_3^* & -s_4^* \\ s_2^* & -s_1^* & -s_4 & s_3 \\ s_3 & s_4 & s_1^* & s_2^* \\ s_4^* & -s_3^* & s_2 & -s_1 \end{bmatrix} \begin{bmatrix} s_1 & s_2 & -s_3^* & s_4^* \\ s_2^* & -s_1^* & -s_4 & -s_3 \\ s_3 & s_4 & s_1^* & -s_2^* \\ s_4^* & -s_3^* & s_2 & s_1 \end{bmatrix}$$

où $s_1$, $s_2$, $s_3$ et $s_4$ sont les quatre symboles d'entrée.

**14.** Emetteur selon la revendication 12, dans lequel si les symboles d'entrée sont des symboles BPSK, la matrice de codage d'émission est

$$U_1 = \begin{pmatrix} s_1 & \dfrac{s_2 + js_3}{\sqrt{2}} & s_4 \\ -s_2^* & \dfrac{s_1^* - js_4^*}{\sqrt{2}} & s_3^* \\ -s_4^* & \dfrac{-s_3^* + js_2^*}{\sqrt{2}} & s_1^* \\ s_3 & \dfrac{-s_4 - js_1}{\sqrt{2}} & s_2 \end{pmatrix}$$

où $s_1$, $s_2$, $s_3$ et $s_4$ sont les quatre symboles d'entrée.

**15.** Emetteur selon la revendication 12, dans lequel si les symboles d'entrée sont des symboles QPSK, la matrice de codage d'émission est

$$U_3 = \begin{pmatrix} s_1 & \dfrac{s_2 + s_3}{\sqrt{2}} & s_4 \\ -s_2^* & \dfrac{s_1^* - vs_4^*}{\sqrt{2}} & vs_3^* \\ -s_4^* & \dfrac{-s_3^* + s_2^*}{\sqrt{2}} & s_1^* \\ s_3 & \dfrac{-s_4 - vs_1}{\sqrt{2}} & vs_2 \end{pmatrix}$$

où $s_1$, $s_2$, $s_3$ et $s_4$ sont les quatre symboles d'entrée et $v$ est la valeur de phase prédéterminée.

**16.** Emetteur selon la revendication 15, dans lequel $v$ est $e^{-j2\pi/3}$.

**17.** Emetteur selon la revendication 12, dans lequel si les symboles d'entrée sont des symboles 8PSK, la matrice de codage d'émission est

$$U_5 = \begin{pmatrix} s_1 & \dfrac{s_2+s_3}{\sqrt{2}} & s_4 \\[2mm] -s_2^* & \dfrac{s_1^*-vs_4^*}{\sqrt{2}} & vs_3^* \\[2mm] -s_4^* & \dfrac{-s_3^*+s_2^*}{\sqrt{2}} & s_1^* \\[2mm] s_3 & \dfrac{-s_4-vs_1}{\sqrt{2}} & vs_2 \end{pmatrix}$$

où $s_1$, $s_2$, $s_3$ et $s_4$ sont les quatre symboles d'entrée et $v$ est la valeur de phase prédéterminée.

**18.** Emetteur selon la revendication 17, dans lequel $v$ est $e^{-j5\pi/6}$.

**19.** Emetteur selon la revendication 12, dans lequel si les symboles d'entrée sont des symboles 16QAM, la matrice de codage d'émission est

$$U_7 = \begin{pmatrix} s_1 & \dfrac{s_2+s_3}{\sqrt{2}} & s_4 \\[2mm] -s_2^* & \dfrac{s_1^*-vs_4^*}{\sqrt{2}} & vs_3^* \\[2mm] -s_4^* & \dfrac{-s_3^*+s_2^*}{\sqrt{2}} & s_1^* \\[2mm] s_3 & \dfrac{-s_4-vs_1}{\sqrt{2}} & vs_2 \end{pmatrix}$$

où $s_1$, $s_2$, $s_3$ et $s_4$ sont les quatre symboles d'entrée et $v$ est la valeur de phase prédéterminée.

**20.** Emetteur selon la revendication 19, dans lequel $v$ est $e^{-j5\pi/12}$.

**21.** Emetteur selon la revendication 12, dans lequel si les symboles d'entrée sont des symboles 64QAM, la matrice de codage d'émission est

$$U_9 = \begin{pmatrix} s_1 & \dfrac{s_2+s_3}{\sqrt{2}} & s_4 \\[2ex] -s_2^* & \dfrac{s_1^*-vs_4^*}{\sqrt{2}} & vs_3^* \\[2ex] -s_4^* & \dfrac{-s_3^*+s_2^*}{\sqrt{2}} & s_1^* \\[2ex] s_3 & \dfrac{-s_4-vs_1}{\sqrt{2}} & vs_2 \end{pmatrix}$$

où $s_1$, $s_2$, $s_3$ et $s_4$ sont les quatre symboles d'entrée et $v$ est la valeur de phase prédéterminée.

**22.** Emetteur selon la revendication 21, dans lequel $v$ est $e^{-j7\pi/48}$.

**23.** Récepteur pour recevoir des symboles de modulation dont les phases font l'objet d'une rotation une fois depuis un émetteur dans un système de communication sans fil, comprenant :

des premier et second décodeurs (340, 345) pour détecter des paires de symboles qui minimisent des métriques de décodage à maximum de vraisemblance (ML) sur toutes les paires de symboles possibles en utilisant des signaux reçus par une antenne de réception (310) depuis trois antennes d'émission pendant quatre périodes de temps et des gains de canal des antennes d'émission à l'antenne de réception,
dans lequel si les symboles de modulation sont des symboles BPSK (Binary Phase Shift Keying, modulation par déplacement de phase à 2 états), les premier et second décodeurs calculent les paramètres

$$R_1 = \alpha^* r_1 + \beta \frac{1}{\sqrt{2}} r_2^* + \gamma r_3^* + j\beta^* \frac{1}{\sqrt{2}} r_4$$

$$R_3 = \gamma r_2^* - j\beta^* \frac{1}{\sqrt{2}} r_1 + \alpha^* r_4 - \beta^* \frac{1}{\sqrt{2}} r_3^*$$

$$R_{13} = \frac{j(C_1+C_3)}{2}$$

$$C_1 = -\alpha^* \beta \sqrt{2} - \alpha \beta^* \sqrt{2}$$

$$C_3 = j\gamma^{*}\beta\sqrt{2} - j\gamma\beta^{*}\sqrt{2}$$

$$R_2 = \beta^{*}\frac{1}{\sqrt{2}}\,r_1 - \alpha r_2^{*} + j\beta\frac{1}{\sqrt{2}}\,r_3^{*} + \gamma^{*}\,r_4$$

$$R_4 = \gamma^{*}\,r_1 - j\beta\frac{1}{\sqrt{2}}\,r_2^{*} - \alpha r_3^{*} - \beta^{*}\frac{1}{\sqrt{2}}\,r_4$$

$$R_{24} = \frac{j(C_2 + C_4)}{2}$$

$$C_2 = \alpha\beta^{*}\sqrt{2} + \alpha^{*}\beta\sqrt{2}$$

$$C_4 = j\gamma\beta^{*}\sqrt{2} - j\gamma^{*}\beta\sqrt{2}$$

où $\alpha$, $\beta$ et $\gamma$ sont les gains de canal et r1, r2, r3 et r4 sont les signaux reçus,
et les premier et second décodeurs trouvent des paires de symboles $(x_1, x_3)$ et $(x_2, x_4)$ qui minimisent $|R_1 - x_1|^2 + |R_3 - x_3|^2 + R|_{13} - x_1^{*}x_3|^2$ et $|R^2 - x_2|^2 + |R_4 - x_4|^2 + |R_{24} - x_2^{*}x_4|^2$, respectivement.

24. Récepteur pour recevoir des symboles de modulation dont les phases font l'objet d'une rotation une fois depuis un émetteur dans un système de communication sans fil, comprenant :

des premier et second décodeurs (340, 345) pour détecter des paires de symboles qui minimisent des métriques de décodage à maximum de vraisemblance (ML) sur toutes les paires de symboles possibles en utilisant des signaux reçus par une antenne de réception (310) depuis trois antennes d'émission pendant quatre périodes de temps et des gains de canal des antennes d'émission à l'antenne de réception,
dans lequel si les symboles de modulation sont des symboles QPSK (Quadrature Phase Shift Keying, modulation par déplacement de phase à 4 états) ou 8PSK (8-ary PSK, modulation par déplacement de phase à 8 états), les premier et second décodeurs calculent les paramètres

$$R_1 = \alpha^{*}\,r_1 + \beta\frac{1}{\sqrt{2}}\,r_2^{*} + \gamma r_3^{*} - v^{*}\beta^{*}\frac{1}{\sqrt{2}}\,r_4$$

$$R_3 = v\gamma r_2^* + \beta^* \frac{1}{\sqrt{2}} r_1 + \alpha^* r_4 - \beta \frac{1}{\sqrt{2}} r_3^*$$

$$R_{13} = -\frac{(C_1 + C_3)}{2}$$

$$C_1 = -\alpha^* \beta v \sqrt{2} + \alpha \beta^* \sqrt{2}$$

$$C_3 = \gamma \beta^* v \sqrt{2} - \gamma^* \beta \sqrt{2}$$

$$R_2 = \beta^* \frac{1}{\sqrt{2}} r_1 - \alpha r_2^* + \beta \frac{1}{\sqrt{2}} r_3^* + v^* \gamma^* r_4$$

$$R_4 = \gamma^* r_1 - v\beta \frac{1}{\sqrt{2}} r_2^* - \alpha r_3^* - \beta^* \frac{1}{\sqrt{2}} r_4$$

$$R_{24} = -\frac{(C_2 + C_4)}{2}$$

$$C_2 = -\alpha \beta^* \sqrt{2} + v\alpha^* \beta \sqrt{2}$$

$$C_4 = -v\gamma \beta^* \sqrt{2} + \gamma^* \beta \sqrt{2}$$

où $\alpha$, $\beta$ et $\gamma$ sont les gains de canal, r1, r2, r3 et r4 sont les signaux reçus, et $v$ est une valeur de phase par laquelle l'émetteur effectue la rotation des phases des symboles,
et les premier et second décodeurs trouvent des paires de symboles ($x_1$, $x_3$) et ($x_2$, $x_4$) qui minimisent $|R_1-x_1|^2+|R_3-x_3|^2+|R_{13}-x_1^*x_3|^2$ et $|R2-x_2|^2+|R_4-x_4|^2+|R_{24}-x_2^*x_4|^2$, respectivement.

**25.** Récepteur pour recevoir des symboles de modulation dont les phases font l'objet d'une rotation une fois depuis un émetteur dans un système de communication sans fil, comprenant :

des premier et second décodeurs (340, 345) pour détecter des paires de symboles qui minimisent des métriques de décodage à maximum de vraisemblance (ML) sur toutes les paires de symboles possibles en utilisant des signaux reçus par une antenne de réception (310) depuis trois antennes d'émission pendant quatre périodes de temps et des gains de canal des antennes d'émission à l'antenne de réception,

dans lequel si les symboles de modulation sont des symboles 16QAM (16-ary Quadrature Amplitude Modulation, modulation d'amplitude en quadrature à 16 états) ou 64QAM (64-ary QAM, modulation d'amplitude en quadrature à 64 états), les premier et second décodeurs calculent les paramètres

$$R_1 = \frac{\left(\alpha^* r_1 + \beta \frac{1}{\sqrt{2}} r_2^* + \gamma r_3^* - v^* \beta^* \frac{1}{\sqrt{2}} r_4\right)}{K_3}$$

$$R_3 = \frac{\left(v\gamma r_2^* + \beta^* \frac{1}{\sqrt{2}} r_1 + \alpha^* r_4 - \beta \frac{1}{\sqrt{2}} r_3^*\right)}{K_3}$$

$$R_{13} = -\frac{(C_1 + C_3)}{2K_3}$$

$$K_3 = |\alpha|^2 + |\beta|^2 + |\gamma|^2$$

$$C_1 = -\alpha^* \beta v \sqrt{2} + \alpha \beta^* \sqrt{2}$$

$$C_3 = \gamma \beta^* v \sqrt{2} - \gamma^* \beta \sqrt{2}$$

$$R_2 = \frac{\left(\beta^* \frac{1}{\sqrt{2}} r_1 - \alpha r_2^* + \beta \frac{1}{\sqrt{2}} r_3^* + v^* \gamma^* r_4\right)}{K_3}$$

$$R_4 = \frac{\left(\overset{*}{\gamma} r_1 - \nu\beta \frac{1}{\sqrt{2}} \overset{**}{r_2} - \alpha \overset{**}{r_3} - \overset{**}{\beta} \frac{1}{\sqrt{2}} r_4\right)}{K_3}$$

$$R_{24} = -\frac{(C_2 + C_4)}{2K_3}$$

$$C_2 = -\alpha\overset{*}{\beta}\sqrt{2} + \nu\overset{*}{\alpha}\beta\sqrt{2}$$

$$C_4 = -\nu\gamma\overset{*}{\beta}\sqrt{2} + \overset{*}{\gamma}\beta\sqrt{2}$$

où $\alpha$, $\beta$ et $\gamma$ sont les gains de canal, r1, r2, r3 et r4 sont les signaux reçus, et $\nu$ est une valeur de phase par laquelle l'émetteur effectue la rotation des phases des symboles,

et les premier et second décodeurs trouvent des paires de symboles ($x_1$, $x_3$) et ($x_2$, $x_4$) qui minimisent $|R_1-x_1|^2+|R_3-x_3|^2+|R_{13}-x_1^*x_3|^2-|x^1|^2|x_3|^2$ et $|R_2-x_2|^2+|R_4-x_4|^2+|R_{24}-x_2^*x_4|^2-|x_2|^2|x_4|^2$, respectivement.

26. Récepteur pour recevoir des symboles de modulation dont les phases font l'objet d'une rotation une fois depuis un émetteur dans un système de communication sans fil, comprenant :

des premier et second décodeurs (340, 345) pour détecter des paires de symboles qui minimisent des métriques de décodage à maximum de vraisemblance (ML) sur toutes les paires de symboles possibles en utilisant des signaux reçus par une antenne de réception (310) depuis quatre antennes d'émission pendant quatre périodes de temps et des gains de canal des antennes d'émission à l'antenne de réception,

dans lequel si les symboles de modulation sont des symboles BPSK (Binary Phase Shift Keying, modulation par déplacement de phase à 2 états), les premier et second décodeurs calculent les paramètres

$$R_1 = \overset{*}{\alpha} r_1 + \beta\overset{*}{r_2} + \zeta\overset{*}{r_3} + j\overset{*}{\gamma} r_4$$

$$R_3 = \zeta\overset{*}{r_2} - j\overset{*}{\gamma} r_1 + \overset{*}{\alpha} r_4 - \beta\overset{*}{r_3}$$

$$R_{13} = -(C_1 + C_3)$$

$$C_1 = j\alpha^* \gamma + j\alpha\gamma^*$$

$$C_3 = \zeta^* \beta - \zeta\beta^*$$

$$R_2 = \beta^* r_1 - \alpha r_2^* + j\gamma r_3^* + \zeta^* r_4$$

$$R_4 = \zeta^* r_1 - j\gamma r_2^* - \alpha r_3^* - \beta^* r_4$$

$$R_{24} = -(C_2 + C_4)$$

$$C_2 = \zeta\beta^* - \zeta^* \beta$$

$$C_4 = -j\alpha\gamma^* - j\gamma\alpha^*$$

où $\alpha$, $\beta$, $\gamma$ et $\zeta$ sont les gains de canal et r1, r2, r3 et r4 sont les signaux reçus,
et les premier et second décodeurs trouvent des paires de symboles $(x_1, x_3)$ et $(x_2, x_4)$ qui minimisent $|R_1-x_1|^2+|R_3-x_3|^2+|R_{13}-x_1^* x_3|^2$ et $|R_2-x_2|^2+|R_4-x_4|^2+|R_{24}-x_2^* x_4|^2$, respectivement.

27. Récepteur pour recevoir des symboles de modulation dont les phases font l'objet d'une rotation une fois depuis un émetteur dans un système de communication sans fil, comprenant :

des premier et second décodeurs (340, 345) pour détecter des paires de symboles qui minimisent des métriques de décodage à maximum de vraisemblance (ML) sur toutes les paires de symboles possibles en utilisant des signaux reçus par une antenne de réception (310) depuis quatre antennes d'émission pendant quatre périodes de temps et des gains de canal des antennes d'émission à l'antenne de réception,
dans lequel si les symboles de modulation sont des symboles QPSK (Quadrature Phase Shift Keying, modulation par déplacement de phase à 4 états) ou 8PSK (8-ary PSK, modulation par déplacement de phase à 8 états), les premier et second décodeurs calculent les paramètres

$$R_1 = \alpha^* r_1 + \beta r_2^* + \zeta r_3^* - v^* \gamma^* r_4$$

$$R_3 = v\zeta r_2^* + \gamma^* r_1 + \alpha^* r_4 - \beta r_3^*$$

$$R_{13} = -(C_1 + C_3)$$

$$C_1 = -\alpha^* \gamma v + \alpha \gamma^*$$

$$C_3 = \zeta \beta^* v - \zeta^* \beta$$

$$R_2 = \beta^* r_1 - \alpha r_2^* + \gamma r_3^* + v^* \zeta^* r_4$$

$$R_4 = \zeta^* r_1 - v\gamma r_2^* - \alpha r_3^* - \beta^* r_4$$

$$R_{24} = -(C_2 + C_4)$$

$$C_2 = -\alpha \gamma^* + v\alpha^* \gamma$$

$$C_4 = -v\zeta \beta^* + \zeta^* \beta$$

où $\alpha$, $\beta$, $\gamma$ et $\zeta$ sont les gains de canal, r1, r2, r3 et r4 sont les signaux reçus, et $v$ est une valeur de phase par laquelle l'émetteur effectue la rotation des phases des symboles, et les premier et second décodeurs trouvent des paires de symboles $(x_1, x_3)$ et $(x_2, x_4)$ qui minimisent $|R_1 - x_1|^2 + |R_3 - x_3|^2 + |R_{13} - x_1^* x_3|^2$ et $|R_2 - x_2|^2 + |R_4 - x_4|^2 + |R_{24} - x_2^* x_4|^2$, respectivement.

**28.** Récepteur pour recevoir des symboles de modulation dont les phases font l'objet d'une rotation une fois depuis un émetteur dans un système de communication sans fil, comprenant :

**74**

des premier et second décodeurs (340, 345) pour détecter des paires de symboles qui minimisent des métriques de décodage à maximum de vraisemblance (ML) sur toutes les paires de symboles possibles en utilisant des signaux reçus par une antenne de réception (310) depuis quatre antennes d'émission pendant quatre périodes de temps et des gains de canal des antennes d'émission à l'antenne de réception,

dans lequel si les symboles de modulation sont des symboles 16QAM (16-ary Quadrature Amplitude Modulation, modulation d'amplitude en quadrature à 16 états) ou 64QAM (64-ary QAM, modulation d'amplitude en quadrature à 64 états), les premier et second décodeurs calculent les paramètres

$$R_1 = \frac{(\alpha^* r_1 + \beta r_2^* + \zeta r_3^* - v^* \gamma^* r_4)}{K_4}$$

$$R_3 = \frac{(v\zeta r_2^* + \gamma^* r_1 + \alpha^* r_4 - \beta r_3^*)}{K_4}$$

$$R_{13} = -\frac{(C_1 + C_3)}{K_4}$$

$$K_4 = |\alpha|^2 + |\beta|^2 + |\gamma|^2$$

$$C_1 = -\alpha^* \gamma v + \alpha\gamma^*$$

$$C_3 = \zeta\beta^* v - \zeta^* \beta$$

$$R_2 = \frac{(\beta^* r_1 - \alpha r_2^* + \gamma r_3^* + v^* \zeta^* r_4)}{K_4}$$

$$R_4 = \frac{(\zeta^* r_1 - v\gamma r_2^* - \alpha r_3^* - \beta^* r_4)}{K_4}$$

$$R_{24} = -\frac{(C_2 + C_4)}{K_4}$$

$$C_2 = -\alpha\gamma^* + v\alpha^*\gamma$$

$$C_4 = -v\zeta\beta^* + \zeta^*\beta$$

où $\alpha$, $\beta$ $\gamma$ et $\zeta$ sont les gains de canal, r1, r2, r3 et r4 sont les signaux reçus, et $v$ est une valeur de phase par laquelle l'émetteur effectue la rotation des phases des symboles,

et les premier et second décodeurs trouvent des paires de symboles $(x_1, x_3)$ et $(x_2, x_4)$ qui minimisent $|R_1-x_1|^2+|R_3-x_3|^2+|R_{13}-x_1^*x_3|^2-|x_1|^2|x_3|^2$ et $|R_2-x_2|^2+|R_4-x_4|^2+|R_{24}-x_2^*x_4|^2-|x_2|^2|x_4|^2$, respectivement.

29. Récepteur pour recevoir des symboles de modulation PSK (Phase Shift Keying, modulation par déplacement de phase) dont les phases font l'objet d'une rotation une fois depuis un émetteur dans un système de communication sans fil, comprenant :

des premier et second décodeurs (540, 545) pour sélectionner des paires de symboles candidates parmi toutes les paires de symboles possibles en utilisant des signaux reçus par une antenne de réception (510) depuis trois antennes d'émission pendant quatre périodes de temps et des gains de canal des antennes d'émission à l'antenne de réception, et détecter des paires de symboles qui minimisent des métriques de décodage à maximum de vraisemblance (ML) sur les paires de symboles candidates,

dans lequel les premier et second décodeurs calculent les paramètres

$$R_1 = \alpha^* r_1 + \beta \frac{1}{\sqrt{2}} r_2^* + \gamma r_3^* - v^* \beta^* \frac{1}{\sqrt{2}} r_4$$

$$R_3 = v\gamma r_2^* + \beta^* \frac{1}{\sqrt{2}} r_1 + \alpha^* r_4 - \beta \frac{1}{\sqrt{2}} r_3^*$$

$$R_{13} = -\frac{(C_1 + C_3)}{2}$$

$$C_1 = -\alpha^* \beta v \sqrt{2} + \alpha\beta^* \sqrt{2}$$

$$C_3 = \gamma \beta^* v \sqrt{2} - \gamma^* \beta \sqrt{2}$$

$$R_2 = \beta^* \frac{1}{\sqrt{2}} r_1 - \alpha r_2^* + \beta \frac{1}{\sqrt{2}} r_3^* + v^* \gamma^* r_4$$

$$R_4 = \gamma^* r_1 - v\beta \frac{1}{\sqrt{2}} r_2^* - \alpha r_3^* - \beta^* \frac{1}{\sqrt{2}} r_4$$

$$R_{24} = -\frac{(C_2 + C_4)}{2}$$

$$C_2 = -\alpha \beta^* \sqrt{2} + v\alpha^* \beta \sqrt{2}$$

$$C_4 = -v\gamma \beta^* \sqrt{2} + \gamma^* \beta \sqrt{2}$$

où $\alpha$, $\beta$ et $\gamma$ sont les gains de canal et r1, r2, r3 et r4 sont les signaux reçus, et $v$ est une valeur de phase par laquelle l'émetteur effectue la rotation des phases des symboles, et les premier et second décodeurs trouvent toutes les paires de symboles possibles $(x_1, x_3)$ et $(x_2, x_4)$ comme les paires de symboles candidates, les symboles $x_3$ et $x_4$ étant les points de constellation les plus proches de $R_3 + x_1 R_{13}$ et $R_4 + x_2 R_{24}$, respectivement.

**30.** Récepteur pour recevoir des symboles de modulation QAM (Quadrature Amplitude Modulation, modulation d'amplitude en quadrature) dont les phases font l'objet d'une rotation une fois depuis un émetteur dans un système de communication sans fil, comprenant :

des premier et second décodeurs (540, 545) pour sélectionner des paires de symboles candidates parmi toutes les paires de symboles possibles en utilisant des signaux reçus par une antenne de réception (510) depuis trois antennes d'émission pendant quatre périodes de temps et des gains de canal des antennes d'émission à l'antenne de réception, et détecter des paires de symboles qui minimisent des métriques de décodage à maximum de vraisemblance (ML) sur les paires de symboles candidates,
dans lequel les premier et second décodeurs calculent les paramètres

$$R_1 = \frac{\left( \alpha^* r_1 + \beta \frac{1}{\sqrt{2}} r_2^* + \gamma r_3^* - v^* \beta^* \frac{1}{\sqrt{2}} r_4 \right)}{K_3}$$

$$R_3 = \frac{\left( v \gamma r_2^* + \beta^* \frac{1}{\sqrt{2}} r_1 + \alpha^* r_4 - \beta \frac{1}{\sqrt{2}} r_3^* \right)}{K_3}$$

$$R_{13} = -\frac{(C_1 + C_3)}{2K_3}$$

$$K_3 = |\alpha|^2 + |\beta|^2 + |\gamma|^2$$

$$C_1 = -\alpha^* \beta v \sqrt{2} + \alpha \beta^* \sqrt{2}$$

$$C_3 = \gamma \beta^* v \sqrt{2} - \gamma^* \beta \sqrt{2}$$

$$R_2 = \frac{\left( \beta^* \frac{1}{\sqrt{2}} r_1 - \alpha r_2^* + \beta \frac{1}{\sqrt{2}} r_3^* + v^* \gamma^* r_4 \right)}{K_3}$$

$$R_4 = \frac{\left( \gamma^* r_1 - v \beta \frac{1}{\sqrt{2}} r_2^* - \alpha r_3^* - \beta^* \frac{1}{\sqrt{2}} r_4 \right)}{K_3}$$

$$R_{24}=-\frac{(C_2+C_4)}{2K_3}$$

$$C_2=-\alpha\beta^*\sqrt{2}+v\alpha^*\beta\sqrt{2}$$

$$C_4=-v\gamma\beta^*\sqrt{2}+\gamma^*\beta\sqrt{2}$$

où $\alpha$, $\beta$, $\gamma$ et $\zeta$ sont les gains de canal, r1, r2, r3 et r4 sont les signaux reçus, et $v$ est une valeur de phase par laquelle l'émetteur effectue la rotation des phases des symboles,
et les premier et second décodeurs trouvent toutes les paires de symboles possibles $(x_1, x_3)$ et $(x_2, x_4)$ comme les paires de symboles candidates, les symboles $x_3$ et $x_4$ étant les points de constellation les plus proches de $R_3+x_1R_{13}$ et $R_4+x_2R_{24}$, respectivement.

**31.** Récepteur pour recevoir des symboles de modulation PSK (Phase Shift Keying, modulation par déplacement de phase) dont les phases font l'objet d'une rotation une fois depuis un émetteur dans un système de communication sans fil, comprenant :

des premier et second décodeurs (540, 545) pour sélectionner des paires de symboles candidates parmi toutes les paires de symboles possibles en utilisant des signaux reçus par une antenne de réception (510) depuis quatre antennes d'émission pendant quatre périodes de temps et des gains de canal des antennes d'émission à l'antenne de réception, et détecter des paires de symboles qui minimisent des métriques de décodage à maximum de vraisemblance (ML) sur les paires de symboles candidates,
dans lequel les premier et second décodeurs calculent les paramètres

$$R_1=\alpha^*r_1+\beta r_2^*+\zeta r_3^*-v^*\gamma^*r_4$$

$$R_3=v\zeta r_2^*+\gamma^*r_1+\alpha^*r_4-\beta r_3^*$$

$$R_{13}=-(C_1+C_3)$$

$$C_1=-\alpha^*\gamma v+\alpha\gamma^*$$

$$C_3 = \zeta \beta^* v - \zeta^* \beta$$

$$R_2 = \beta^* r_1 - \alpha r_2^* + \gamma r_3^* + v^* \zeta^* r_4$$

$$R_4 = \zeta^* r_1 - v\gamma r_2^* - \alpha r_3^* - \beta^* r_4$$

$$R_{24} = -(C_2 + C_4)$$

$$C_2 = -\alpha \gamma^* + v\alpha^* \gamma$$

$$C_4 = -v\zeta \beta^* + \zeta^* \beta$$

où $\alpha$, $\beta$, $\gamma$ et $\zeta$ sont les gains de canal, r1, r2, r3 et r4 sont les signaux reçus, et $v$ est une valeur de phase par laquelle l'émetteur effectue la rotation des phases des symboles,
et les premier et second décodeurs trouvent toutes les paires de symboles possibles $(x_1, x_3)$ et $(x_2, x_4)$ comme les paires de symboles candidates, les symboles $x_3$ et $x_4$ étant les points de constellation les plus proches de $R_3 + x_1 R_{13}$ et $R_4 + x_2 R_{24}$, respectivement.

**32.** Récepteur pour recevoir des symboles de modulation QAM (Quadrature Amplitude Modulation, modulation d'amplitude en quadrature) dont les phases font l'objet d'une rotation une fois depuis un émetteur dans un système de communication sans fil, comprenant :

des premier et second décodeurs (540, 545) pour sélectionner des paires de symboles candidates parmi toutes les paires de symboles possibles en utilisant des signaux reçus par une antenne de réception (510) depuis quatre antennes d'émission pendant quatre périodes de temps et des gains de canal des antennes d'émission à l'antenne de réception, et détecter des paires de symboles qui minimisent des métriques de décodage à maximum de vraisemblance (ML) sur les paires de symboles candidates,
dans lequel les premier et second décodeurs calculent les paramètres

$$R_1 = \frac{(\alpha^* r_1 + \beta r_2^* + \zeta r_3^* - v^* \gamma^* r_4)}{K_4}$$

$$R_3 = \frac{\left(v\zeta r_2^* + \gamma^* r_1 + \alpha^* r_4 - \beta r_3^*\right)}{K_4}$$

$$R_{13} = -\frac{(C_1 + C_3)}{K_4}$$

$$K_4 = |\alpha|^2 + |\beta|^2 + |\gamma|^2$$

$$C_1 = -\alpha^* \gamma v + \alpha \gamma^*$$

$$C_3 = \zeta \beta^* v - \zeta^* \beta$$

$$R_2 = \frac{\left(\beta^* r_1 - \alpha r_2^* + \gamma r_3^* + v^* \zeta^* r_4\right)}{K_4}$$

$$R_4 = \frac{\left(\zeta^* r_1 - v\gamma r_2^* - \alpha r_3^* - \beta^* r_4\right)}{K_4}$$

$$R_{24} = -\frac{(C_2 + C_4)}{K_4}$$

$$C_2 = -\alpha \gamma^* + v \alpha^* \gamma$$

$$C_4 = -\nu\zeta\beta^* + \zeta^*\beta$$

où $\alpha$, $\beta$, $\gamma$ et $\zeta$ sont les gains de canal, r1, r2, r3 et r4 sont les signaux reçus, et $\nu$ est une valeur de phase par laquelle l'émetteur effectue la rotation des phases des symboles,
et les premier et second décodeurs trouvent toutes les paires de symboles possibles ($x_1$, $x_3$) et ($x_2$, $x_4$) comme les paires de symboles candidates, les symboles $x_3$ et $x_4$ étant les points de constellation les plus proches de $R_3 + x_1R_{13}$ et $R_4 + x_2R_{24}$, respectivement.

33. Récepteur pour recevoir des symboles de modulation PSK (Phase Shift Keying, modulation par déplacement de phase) dont les phases font l'objet d'une rotation une fois depuis un émetteur dans un système de communication sans fil, comprenant :

des premier et second décodeurs (540, 545) pour sélectionner des paires de symboles candidates parmi toutes les paires de symboles possibles en utilisant des signaux reçus par une antenne de réception (510) depuis trois antennes d'émission pendant quatre périodes de temps et des gains de canal des antennes d'émission à l'antenne de réception, et détecter des paires de symboles qui minimisent des métriques de décodage à maximum de vraisemblance (ML) sur les paires de symboles candidates,
dans lequel le premier décodeur calcule

$$R_1 = \alpha^* r_1 + \beta \frac{1}{\sqrt{2}} r_2^* + \gamma r_3^* - \nu^* \beta^* \frac{1}{\sqrt{2}} r_4$$

$$R_3 = \nu\gamma r_2^* + \beta^* \frac{1}{\sqrt{2}} r_1 + \alpha^* r_4 - \beta \frac{1}{\sqrt{2}} r_3^*$$

$$R_{13} = -\frac{(C_1 + C_3)}{2}$$

$$C_1 = -\alpha^* \beta\nu\sqrt{2} + \alpha\beta^*\sqrt{2}$$

$$C_3 = \gamma\beta^* \nu\sqrt{2} - \gamma^* \beta\sqrt{2}$$

où $\alpha$, $\beta$ et $\gamma$ sont les gains de canal, r1, r2, r3 et r4 sont les signaux reçus, et $\nu$ est une valeur de phase prédéterminée par laquelle l'émetteur effectue la rotation des phases des symboles,
sort une paire de symboles ($x_1$, $x_3$) si $x_1^*x_3 = x_{13}$, $x_1$ étant le symbole le plus proche de $R_1$, $x_3$ étant le symbole le plus proche de $R_3$, et $x_{13}$ étant le symbole le plus proche de $R_{13}$, et si $x_1^*x_3 \neq x_{13}$, calcule un angle $\Phi_d$ en

divisant l'angle entre $x_{13}$ et $x_1{}^*x_3$ par 2 et sélectionne des symboles dont les angles sont à l'intérieur de $\Phi_d$ à partir de $x_1$ et $x_3$, respectivement, comme les symboles candidats,
et le second décodeur calcule

$$R_2 = \beta^* \frac{1}{\sqrt{2}} r_1 - \alpha r_2^* + \beta \frac{1}{\sqrt{2}} r_3^* + v^* \gamma^* r_4^*$$

$$R_4 = \gamma^* r_1 - v\beta \frac{1}{\sqrt{2}} r_2^* - \alpha r_3^* - \beta^* \frac{1}{\sqrt{2}} r_4$$

$$R_{24} = -\frac{(C_2 + C_4)}{2}$$

$$C_2 = -\alpha\beta^* \sqrt{2} + v\alpha^* \beta\sqrt{2}$$

$$C_4 = -v\gamma\beta^* \sqrt{2} + \gamma^* \beta\sqrt{2}$$

où $\alpha$, $\beta$ et $\gamma$ sont les gains de canal, r1, r2, r3 et r4 sont les signaux reçus, et $v$ est la valeur de phase prédéterminée par laquelle l'émetteur effectue la rotation des phases des symboles,
sort une paire de symboles $(x_2, x_4)$ si $x_2{}^*x_4 = x_{24}$, $x_2$ étant le symbole le plus proche de $R_2$, $x_4$ étant le symbole le plus proche de $R_4$, et $x_{24}$ étant le symbole le plus proche de $R_{24}$, et si $x_2{}^*x_4 \neq x_{13}$, calcule un angle $\Phi_d'$ en divisant l'angle entre $x_{24}$ et $x_2{}^*x_4$ par 2 et sélectionne des symboles dont les angles sont à l'intérieur de $\Phi_d'$ à partir de $x_2$ et $x_4$, respectivement, comme les symboles candidats.

**34.** Récepteur pour recevoir des symboles de modulation PSK (Phase Shift Keying, modulation par déplacement de phase) dont les phases font l'objet d'une rotation une fois depuis un émetteur dans un système de communication sans fil, comprenant :

des premier et second décodeurs (540, 545) pour sélectionner des paires de symboles candidates parmi toutes les paires de symboles possibles en utilisant des signaux reçus par une antenne de réception (510) depuis quatre antennes d'émission pendant quatre périodes de temps et des gains de canal des antennes d'émission à l'antenne de réception, et détecter des paires de symboles qui minimisent des métriques de décodage à maximum de vraisemblance (ML) sur les paires de symboles candidates,
dans lequel le premier décodeur calcule

$$R_1 = \alpha^* r_1 + \beta r_2^* + \zeta r_3^* - v^* \gamma^* r_4$$

$$R_3 = v\zeta r_2^* + \gamma^* r_1 + \alpha^* r_4 - \beta r_3^*$$

$$R_{13} = -(C_1 + C_3)$$

$$C_1 = -\alpha^* \gamma v + \alpha \gamma^*$$

$$C_3 = \zeta \beta^* v - \zeta^* \beta$$

où $\alpha$, $\beta$, $\gamma$ et $\zeta$ sont les gains de canal, r1, r2, r3 et r4 sont les signaux reçus, et $v$ est une valeur de phase prédéterminée par laquelle l'émetteur effectue la rotation des phases des symboles,

sort une paire de symboles ($x_1$, $x_3$) si $x_1^* x_3 = x_{13}$, $x_1$ étant le symbole le plus proche de $R_1$, $x_3$ étant le symbole le plus proche de $R_3$, et $x_{13}$ étant le symbole le plus proche de $R_{13}$, et si $x_1^* x_3 \neq x_{13}$, calcule un angle $\Phi_d$ en divisant l'angle entre $x_{13}$ et $x_1^* x_3$ par 2 et sélectionne des symboles dont les angles sont à l'intérieur de $\Phi_d$ à partir de $x_1$ et $x_3$, respectivement, comme les symboles candidats,

et le second décodeur calcule

$$R_2 = \beta^* r_1 - \alpha r_2^* + \gamma r_3^* + v^* \zeta^* r_4$$

$$R_4 = \zeta^* r_1 - v\gamma r_2^* - \alpha r_3^* - \beta^* r_4$$

$$R_{24} = -(C_2 + C_4)$$

$$C_2 = -\alpha \gamma^* + v\alpha^* \gamma$$

$$C_4 = -v\zeta \beta^* + \zeta^* \beta$$

où $\alpha$, $\beta$, $\gamma$ et $\zeta$ sont les gains de canal, r1, r2, r3 et r4 sont les signaux reçus, et $\nu$ est la valeur de phase prédéterminée par laquelle l'émetteur effectue la rotation des phases des symboles,

sort une paire de symboles $(x_2, x_4)$ si $x_2{}^*x_4=x_{24}$, $x_2$ étant le symbole le plus proche de $R_2$, $x_4$ étant le symbole le plus proche de $R_4$, et $x_{24}$ étant le symbole le plus proche de $R_{24}$, et si $x_2{}^*x_4 \neq x_{13}$, calcule un angle $\Phi_d'$ en divisant l'angle entre $x_{24}$ et $x_2{}^*x_4$ par 2 et sélectionne des symboles dont les angles sont à l'intérieur de $\Phi_d'$ à partir de $x_2$ et $x_4$, respectivement comme les symboles candidats.

FIG.1

**FIG.2**

FIG.3

EP 1 408 623 B1

210

220

$S_1$

$S_2$

$S_3$

$S_4$

$S_1S_2S_3...$

S/P
CONVERTER

ENCODER

COLUMN
GENER-
ATOR

250a

250b

230a — v or 1    240

250c

230b — v or 1

# FIG.4

EP 1 408 623 B1

FIG.5

(a) BPSK

(b) QPSK

(c) 8PSK

# FIG.6

(a) 16QAM

(b) 64QAM

FIG.7

FIG.8

FIG.9

FIG.10

START

CALCULATE $R_1, R_3, R_{13}$ — 602

DECIDE CLOSEST CONSTELLATION
POINTS $x_1$ TO $R_1$, $x_3$ TO $R_3$,
AND $x_{13}$ TO $R_{13}$ — 604

606

$x_{13} = x_1^* x_3$ ? — YES

NO

$$\Phi_d = \frac{1}{2} \angle \left( \frac{x_{13}}{x_1^* x_3} \right)$$ — 608

614

SELECT CANDIDATE SYMBOLS
WITHIN $\Phi_d$ FROM $x_1$ AND $x_3$ — 610

OUTPUT $x_1$ AND $x_3$

DETECT MINIMIZING SYMBOL PAIR — 612

END

FIG.11

FIG. 12

FIG.13

FIG. 14

Sub-optimal Versus Optimal decoding for the 4 Tx 8-PSK code

FIG.15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. H. Winters.** Switched Diversity with Feedback for DPSK Mobile Radio System. *IEEE Trans. Veh. Technol.,* vol. 32, 134-150
- **G. G. Raleigh ; V. K. Jones.** Multivibrate Modulation and Coding for Wireless Communication. *IEEE J. Select. Areas. Commun.,* vol. 17, 851-866
- **A. Wittneben.** Base Station Modulation Diversity for Digital SIMULCAST. *proc. IEEE'VTC,* May 1993, 505-511
- **G. J. Foschini, Jr.** Layered Space-Time Architecture for Wireless Communications in a Fading Environment When Using Multi-element Antennas. *Bell Labs Tech. J.,* 41-59
- **E. Telatar.** Capacity of Multi-Antenna Gaussian Channels. *AT&T-Bell Laboratories, Internal Tech. Memo.,* June 1995
- **G. J. Foschini, Jr. ; M. J. Gans.** On Limits of Wireless Communication in a Fading Environment When Using Multiple Antennas. *Wireless Personal Commun.,* 1998, vol. 6, 311-335

- **V. Tarokh ; N. Seshadri ; A. R. Calderbanck.** Space-Time Codes for High Data Rate Wireless Communications: Performance Criterion and Code Construction. *IEEE Trans. Inform. Theory,* vol. 44, 744-765
- **V. Tarokh ; N. Seshadri ; A. R. Calderbanck.** Space-Time Codes for High Data Rate Wireless Communications: Performance Criteria in the Presence of Channel Estimation Errors, Mobility, and Multiple Paths. *IEEE Trans. Inform. Theory,* vol. 47, 199-207
- **S. M. Alamouti.** A Simple Transmit Diversity Technique for Wireless Communications. *IEEE J. Select Areas Commun.,* vol. 16, 1451-1458
- **V Tarokh ; H. Jafarkhani ; A. R. Calderbandk.** Space-Time Block Codes from Orthogonal Designs. *IEEE Trans. Inform. Theory,* July 1999, vol. 45, 1456-1467